# EUROPÄISCHE PATENTSCHRIFT

(11) **EP 1 727 816 B1**
(45) Veröffentlichungstag und Bekanntmachung des Hinweises auf die Patenterteilung: **30.12.2009**
(21) Anmeldenummer: 05732061.6
(22) Anmeldetag: 04.03.2005
(51) Int. Cl.: C07D 417/12, C07D 409/12, C07D 403/12, C07D 401/12, A01N 55/00

(54) **MIKROBIZIDE SILYLIERTE CARBOXAMIDE**
MICROBICIDAL SILYLATED CARBOXAMIDES
CARBOXAMIDES SILYLES MICROBICIDES

(30) Priorität: 17.03.2004 DE 102004012901
(43) Veröffentlichungstag der Anmeldung: 06.12.2006
(73) Patentinhaber: Bayer CropScience AG, 40789 Monheim (DE)
(72) Erfinder: DUNKEL, Ralf, 69001 Lyon (FR); ELBE, Hans-Ludwig, 42329 Wuppertal (DE); HARTMANN, Benoit, 40764 Langenfeld (DE); GREUL, Jörg, Nico, 42799 Leichlingen (DE); KLAUSENER, Alexander, 50259 Pulheim (DE); HERRMANN, Stefan, 40764 Langenfeld (DE); EBBERT, Ronald, 90475 Nürnberg (DE); DAHMEN, Peter, 41470 Neuss (DE); KUCK, Karl-Heinz, 40764 Langenfeld (DE); WACHENDORFF-NEUMANN, Ulrike, 56566 Neuwied (DE)
(86) Internationale Anmeldenummer: PCT/EP2005/002284
(87) Internationale Veröffentlichungsnummer: WO 2005/095392

(56) Entgegenhaltungen:
- EP-A- 0 538 231
- WO-A-03/080628
- WO-A-2004/099195
- US-A- 5 486 621
- US-A1- 2002 119 982
- VENUTI M C ET AL: "Inhibitors of Cyclic AMP Phosphodiesterase. 3. Synthesis and Biological Evaluation of Pyrido and Imidazolyl Analogues of 1,2,3,5-Tetrahydro-2-oxoimidazo[2,1-b]quin azoline" JOURNAL OF MEDICINAL CHEMISTRY, AMERICAN CHEMICAL SOCIETY. WASHINGTON, US, Bd. 31, Nr. 11, November 1988 (1988-11), Seiten 2136-2145, XP002131132 ISSN: 0022-2623
- XU L ET AL: "Transition Metal Catalyzed Synthesis of 5-Azaindoles" TETRAHEDRON LETTERS, ELSEVIER SCIENCE PUBLISHERS, AMSTERDAM, NL, Bd. 39, Nr. 29, 16. Juli 1998 (1998-07-16), Seiten 5159-5162, XP004162406 ISSN: 0040-4039
- BRUGIER D ET AL: "alpha-Substitution of beta-Thienylcarbamates: Alkylation, Vinylation and Pd-Catalyzed Coupling Reactions" TETRAHEDRON, ELSEVIER SCIENCE PUBLISHERS, AMSTERDAM, NL, Bd. 56, Nr. 19, Mai 2000 (2000-05), Seiten 2985-2993, XP004198008 ISSN: 0040-4020
- ABBIATI G ET AL: "An efficient synthesis of 2,4-substituted [1,8]naphthyridines from 3-(2-Amino-5-methylpyridin-3-yl)-1-arylpro p-2-yn-1-ones" SYNTHESIS, THIEME, STUTTGART, DE, Nr. 13, 2002, Seiten 1912-1916, XP002326002 ISSN: 0039-7881
- SAKAMOTO T ET AL: "Condensed Heteroaromatic Ring Systems. XII. Synthesis of Indole Derivatives from Ethyl 2-Bromocarbanilates" CHEMICAL AND PHARMACEUTICAL BULLETIN, PHARMACEUTICAL SOCIETY OF JAPAN, TOKYO, JP, Bd. 35, Nr. 5, 1987, Seiten 1823-1828, XP002258673 ISSN: 0009-2363
- JOZWIAK: "Application of organolithium and related agents in synthesis, 30. Behaviour of N-pyridylbenzamides versus benzanilides in the ortho-directed lithiation of masked aromatic carboxylic acids" EUROPEAN JOURNAL OF ORGANIC CHEMISTRY, Bd. 15, 2004, Seiten 3254-3261, XP002337206

## Beschreibung

Die vorliegende Erfindung betrifft neue silylierte Carboxamide, mehrere Verfahren zu deren Herstellung und deren Verwendung zur Bekämpfung von unerwünschten Mikroorganismen.

Es ist bereits bekannt, dass zahlreiche Carboxamide fungizide Eigenschaften besitzen (vgl. z.B. WO 03/080628, WO 03/010149, EP-A 0 589 301, EP-A 0 545 099). Die Wirksamkeit dieser Stoffe ist gut, lässt aber in manchen Fallen, z.B. bei niedrigen Aufwandmengen zu wünschen übrig. Silylierte Carboxamide mit Heterocyclus als Amidkomponente sind bisher nicht bekannt geworden.

Es wurden nun neue silylierte Carboxamide der Formel (I) 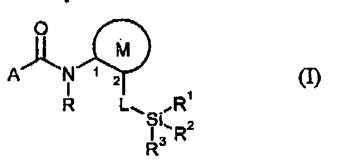 gefunden, in welcher
- M: für einen jeweils einfach durch Y¹ substituierten Pyridin-, Pyrimidin-, Pyridazin- oder Pyrazin-Ring oder für einen durch Y² substituierten Thiazol-Ring steht,
- Y¹: für Wasserstoff Fluor, Chlor, Brom, Methyl iso-Propyl, Methylthio oder Trifluormethyl steht,
- Y²: für Wasserstoff, Fluor, Chlor, Brom, Methyl, Methylthio oder Trifluormethyl steht,
- L: für eine direkte Bindung oder für jeweils gegebenenfalls substituiertes geradkettiges oder verzweigtes Alkylen (Alkandiyl), Alkenylen (Alkendiyl) oder Alkinylen (Alkindiyl) steht,
- R¹ und R²: unabhängig voneinander für Wasserstoff, C₁-C₈₋Alkyl, C₁-C₈-Alkoxy, C₁-C₄-Alkoxy-C₁- C₄-alkyl, C₁-C₄-Alkylthi-C₁-C₄-alkyl oder C₁-C₆-Halogenalkyl stehen,
- R³: für Wasserstoff C₁-C₈-Alkyl, C₁-C₈-Alkoxy, C₁-C₄-Alkoxy-C₁-C₄-alkyl, C₁-C₄-Alkylthio-C₁- C₄-alkyl, C₂-C₈-Alkenyl, C₂-C₈Alkinyl C₁-C₆-Halogenalkyl, C₂-C₆-Halogenalkenyl, C₂-C₆- Halogenalkinyl, C₃-C₆-Cycloalkyl, oder für jeweils gegebenenfalls substituiertes Phenyl oder Phenylalkyl steht,
- R: für Wasserstoff. C₁-C₈-Alkyl C₁-C₆-Alkylsulfinyl, C₁-C₆-Alkylsulfonyl, C₁-C₄-Allcoxy-C₁-C₄- alkyl, C₃-C₈-Cycloalkyl; C₁-C₆-Halogenalkyl, C₁-C₄-Halogenalkytthio, C₁-C₄-Halogenalkylsulfi- nyl, C₁-C₄-Halogenalkylsulfonyl, Halogen-C₁-C₄-alkoxy-C₁-C₄-alkyl C₃-C₈-Halogencycloalkyl mit jeweils 1 bis 9 Fluor-, Chlor- und/oder Bromatomen,; Formyl, Formyl-C₁-C₃-alkyl (C₁-C₃- Alkyl)carbonyl-C₁-C₃-alkyl, (C₁-C₃-Alkoxy)carbonyl-C₁-C₃-alkyl; Halogen-(C₁-C₃-alkyl)carbo- nyl-C₁-C₃-alkyl, Halogen-(C₁-C₃-alkoxy)carbonyl-C₁-C₃-alkyl mit jeweils 1 bis 13 Fluor-, Chlor- und/oder Bromatomen; (C₁-C₈-Alkyl)carbonyl, (C₁-C₈-Alkoxy)carbonyl, (C₁-C₄-Alkoxy-C₁-C₄-alkyl)carbonyl, (C₃-C₈- Cycloalkylkarbonyl; (C₁-C₆-Halogenalkyl)carborryl, (C₁-C₆-Halogenalkoxy)carbonyl, (Halo- gen-C₁-C₄-alkoxy-C₁-C₄-alkyl)carbonyl, (C₃-C₈-Halogencycloalkyle)carbony) mit jeweils 1 bis 9 Fluor-, Chlor- und/oder Bromatomen; oder -C(=O)C(=O)R⁴, -CONR⁵R⁶ oder CH₂NR⁷R⁸ steht,
- R⁴: für Wasserstoff, C₁-C₈-Alkyl, C₁-C₈-Alkoxy, C₁-C₄-Alkoxy-C₁-C4-alkyl, C₃-C₈-Cycloalkyl; C₁-C₆₋Haogenalkyl, C₁-C₆-Halogenalkoxy, Halogen-C₁-C₄-alkoxy-C₁-C₄-alkyl, C₃-C₈-Halo- gencycloalkyl mit jeweils 1 bis 9 Fluor, Chlor- und/oder Bromatomen steht,
- R⁵ und R⁶: unabhängig voneinander jeweils für Wasserstoff, C₁-C₈Alkyl, C₁-C₄-Alkoxy-C₁-C₄-alkyl, C₃-C₈-Cycloalkyl; C₁-C₈-Halogenalkyl, Halogen-C₁-C₄-alkoxy-C₁-C₄-alkyl, C₃-C₈-Halogen- cycloalkyl mit jeweils 1 bis 9 Fluor-, Chlor- und/oder Bromatomen stehen,
- R⁵ und R⁶: außerdem gemeinsam mit dem Stickstoffatom, an das sie gebunden sind, einen gegebenen- falls einfach oder mehrfach, gleich oder verschieden durch Halogen oder C₁-C₄-Alkyl substituierten gesättigten Heterocyclus mit 5 bis 8 Ringatomen bilden, wobei der Hetero- cyclus 1 oder 2 weitere, nicht benachbarte Heteroatome aus der Reihe Sauerstoff, Schwefel oder NR⁹ enthalten kann,
- R⁷ und R⁸: unabhängig voneinander für Wasserstoff C₁-C₈-Alkyl, C₃-C₈-Cycloallcyl; C₁-C₈-Halogen- alkyl, C₃-C₈-Halogencycloalkyl mit jeweils 1 bis 9 Fluor-, Chlor- und/oder Bromatomen stehen,
- R⁷ und R⁸: außerdem gemeinsam mit dem Stickstoffatom, an das sie gebunden sind, einen gegebenen- falls einfach oder mehrfach, gleich oder verschieden durch Halogen oder C₁-C₄-Alkyl substituierten gesättigten Heterocyclus mit 5 bis 8 Ringatomen bilden, wobei der Hetero- cyclus 1 oder 2 weiterer, nicht benachbarte Heteroatome aus der Reihe Sauerstoff, Schwefel oder NR⁹ enthalten kann,
- R⁹: für Wasserstoff oder C₁-C₆-Alkyl steht,

- A: für den Rest der Formel (A1) 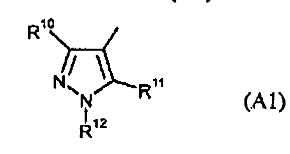 steht, in welcher
R¹⁰ für Wasserstoff, Hydroxy, Formyl, Cyano, Halogert, Nitro, C₁-C₄-Alkyl, C₁-C₄- Alkoxy, C₁-C₄-Alkylthio, C₃-C₆-Cycloalkyl, C₁-C₄-Halogenalkyl, C₁-C₄-Halogenalk- oxy oder C₁-C₄-Halogenalkylthio mit jeweils 1 bis 5 Halogenatomen, Aminocarbonyl oder Aminocarbonyl-C₁-C₄-alkyl steht,
R¹¹ für Wasserstoff, Halogen, Cyano, C₁-C₄-Akyl, C₁-C₄-Alkoxy, C₁-C₄-Alkylthio, C₁- C₄-Halogenalkyl oder C₁-C₄-Halogenalkylthio mit jeweils 1 bis 5 Halogenatomen, steht und
R¹² für Wasserstoff, C₁-C₄-Alkyl, Hydroxy-C₁-C₄-alkyl_{;} C₂-C₆-Alkenyl, C₃-C₆-Cyclo- alkyl, C₁-C₄-Alkylthio-C₁-C₄-alkyl, C₁-C₄-Alkoxy-C₁-C₄-alkyl, C₁-C₄-Halogenalkyl, C₁-C₄-Halogenalkylthio-C₁-C₄-alkyl, C₁-C₄-Halogenalkoxy-C₁-C₄-alkyl mit jeweils I bis 5 Halogenatomen, oder für Phenyl steht,
oder
- A: für den Rest der Formel (A2) 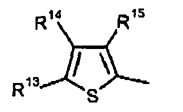 (A2) steht, in welcher
R¹³ und R¹⁴ unabhängig voneinander für Wasserstoff Halogen, C₁-C₄-Alkyl oder C₁-C₄-Halo- genalkyl mit 1 bis 5 Halogenatomen stehen und
R¹⁵ für Halogen, Cyano oder C₁-C₄-Alkyl, oder C₁-C₄-Halogenalkyl oder C₁-C₄-Halogen- alkoxy mit jeweils 1 bis 5 Halogenatomen steht,
oder
- A: für den Rest der Formel (A3) 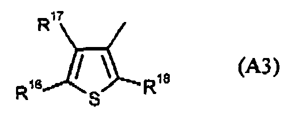 steht, in weicher
R¹⁶ und R¹⁷ unabhängig voneinander für Wasserstoff Halogen, C₁-C₄-Alkyl oder C₁-C₄-Halo- genalkyl mit 1 bis 5 Halogenatomen stehen und
R¹⁸ für Wasserstoff, C₁-C₄-Alkyl oder C₁-C₄-Halogenalkyl mit 1 bis 5 Halogenatomen steht,
oder
- A: für den Rest der Formel (A4) 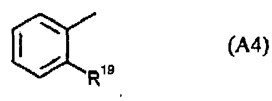
steht, in weicher
- R¹⁹: für Wasserstoff, Halogen, Hydroxy, Cyano, C₁-C₆-Alkyl C₁-C₄-Halogenalkyl, C₁-C₄- Halogenalkoxy oder C₁-C₄-Halogenalkythio mit jeweils 1 bis 5 Halogenatomen steht,
oder
- A: für den Rest der Formel (A5) 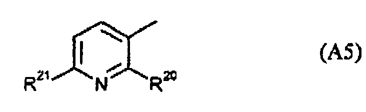 steht, in welcher
R²⁰ für Halogen, Hydroxy, Cyano, C₁-C₄-Alkyl, C₁-C₄-Alkoxy, C₁-C₄-Alkylthio, C₁-C₄- Halogenalkyl, C₁-C₄-Halogenalkylthio oder C₁-C₄-Halogenalkoxy mit jeweils 1 bis 5 Halogenatomen steht und
R²¹ für Wasserstoff, Halogen, Cyano, C₁-C₄-Alkyl, C₁-C₄-Alkoxy, C₁-C₄-Alkylthio, C₁- C₄-Halogenalkyl, C₁-C₄-Halogenalkoxy mit jeweils 1 bis 5 Halogenatomen, C₁-C₄- Alkylsulfinyl oder C₁-C₄-Alkylsulfonyl steht,
oder
- A: für den Rest der Formel (A6) 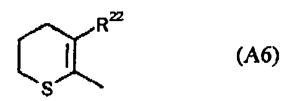 steht, in weicher
R²² für C₁-C₄-Alkyl oder C₁-C₄-Halogenalkyl mit 1 bis 5 Halogenatomen steht,
oder
- A: für den Rest der Formel (A7) 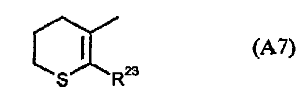 steht, in weicher
R²³ für C₁-C₄-Alkyl oder C₁-C₄-Halogenalkyl mit 1 bis 5 Halogenatomen steht,
oder
- A: für den Rest der Formel (A8) 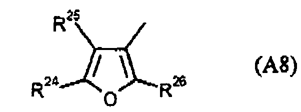 steht, in weicher
R²⁴ und R²⁵ unabhängig voneinander für Wasserstoff, Halogen, Amino, C₁-C4-Alkyl oder C₁- C₄-Halogenalkyl mit 1 bis 5 Halogenatomen stehen und
R²⁶ für Wasserstoff, C₁-C₄-Alkyl oder C₁-C₄-Halogenalkyl mit 1 to 5 Halogenatome steht,
oder
- A: für den Rest der Formel (A9) 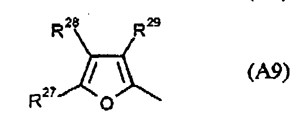 steht, in weicher
R²⁷ und R²⁸ unabhängig voneinander für Wasserstoff, Halogen, Amino, Nitro, C₁-C₄-Alkyl oder C₁-C₄-Halogenalkyl mit 1 bis 5 Halogenatomen stehen und
R²⁹ für Halogen, C₁-C₄-Alkyl oder C₁-C,₄-Halogenalkyl mit 1 bis 5 Halogenatomen steht,
oder
- A: für den Rest der Formel (A10) 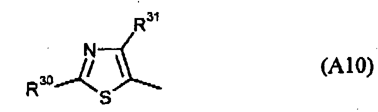 steht, in welcher
R³⁰ für Wasserstoff, Halogen, Amino, C₁-C₄-Alkylamino, Di-(C₁-C₄-alkyl)amino, Cyano, C₁-C₄-Alkyl oder C₁-C₄-Halogenalkyl mit 1 bis 5 Halogenatomen steht und
R³¹ für Halogen, Hydroxy, C₁-C₄-Alkyl, C₁-C₄-Alkoxy, C₃-G₆-Cycloalkyl, C₁-C₄- Halogenalkyl oder C₁-C₄-Halogenalkoxy mit jeweils ! 1 bis 5 Halogenatomen steht,
oder
- A: für den Rest der Formel (A11) 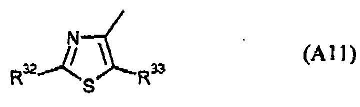 steht, in weicher
R³² für Wasserstoff, Halogen, Amino, C₁-C₄-Alkylamino, Di-(C₁-C₄-alkyl)amino, Cyano, C₁-C₄-Alkyl oder C₁-C₄-HalogelJalkyl mit 1 bis 5 Halogenatomen steht und
R³³ für Halogen, C₁-C₄-Alkyl oder C₁-C₄-Halogenalkyl mit 1 bis 5 Halogenatomen steht,
oder
- A: für den Rest der Formel (A12) 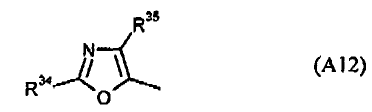 steht, in welcher
R³⁴ für Wasserstoff oder C₁-C₄-Alkyl steht und
R³⁵ für Halogen, C₁-C₄-Alkyl oder C₁-C₄-Halogenalkyl mit 1 bis 5 Halogenatomen steht,
oder
- A: für den Rest der Formel (A13) 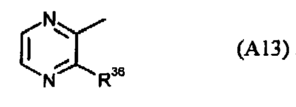 steht, in weicher
R³⁶ für Wasserstoff, Halogen, C₁-C₄-Alkyl oder C₁-C₄-Halogenalkyl mit 1 bis 5 Halogen- atomen steht,
oder
- A: für den Rest der Formel (A14) 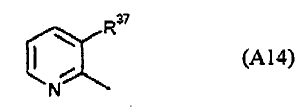 steht, in welcher
R³⁷ für Halogen, Hydroxy, C₁-C₄-Alkyl, C₁-C₄-Alkoxy, C₁-C4-Alkylthio, C₁-C₄-Halogen- alkyl, C₁-C₄-Halogenalkylthio oder C₁-C₄-Halogenalkoxy mit jeweils 1 bis 5 Halo- genatomen steht,
oder
- A: für den Rest der Formel (A15) 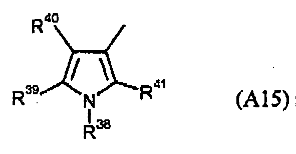 steht, in welcher
R³⁸ für Wasserstoff Cyano, C₁-C₄-Alky, C₁-C₄-Halogenalkyl mit 1 bis 5 Halogenato- men, C₁-C₄-Alkoxy-C₁-C₄-alkyl, Hydroxy-C₁-C₄-alkyl, C₁-C₄-Alkylsulfonyl Di(C₁- C₄-alkyl)aminosulfonyl, C₁-C₆-Alkylcarbonyl oder für jeweils gegebenenfalls substituiertes Phenylsulfonyl oder Benzyl steht,
R³⁹ für Wasserstoff Halogen, C₁-C₄-Alkyl oder C₁-C₄-Halogenalkyl mit 1 bis 5 Halegen- atomen steht,
R⁴⁰ für Wasserstoff, Halogen, Cyano, C₁-C₄-Alkyl oder C₁-C₄-Halogenalkyl mit 1 bis 5 Halogenatomen steht,
R⁴¹ für Wasserstoff, Halogen, C₁-C₄₋Akyl oder C₁-C₄-Halogenalkyl mit 1 bis 5 Halogen- atomen steht,
oder
- A: für den Rest der Formel (A16) 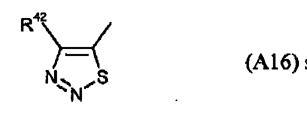 steht, in welcher
R⁴² für Halogen, C₁-C₄-Alkyl oder C₁-C₄-Halogenalkyl mit 1 bis 5 Halogmatomen steht,
oder
- A: für den Rest der Formel (A17) 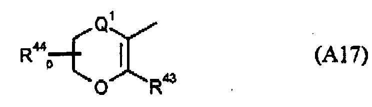 steht, in welcher
R⁴³ für C₁-C₄-Alkyl oder C₁-C₄-Halogenalkyl mit 1 bis 5 Halogenatomen steht,
R⁴⁴ für C₁-C₄-Alkyl steht,
Q¹ für S (Schwefel), O (Sauerstoff), SO, SO₂ oder CH₂ steht,
p für 0, 1 oder 2 steht, wobei R⁴⁴ gleich oder verschieden ist, wenn p für 2 steht.

Die erfindungsgemäßen Verbindungen können gegebenenfalls als Mischungen verschiedener möglicher isomerer Formen, insbesondere von Stereoisomeren, wie z. B. E- und Z-, threo- und erythro-, sowie optischen Isomeren, gegebenenfalls aber auch von Tautomeren vorliegen. Es werden sowohl die E- als auch die Z-Isomeren, wie auch die threo- und erythro-, sowie die optischen Isomeren, beliebige Mischungen dieser Isomeren, sowie die möglichen tautomeren Formen beansprucht

Weiterhin wurde gefunden, dass man silylierte Carbonamide der Formel (I) erhält, indem man
a) Carbonsäure-l7erivate der Formel (II) 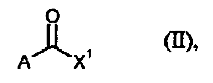 in welcher
   - A: die oben angegebenen Bedeutungen hat und
   - X¹: für Halogen oder Hydroxy steht,
   mit einem Amin der Formel (III) 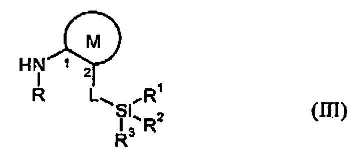 in weicher M, L, R¹, R², R³ und R die oben angegebenen Bedeutungen haben,
   gegebenenfalls in Gegenwart eines Katalysators, gegebenenfalls in Gegenwart eines Kondensationsmittels, gegebenenfalls in Gegenwart eines Säurebindemittels und gegebenenfalls in Gegenwart eines Verdünnungsmittels umsetzt,
   oder
b) silylierte Carboxamide der Formel (I-a) 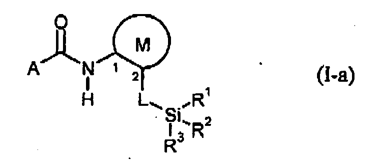 in welcher M, L, A, R¹, R² und R³ die oben angegebenen Bedeutungen haben mit Halogeniden der Formel (IV)

   R^{A}-x² (IV)

   in welcher
   - X²: für Chlor, Brom oder Iod steht,
   - R^{A}: für C₁-C₈-Alkyl, C₁-C₆-Alkylsulfinyl, C₁-C₆-Alkylsulfonyl, C₁-C₄-Alkoxy-C₁-C₄-alkyl, C₃-C₈-Cycloalkyl; C₁-C₆-Halogenalkyl, C₁-C₄-Halogenalkylthio, C₁-C₄-Halogenalkyl- sulfinyl, C₁-C₄-Halogenalkylsulfonyl, Halogen-C₁-C₄-alkoxy-C₁-C₄-alkyl, C₃-C₈-Halo- gencycloalkyl mit jeweils 1 bis 9 Fluor-, Chlor- und/oder Bromatomen, Formyl, Formyl-C₁-C₃-alkyl, (C₁-C₃-Alkyl)carbonyl-C₁-C₃-alkyl, (C₁-C₃-Alkoxy)carbonyl-C₁- C₃-alkyl; Halogen-(C₁-C₃-alky)carbonyl-C₁-C₃-alkyl, Halogen-(C₁-C₃-alkoxy)carbonyl- C₁-C₃-alkyl mit jeweils 1 bis 13 Fluor-, Chlor- und/oder Bromatomen; (C₁-C₈-Alkyl)carbonyl, (C₁-C₈-Alkoxy)carbonyl, (C₁₋C₄-Alkoxy-C₁-C₄-alkyl)carbonyl, (C₃-C₈-Cycloalkyl)carbonyl; (C₁-C₆-Halogenalkyl)carbonyl, (C₁-C₆-Halogenalkoxy)car- bonyl, (Halogen-C₁-C₄-alkoxy-C₁-C₄-alkyl)carbonyl, (C₃-C₈-Halogencycloalkyl)carbo- nyl mit jeweils 1 bis 9 Fluor-, Chlor- und/oder Bromatomen; oder -C(=O)C(=O)R⁴ -CONR⁵R⁶ oder -CH₂NR⁷R⁸ steht,
   wobei R⁴, R⁵, R⁶, R⁷ und R⁸ die oben angegebenen Bedeutungen haben,
in Gegenwart einer Base und in Gegenwart eines Verdünnungsmittels umsetzt.

Schließlich wurde gefunden, dass die neuen silylierte Carboxamide der Formel (I) sehr gute mikrobizide Eigenschaften besitzen und zur Bekämpfung unerwünschter Mikroorganismen sowohl im Pflanzenschutz als auch im Materialschutz verwendbar sind.

Die erfmdungsgemäßen silylierte Carboxamide sind durch die Formel (I) allgemein definiert. Bevorzugte Restedefinitionen der vorstehenden und nachfolgend genannten Formeln sind im Folgende angegeben. Diese Definitionen gelten für die Endprodukte der Formel (I) wie für alle Zwischenprodukte gleichermaßen.
- M: steht bevorzugt für einen der folgenden Heterocyalen 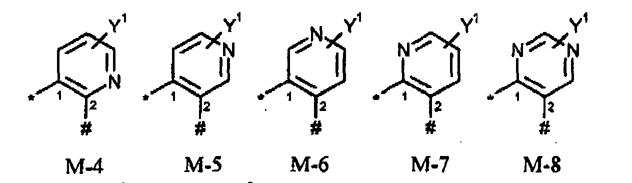 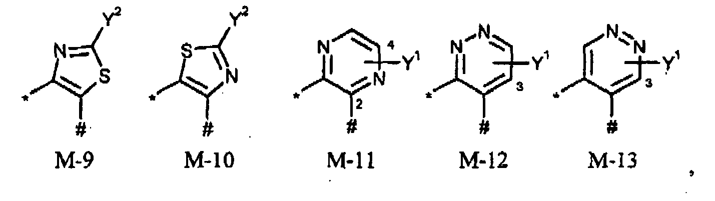 wobei die mit "#" markierte Bindung mit dem Amid, die mit "#" markierte Bindung mit dem Rest Z verknüpft list
- M: steht besonders bevorzugt für einen Heterocyclus ausgewählt aus M-4, M-5, M-7, M-8, M-9 und M-10.
- M: steht ganz besondere bevorzugt für einen Heterocyclus ausgewählt aus, M-4, M-5, M-7, M-8, M-9 und M-10.
- M: steht außerdem insbesondere bevorzugt für den Heterocyclus M-4.
- M: steht außerdem insbesondere bevorzugt für den Heterocyclus M-5.
- M: steht außerdem insbesondere bevorzugt für den Heterocyclus M-7.
- M: steht außerdem insbesondere bevorzugt für den Heterocyclus M-8.
- M: steht außerdem insbesondere bevorzugt für den Heterocyclus M-9.
- M: steht außerdem insbesondere bevorzugt für den Heterocyclus M-10.

- Y¹: steht bevorzugt für Wasserstoff.
- Y¹: steht für den Fall, dass M für M-4, M-5, M-6 oder M-7 steht, außerdem bevorzugt für Fluor, wobei Fluor besonders bevorzugt in 6-Position (M-4, M-5) oder in 3-Position (M-6, M₋7) steht
- Y¹: steht für den Fall, dass M für M-4, M-5, M-6 oder M-7 steht, außerdem bevorzugt für Chlor, wobei Chlor besonders bevorzugt in 6-Position (M-4, M-5) oder in 3-Position (M-6, M-7) steht.
- Y¹: steht für den Fall, dass M für M-4, M-5, M-6 oder M-7 steht, außerdem bevorzugt für Methyl, wobei Methyl besonders bevorzugt in 4-Position (M-4) oder in position (M-5, M-6, M-7) steht
- Y¹: steht für den Fall, dass M für M-8 steht, außerdem bevorzugt für Methyl, wobei Methyl besonders bevorzugt in 3-Position steht.
- Y¹: steht für den Fall, dass M für M-8 steht, außerdem bevorzugt für Trifluormethyl, wobei Tri- fluormethyl besonders bevorzugt in 3-postition steht.
- Y¹: steht für den Fall, dass M für M-11 steht, Außerdem bevorzugt für Methyl, wobei Methyl besonders bevorzugt in position steht.
- Y¹: steht für den Fall, dass M für M-11 steht, außerdem bevorzugt für Trifluormethyl, wobei Tri- fluormethyl besonders bevorzugt in 4-Position steht.
- Y¹: steht für den Fall, dass M für M-12 steht, außerdem bevorzugt für Methyl, wobei Methyl besonders bevorzugt in 3-Position steht.
- Y¹: steht für den Fall, dass M für M-12 steht, außerdem bevorzugt für Trifluormethyl, wobei Tri- fluormethyl besonders bevorzugt in 3-Position steht.
- Y¹: steht für den Fall, dass M für M-13 steht, außerdem bevorzugt für Methyl, wobei Methyl besonders bevorzugt in 3-Position steht
- Y¹: steht für den Fall, dass M für M-13 steht, außerdem bevorzugt für Trifluormethyl, wobei Tri- fluormethyl besonders bevorzugt in 3-Position steht

- Y²: steht bevorzugt, für Wasserstoff
- Y²: steht bevorzugt für Fluor.
- Y²: steht bevorzugt für Chlor.
- Y²: steht außerdem bevorzugt für Methyl.
- Y²: steht außerdem bevorzugt für Trifluormethyl.

- L: steht bevorzugt für eine direkte Bindung oder für gegebenenfalls durch Halogen substituier- tes geradkettiges oder verzweigtes C₁-C₆-Alkylen, C₂-C₆-Alkenylen oder C₂-C₆-Alkinylen.
- L: steht besonders bevorzugt für eine direkte Bindung oder für -CH₂-, -(CH₂)₂-, -(CH₂)₃-, -CH(Me)-, -CH(Me)CH₂-, -CH₂CH(Me)-, -CH(Me)CH(Me)-, -C(Me₂)CH₂, -CH(Me)-(CH₂)₂-, -CH(Me)-(CH₂)₃-, .CH=CH, -C(Me)=CH. oder -C≡C-.
- L: steht ganz besonders bevorzugt für -(CH₂)₂-, -(CH₂)₃-, -CH(Me)-, -CH(Me)CH2-, -CH(Me)(CH₂)₂-, -CH(Me)-(CH₂)₃-, -CH=CH-, -C(Me)=CH- oder -C≡C-.

- R¹ und R²: stehen unabhängig voneinander bevorzugt für C₁-C₆-Alkyl, C₁-C₆-Alkoxy, C₁-C₃-Alkoxy- C₁-C₃-alkyl oder C₁-C₃.Alkylthio-C₁-C₃-alkyl.
- R¹ und R²: stehen unabhängig voneinander besonders bevorzugt für Methyl, Ethyl, Methoxy, Ethoxy, Methoxymethyl, Ethoxymethyl, Methoxyethyl, Ethoxyethyl, Methylthiomethyl, Ethylthio- methyl, Methylthioethyl oder Ethylthioethyl.
- R¹ und R²: stehen unabhängig voneinander ganz besonders bevorzugt für Methyl, Methoxy, Methoxymethyl oder Methylthiomethyl.
- R¹ und R²: stehen insbesondere bevorzugt jeweils für Methyl.

- R³: steht bevorzugt für C₁-C₆-Alkyl, C₁-C₄₋-Alkoxy, C₁-C₃-Alkoxy-C₁-C₃-alkyl, C₁-C₃-Alkylthio- C₁-C₃-alkyl, C₃-C₆-Cycloalkyl, Phenyl oder Benzyl.
- R³: steht besonders bevorzugt für Methyl, Ethyl, n- oder iso-Propyl, n-, sec-, iso- oder tert-Butyl, Methoxy, Ethoxy, n- oder iso-Propoxy, n-, sec-, iso- oder tert-Butoxy, Methoxymethyl, Ethoxymethyl, Methoxyethyl, Ethoxyethyl, Methylthiomethyl, Ethylthiomethyl, Methylthioethyl, Ethylthioethyl, Cyclopropyl, Phenyl oder Benzyl.
- R³: steht ganz besonders bevorzugt für Methyl, Ethyl, n- oder iso-Propyl, iso- oder tert-Butyl, Methoxy, iso-Propoxy, iso- oder tert-βutoxy, Methoxymethyl, Methylthiomethyl oder Phenyl.
- R³: steht insbesondere bevorzugt für Methyl, Ethyl, n- oder iso-Propyl, iso- oder tert-Butyl, Methoxy, iso-Propoxy, iso- oder tert-Butoxy.
- R³: steht hervorgehoben für Methyl.

- R: steht bevorzugt für Wasserstoff, C₁-C₆-Alkyl, C₁-C₄-Alkylsulfinyl, C₁-C₄-Alkylsulfonyl, C₁- C₃-Alkoxy-C₁-C₃-alkyl C₃-C₆-Cycloalkyl; C₁-C₄-Halogenalkyl, C₁-C₄-Halogenalkylthio, C₁- C₄-Halogenalkylsulfinyl, C₁-C₄-Halogenalkylsulfonyl, Halogen-C₁-C₃-alkoxy-C₁-C₃-alkyl, C₃-C₈-Halogencycloalkyl mit jeweils 1 bis 9 Fluor-, Chlor- und/oder Bromatomen; Formyl, Formyl-C₁-C₃-alkyl, (C₁-C3-Alkyl)carbonyl-C₁-C₃-alkyl, (C₁-C₃-Alkoxy)carbonyl-C₁-C₃- alkyl; Halogen-(C₁-C₃-alkyl)carbonyl-C₁-C₃-alkyl, Halogen-(C₁-C₃-alkoxy)carbonyl-C₁-C₃-al- kyl mit jeweils 1 bis 13 Fluor-, Chlor- und/oder Bromatomen; (C₁-C₆-Alkyl)carbonyl, (C₁-C₄-Alkoxy)carbonyl, (C₁-C₃-Alkoxy-C₁-C₃-alkyl)Carbonyl, (C₃-C₆ Cycloalkyl)carbonyl, (C₁-C₄-Halogenalkyl)carbonyl, (C₁-C₄-Halogenalkoxy)carbonyl (Halo- gen-C₁-C₃-alkoxy-C₁-C₃-alkyl)Carbonyl, (C₃-C₆-Halogencycloalkyl)carbonyl mit jeweils 1 bis 9 Fluor-, Chlor- und/oder Bromatomen; oder -C(=O)C(=O)R⁴, -CONR⁵R⁶ oder -CH₂NR⁷R⁸.
- R: steht besonders bevorzugt für Wasserstoff, Methyl, Ethyl, n- oder iso-Propyl, n-, iso-, sec- oder tert-Butyl, Pentyl oder Hexyl, Methylsulfinyl, Ethylsulfinyl, n- oder iso-Propylsulfinyl, n-, iso-, sec- oder tert-Butylsulfinyl, Methylsulfonyl, Ethylsulfonyl, n- oder iso-Propylsulfonyl, n-, iso-, sec- oder tert-Butylsulfonyl, Methoxymethyl, Methoxyethyl, Ethoxymethyl, Ethoxyethyl, Cyclopropyl, Cyclopentyl, Cyclohexyl, Trifluormethyl, Trichlormethyl, Trifluorethyl, Difluor- methylthio, Difluorchlormethylthio, Trifluormethylthio, Trifluormethylsulfinyl, Trifluormethyl- sulfonyl, Trifluormethoxymethyl; Formyl, -CH₂-CHO, -(CH₂)₂-CHO, -CH₂-CO-CH₃, -CH₂-CO-CH₂CH₃, -CH₂-CO-CH(CH₃)₂, -(CH₂)₂-CO-CH₃, -(CH₂)₂-CO-CH₂CH₃, -(CH₂)₂-CO-CH(CH₃)₂, -CH₂-CO₂CH₃, -CH₂-CO₂CH₂CH₃, -CH₂-CO₂CH(CH₃)₂, -(CH₂)₂-CO₂CH₃, -(CH₂)₂-CO₂CH₂CH₃, -(CH₂)₂-CO₂CH(CH₃)₂, -CH₂CO-CF₃, -CH₂-CO-CCl₃, -CH₂-CO-CH₂CF₃, -CH₂CO-CH₂CCl₃, -(CH₂)₂-CO-CH₂CF₃, -(CH₂)₂-CO-CH₂CCl₃, -CH₂-CO₂CH₂CF₃, -CH₂-CO₂CF₂CF₃, -CH₂-CO₂CH₂CCl₃, -CH₂-CO₂CCl₂CCl₃, -(CH₂)₂-CO₂CH₂CF₃, -(CH₂)₂-CO₂CF₂CF₃, -(CH₂)₂-CO₂CH₂CCl₃, -(CH₂)₂-CO₂CCl₂CCl₃; Methylcarbonyl, Methylcarbonyl, n-Propylcarbonyl, iso-Propylcarbonyl, tert-Butylcarbonyl, Methoxycarbonyl, Ethoxycarbonyl, tert-Butoxycarbonyl, Cyclopropylcarbonyl; Trifluorme- thylcarbonyl, Trifluormethoxycarbonyl, oder -C(=O)C(=O)R⁴, -CONR⁵R⁶ oder -CH₂NR⁷R⁸.
- R: steht ganz besonders bevorzugt für Wasserstoff, Methyl, Methoxymethyl, Formyl, -CH₂-CHO, -(CH₂)₂-CHO, -CH₂-CO-CH₃, -CH₂-CO-CH₂CH₃, -CH₂-CO-CH(CH₃)₂, -C(=O)CHO, -C(=O)C(=O)CH₃, -C(=O)C(=O)CH₂OCH₃, -C(=O)CO₂CH₃, -C(=O)CO₂CH₂CH₃.

- R⁴: steht bevorzugt für Wasserstoff, C₁-C₆-Alkyl, C₁-C₄-Alkoxy, C₁-C₃-Alkoxy-C₁-C₃-alkyl, C₃- C₆-Cycloalkyl; C₁-C₄-Halogenalkyl, C₁-C₄-Halogenalkoxy, Halogen-C₁-C₃-alkoxy-C₁-C₃- alkyl, C₃-C₆-Halogencycloalkyl mit jeweils 1 bis 9 Fluor-, Chlor- und/oder Bromatomen.
- R⁴: steht besonders_bevorzugt für Wasserstoff, Methyl, Ethyl, n- oder iso-Propyl, tert-Butyl, Methoxy, Ethoxy, n- oder iso-Propoxy, tert-Butoxy, Methoxymethyl, Cyclopropyl; Trifluor- methyl, Trifluormethoxy.

- R⁵ und R⁶: stehen unabhängig voneinander bevorzugt für Wasserstoff, C₁-C₆-Alkyl, C₁-C₃-Alkoxy-C₁- C₃-alkyl, C₃-C₆-Cycloalkyl; C₁-C₄-Halogenalkyl, Halogen-C₁-C₃-alkoxy-C₁-C₃-alkyl, C₃-C₆- Halogencycloalkyl mit jeweils 1 bis 9 Fluor-, Chlor- und/oder Bromatomen.
- R⁵ und R⁶: bilden außerdem gemeinsam mit dem Stickstoffatom, an das sie gebunden sind, bevorzugt einen gegebenenfalls einfach bis vierfach, gleich oder verschieden durch Halogen oder C₁- C₄-Alkyl substituierten gesättigten Heterocyclus mit 5 oder 6 Ringatomen, wobei der Hetero- cyclus 1 oder 2 weitere, nicht benachbarte Heteroatome aus der Reihe Sauerstoff, Schwefel oder NR⁹ enthalten kann.

- R⁵ und R⁶: stehen unabhängig voneinander besonders bevorzugt für Wasserstoff, Methyl, Ethyl, n- oder iso-Propyl, n-, iso-, sec- oder tert-Butyl, Methoxymethyl, Methoxyethyl, Ethoxymethyl, Ethoxyethyl, Cyclopropyl, Cyclopentyl, Cyclohexyl; Trifluormethyl, Trichlormethyl, Trifluorethyl, Trifluormethoxymethyl.
- R⁵ und R⁶: bilden außerdem gemeinsam mit dem Stickstoffatom, an das sie gebunden sind, besonders bevorzugt einen gegebenenfalls einfach bis vierfach, gleich oder verschieden durch Fluor, Chlor, Brom oder Methyl substituierten gesättigten Heterocyclus aus der Reihe Morpholin, Thiomorpholin oder Piperazin, wobei das Piperazin am zweiten Stickstoffatom durch R⁹ sub- stituiert sein kann.
- R⁷ und R⁸: stehen unabhängig voneinander bevorzugt für Wasserstoff C₁-C₆-Alkyl, C₃-C₆-Cycloalkyl; C₁-C₄-Halogenalkyl, C₃-C₆-Halogencycloalkyl mit jeweils 1 bis 9 Fluor-, Chlor- und/oder Bromatomen.
- R⁷ und R⁸: bilden außerdem gemeinsam mit dem Stickstoffatom, an das sie gebunden sind, bevorzugt einen gegebenenfalls einfach bis vierfach, gleich oder verschieden durch Halogen oder C₁- C₄-Alkyl substituierten gesättigten Heterocyclus mit 5 oder 6 Ringatomen, wobei der Heterocyclus 1 oder 2 weitere, nicht benachbarte Heteroatome aus der Reihe Sauerstoff, Schwefel oder NR⁹ enthalten kann.
- R⁷ und R⁸: stehen unabhängig voneinander besonders bevorzugt fiir Wasserstoff, Methyl, Ethyl, n- oder iso-Propyl, n-, iso-, sec- oder tert-Butyl, Methoxymethyl, Methoxyethyl, Ethoxymethyl, Ethoxyethyl, Cyclopropyl, Cyclopentyl, Cyclohexyl; Trifluormethyl, Trichlormethyl, Trifluorethyl, Trifluormethoxymethyl.
- R⁷ und R⁸: bilden außerdem gemeinsam mit dem Stickstoffatom, an das sie gebunden sind, besonders bevorzugt einen gegebenenfalls einfach bis vierfach, gleich oder verschieden durch Fluor, Chlor, Brom oder Methyl substituierten gesättigten Heterocyclus aus der Reihe Morpholin, Thiomorpholin oder Piperazin, wobei das Piperazin am zweiten Stickstoffatom durch R⁹ sub- stituiert sein kann.

- R⁹: steht bevorzugt für Wasserstoff oder C₁-C₄-Alkyl.
- R⁹: steht besonders bevorzugt für Wasserstoff, Methyl, Ethyl, n- oder isopropyl, n-, iso-, sec- oder tert-Butyl.

- A: steht bevorzugt für einen der oben angegebenen Reste A1, A2, A3, A4, A5, A8, A9, A10, A11, A12, A13, A14, A15 oder A17.
- A: steht besonders bevorzugt für einen der oben angegebenen Reste A1, A2, A4, A5, A8, A10, A11, A12, A13, A14, A15 oder A17.

- A: steht ganz besonders bevorzugt für den Rest A1.
- A: steht außerdem ganz besonders bevorzugt für den Rest A2.
- A: steht außerdem ganz besonders bevorzugt für den Rest A4.
- A: steht außerdem ganz besonders bevorzugt für den Rest A5.
- A: steht außerdem gang besonders bevorzugt für den Rest A8.
- A: steht außerdem ganz besonders bevorzugt für den Rest A10.
- A: steht außerdem ganz besonders bevorzugt für den Rest A11.
- A: steht außerdem ganz besonders bevorzugt für den Rest A12.
- A: steht außerdem ganz besonders bevorzugt für den Rest A 13.
- A: steht außerdem ganz besonders bevorzugt für den Rest A14.
- A: steht außerdem ganz besonders bevorzugt für den Rest A 15.
- A: steht außerdem ganz besonders bevorzugt für den Rest A17.

- R¹⁰: steht bevorzugt für Wasserstoff Hydroxy, Formyl, Cyano, Fluor, Chlor, Brom, Iod, Methyl, Ethyl, iso-Propyl, Methoxy, Ethoxy, Methylthio, Ethylthio, Cyclopropyl, C₁-C₂-Halogenalkyl, C₁-C₂-Halogenakoxy mit jeweils 1 bis 5 Fluor, Chlor und/oder Bromatomen, Trifluormethyl- thio, Difluormethylthio, Aminocarbonyl, Aminocarbonylmethyl oder Aminocarbonylethyl.
- R¹⁰: steht besonders bevorzugt für Wasserstoff Hydroxy, Formyl, Fluor, Chlor, Brom, Iod, Methyl, Ethyl, iso-Propyl, Methoxy, Ethoxy, Monofluormethyl, Monotluorethyl, Difluor- methyl, Trifluormethyl, Difluorchlormethyl, Trichlormethyl, Dichlormethyl, Pentafluorethyl, Cyclopropyl, Methoxy, Ethoxy, Trifluormethoxy, Difluormethoxy, Trichlormethoxy, Me- thylthio, Ethylthio, Trifluormethylthio oder Difluonnemylthio.
- R¹⁰: steht ganz besonders bevorzugt für Wasserstoff, Hydroxy, Formyl, Fluor, Chlor, Brom, Iod, Methyl, Ethyl, iso-Propyl, Methoxy, Cyclopropyl, Monofluormethyl, Monofluorethyl, Difluormethyl, Dichlormethyl, Trifluormethyl, Difluorchlormethyl, Trichlormethyl, -CHFCH₃ oder Difluormethoxy.
- R¹⁰: steht jnsbesondere bevorzugt für Wasserstoff, Hydroxy, Formyl, Chlor, Methyl, Ethyl, Methoxy, Cyclopropyl, Monofluormethyl, Difluormethyl, Dichlormethyl, Trifluormethyl, -CHFCH₃ oder Difluormethoxy.
- R¹¹: steht bevorzugt für Wasserstoff, Fluor, Chlor, Brom, Iod, Methyl, Ethyl, Methoxy, Ethoxy, Methylthio, Ethylthio, C₁-C₂-Halogenalkyl mit 1 bis 5 Fluor, Chlor und/oder Bromatomen,
- R¹¹: steht besonders bevorzugt für Wasserstoff, Fluor, Chlor, Brom, Iod, Methyl oder -CHFCH₃,
- R¹¹: steht ganz besonders bevorzugt für Wasserstoff, Fluor, Chlor oder Methyl.

- R¹²: steht bevorzugt für Wasserstoff, Methyl, Ethyl, n-Propyl, iso-Propyl, C₁-C₂-Halogenalkyl mit 1 bis 5 Fluor, Chlor und/oder Bromatomen, Hydroxymethyl, Hydroxyethyl, Cyclopropyl, Cyclopentyl, Cyclohexyl oder Phenyl.
- R¹²: steht besonders bevorzugt für Wasserstoff, Methyl, Ethyl, iso-Propyl, Trifluormethyl, Di- fluormethyl, Hydroxymethyl, Hydroxyethyl oder Phenyl.
- R¹²: steht ganz besonders bevorzugt für Wasserstoff, Methyl, Trifluormethyl oder Phenyl.
- R¹²: steht insbesondere bevorzugt für Methyl.

- R¹³ und: R¹⁴ stehen unabhängig voneinander bevorzugt für Wasserstoff, Fluor, Chlor, Brom, Methyl, Ethyl oder C₁-C₂-Halogenalkyl mit 1 bis 5 Fluor, Chlor und/oder Bromatomen.
- R¹³ und R¹⁴: stehen unabhängig voneinander besonders bevorzugt für Wasserstoff, Fluor, Chlor, Brom, Methyl, Ethyl, Difluormethyl, Trifluormethyl, Difluorchlormethyl oder Trichlormethyl.
- R¹³ und R¹⁴: stehen unabhängig voneinander ganz besonders bevorzugt für Wasserstoff, Fluor, Chlor, Brom, Methyl, Ethyl, Difluormethyl, Trifluormethyl oder Trichlormethyl.
- R¹³ und R¹⁴: stehen insbesondere bevorzugt jeweils für Wasserstoff.

- R¹⁵: steht bevorzugt für Fluor, Chlor, Brom, Iod, Cyano, Methyl. Ethyl, C₁-C₂-Halogenalkyl oder C₁-C₂-Halogenalkoxy mit jeweils 1 bis 5 Fluor, Chlor und/oder Bromatomen.
- R¹⁵: steht besonders bevorzugt für Fluor, Chlor, Brom, Iod, Cyano, Methyl, Trifluormethyl, Trifluormethoxy, Difluormethoxy, Difluorohlormethoxy oder Trichlormethoxy.
- R¹⁵: steht ganz besonders bevorzugt für Fluor, Chlor, Brom, Iod, Methyl, Trifluormethyl oder Trifluormethoxy.
- R¹⁵: steht insbesonders bevorzugt für Chlor, Brom, Iod, Trifluormethyl oder Methyl.
- R¹⁶ und R¹⁷: stehen unabhängig voneinander bevorzugt für Wasserstoff, Fluor, Chlor, Brom, Methyl, Ethyl oder C₁-C₂-Halogenakyl mit 1 bis 5 Fluor, Chlor und/oder Bromatomen.
- R¹⁶ und R¹⁷: stehen unabhängig voneinander besonders bevorzugt für Wasserstoff, Fluor, Chlor, Brom, Methyl, Ethyl, Difluormethyl, Trifluormethyl, Difluorchlormethyl oder Trichlormethyl.
- R¹⁶ und R¹⁷: stehen unabhängig voneinander ganz besonders bevorzugt für Wasserstoff, Fluor, Chlor, Brom oder Methyl.
- R¹⁶ und R¹⁷: stehen insbesonders bevorzugt jeweils für Wasserstoff.

- R¹⁸: steht bevorzugt für Wasserstoff, Methyl, Ethyl oder C₁-C₂-Halogenalkyl mit 1 bis 5 Fluor, Chlor und/oder Bromatomen.
- R¹⁸: steht besonders bevorzugt für Wasserstoff, Methyl oder Trifluormethyl.
- R¹⁸: steht ganz besonders bevorzugt für Methyl.

- R¹⁹: steht bevorzugt für Wasserstoff, Fluor, Chlor, Brom, Iod, Hydroxy, Cyano, C₁-C₄-Alkyl, C₁- C₂-Halogenalkyl, C₁-C₂-Halogenalkoxy oder C₁-C₂-Halogenalkylthio mit jeweils 1 bis 5 Fluor, Chlor und/oder Bromatomen.
- R¹⁹: steht besonders bevorzugt für Wasserstoff, Fluor, Chlor, Brom, Iod, Hydroxy, Cyano, Methyl, Ethyl, n-Propyl, iso-Propyl, n-Butyl, iso-Butyl, sec-Butyl, tert-Butyl, Difluormethyl, Trifluormethyl, Difluorchlormethyl, Trichlormethyl, Trifluormethoxy, Difluormethoxy, Difluorchlormethoxy, Trichlormethoxy, Trifluormethylthio, Difluormethylthio, Difluorchlor- methylthio oder Trichlormethylthio.
- R¹⁹: steht ganz besonders bevorzugt für Wasserstoff, Fluor, Chlor, Brom, Iod, Methyl, Difluor- methyl, Trifluormethyl oder Trichlormethyl.
- R¹⁹: steht insbesondere bevorzugt für Brom, Iod, Methyl, Difluormethyl oder Trifluormethyl.

- R²⁰: steht bevorzugt für Fluor, Chlor, Brom, Tod, Hydroxy, Cyano, C₁-C₄-Alkyl, Methoxy, Ethoxy, Methylthio, Ethylthio, Difluormethylthio, Trifluormethylthio, C₁-C₂-Halogenalkyl oder C₁- C₂-Halogenalkoxy mit jeweils 1 bis 5 Fluor, Chlor und/oder Bromatomen.
- R²⁰: steht besonders bevorzugt für Fluor, Chlor, Brom, Iod, Hydroxy, Cyano, Methyl, Ethyl, n- Propyl, iso-Propyl, n-Butyl, iso-Butyl, sec-Butyl, tert-Butyl, Trifluormethyl, Difluormethyl, Difluorchlormethyl, Trichlormethyl, Methoxy, Ethoxy, Methylthio, Ethylthio, Difluormethyl- thio, Trifluormethylthio, Trifluormethoxy, Difluormethoxy, Difluorchiormethoxy oder Tri- chlormethoxy.
- R²⁰: steht ganz besonders bevorzugt für Fluor, Chlor, Brom, Iod, Methyl, Trifluormethyl, Difluormethyl oder Trichlormethyl.

- R²¹: steht bevorzugt für Wasserstoff, Fluor, Chlor, Brom, Iod, Cyano, C₁-C₄-Alkyl, Methoxy, Ethoxy, Methylthio, Ethylthio, C₁-C₂-Halogenalkyl oder C₁-C₂-Halogenalkoxy mit jeweils 1 bis 5 Fluor, Chlor und/oder Bromatomen, C₁-C₂-Alkylsulfinyl oder C₁-C₂-Alkylsulfonyl.
- R²¹: steht besonders bevorzugt für Wasserstoff, Fluor, Chlor, Brom, Iod, Cyano, n-Propyl, iso- Propyl, n-Butyl, iso-Butyl, sec-Butyl, tert-Butyl, Trifluormethyl, Difluormethyl, Difluorchlor- methyl, Trichlormethyl, Methoxy, Ethoxy, Methylthio, Ethylthio, Trifluormethoxy, Difluor- methoxy, Difluorchlormethoxy, Trichlormethoxy, Methylsulfinyl oder Methylsulfonyl.
- R²¹: steht ganz besonders bevorzugt für Wasserstoff, Fluor, Chlor, Brom, Iod, n-Propyl, iso- Propyl, n-Butyl, iso-Butyl, sec-Butyl, tert-Butyl, Trifluormethyl, Difluormethyl, Trichlor- methyl, Methylsulfinyl oder Methylsulfonyl,
- R²¹: steht besonders bevorzugt für Wasserstoff.

- R²²: steht bevorzugt für Methyl, Ethyl oder C₁-C₂-Halogenalkyl mit 1 bis 5 Fluor, Chlor und/oder Bromatomen.
- R²²: steht besonders bevorzugt für Methyl, Ethyl, Trifluormethyl, Difluormethyl, Difluorchlor- methyl oder Trichlormethyl.
- R²²: steht gang besonders bevorzugt für Methyl, Trifluormethyl, Difluormethyl oder Trichlormethyl.
- R²³: steht bevorzugt für Methyl, Ethyl oder C₁-C₂-Halogenalkyl mit 1 bis 5 Fluor, Chlor und/oder Bromatomen.
- R²³: steht besonders bevorzugt für Methyl, Ethyl, Trifluormethyl, Difluormethyl, Difluor- chlormethyl oder Trichlormethyl,
- R²³: steht ganz besonders bevorzugt für Methyl, Trifluormethyl, Difluormethyl oder Trichlormethyl.

- R²⁴ und R²⁵: stehen unabhängig voneinander bevorzugt für Wasserstoff, Fluor, Chlor, Brom, Amino, Methyl, Ethyl oder C₁-C₂-Halogenalkyl mit 1 bis 5 Fluor, Chlor und/oder Bromatomen.
- R²⁴ und R²⁵: stehen unabhängig voneinander besonders bevorzugt für Wasserstoff, Fluor, Chlor, Brom, Methyl, Ethyl, Trifluormethyl, Difluormethyl, Difluorchlormethyl oder Trichlormethyl.
- R²⁴ und R²⁵: stehen unabhängig voneinander ganz besonders bevorzugt für Wasserstoff, Fluor, Chlor, Brom oder Methyl.
- R²⁴ und R²⁵: stehen insbesondere bevorzugt jeweils für Wasserstoff.

- R²⁶: steht bevorzugt für Wasserstoff, Fluor, Chlor, Brom, Iod, Methyl, Ethyl oder C₁-C₂-Halogen- alkyl mit 1 bis 5 Fluor, Chlor und/oder Bromatomen.
- R²⁶: steht besonders bevorzugt für Wasserstoff, Fluor, Chlor, Brom, Iod, Methyl, Ethyl, Trifluor- methyl, Difluormethyl, Difluorchlormethyl oder Trichlormethyl.
- R²⁶: steht ganz besonders bevorzugt für Wasserstoff, Fluor, Chlor, Brom, Methyl oder Trifluor- methyl.
- R²⁶: steht insbesondere bevorzugt für Methyl oder Trifluormethyl.

- R²⁷ und R²⁸: stehen unabhängig voneinander bevorzugt für Wasserstoff, Fluor, Chlor, Brom, Amino, Nitro, Methyl, Ethyl oder C₁-C₂-Halogenalkyl mit 1 bis 5 Fluor, Chlor und/oder Bromatomen.
- R²⁷ und R²⁸: stehen unabhängig voneinander besonders bevorzugt für Wasserstoff Fluor, Chlor, Brom, Nitro, Methyl, Ethyl, Trifluormethyl, Difluormethyl, Difluorchlormethyl oder Trichlormethyl.
- R²⁷ und R²⁸: stehen unabhängig voneinander ganz besonders bevorzugt für Wasserstoff, Fluor, Chlor, Brom, Methyl, Trifluorethyl, Difluormethyl oder Trichlormethyl.

- R²⁷ und R²⁸: stehen Insbesondere bevorzugt jeweils für Wasserstoff.
- R^{29*}: steht bevorzugt für Fluor, Chlor, Brom, Methyl, Ethyl oder C₁-C₂-Halogenalkyl mit 1 bis 5 Fluor, Chlor und/oder Bromatomen.
- R²⁹: steht besonders bevorzugt, für Fluor, Chlor, Brom, Methyl, Ethyl, Trifluormethyl, Difluor- methyl, Difluorchlormethyl oder Trichlormethyl.
- R²⁹: steht ganz besonders_bevorzust für Fluor, Chlor, Brom, Methyl, Trifluormethyl, Difluor- methyl oder Trichlormethyl.
- R²⁹: steht insbesonders bevorzugt für Methyl.

- R³⁰: steht bevorzugt für Wasserstoff, Fluor, Chlor, Brom, Amino, C₁-C₄-Alkylamino, Di(C₁-C₄- alkyl)amino, Cyano, Methyl, Ethyl oder C₁-C₂-Halogenalkyl mit 1 bis 5 Fluor, Chlor und/oder Bromatomen.
- R³⁰: steht besonders bevorzugt für Wasserstoff, Fluor, Chlor, Brom, Amino, Methylamino, Dimethylamino, Cyano, Methyl, Ethyl, Trifluormethyl, Difluormethyl, Difluorchlormethyl oder Trichlormethyl,
- R³⁰: steht ganz besonders bevorzugt für Wasserstoff, Fluor, Chlor, Brom, Amino, Methylamino, Dimethylamino, Methyl, Trifluormethyl, Difluormethyl oder Trichlormethyl.
- R³⁰: steht insbesonders bevorzugt für Amino, Methylamino, Dimethylamino, Methyl oder Trifluormethyl.

- R³¹: steht bevorzugt für Fluor, Chlor, Brom, Hydroxy, Methyl, Ethyl, Methoxy, Ethoxy, Cyclopropyl, C₁-C₂-Halogenalkyl oder C₁-C₂-Halogenalkoxy mit 1 bis 5 Fluor, Chlor und/oder Bromatomen.
- R³¹: steht besonders bevorzugt für Fluor, Chlor, Brom, Hydroxy, Methyl Ethyl, Methoxy, Ethoxy, Cyclopropyl, Trifluormethyl, Difluormethyl, Difluorchlormethyl oder Trichlormethyl.
- R³¹: steht ganz besonders bevorzugt für Fluor, Chlor, Brom, Hydroxy, Methyl, Methoxy, Cyclo- propyl, Trifluormethyl, Difluormethyl oder Trichlormethyl.

- R³²: steht bevorzugt für Wasserstoff, Fluor, Chlor, Brom, Amino, C₁-C₄-Alkylamino, Di(C₁-C₄- alkyl)amino, Cyano, Methyl, Methyl oder C₁-C₂-Halogenalkyl mit 1 bis 5 Fluor, Chlor und/oder Bromatomen.
- R³²: steht besonders bevorzugt für Wasserstoff, Fluor, Chlor, Brom, Amino, Methylamino, Dimethylamino, Cyano, Methyl, Ethyl, Trifluormethyl, Difluormethyl, Difluorchlormethyl oder Trichlormethyl.

- R³²: steht ganz besonders bevorzugt, für Wasserstoff, Fluor, Chlor, Brom, Amino, Methylamino, Dimethylamino, Methyl, Trifluormethyl, Difluormethyl oder Trichlormethyl.
- R³²: steht insbesonders bevorzugt für Amino, Methylamino, Dimethylamino, Methyl oder Trifluormethyl.

- R³³: steht bevorzugt für Fluor, Chlor, Brom, Methyl, Ethyl oder C₁-C₂-Halogenalkyl mit 1 bis 5 Fluor, Chlor und/oder Bromatomen.
- R³³: steht besonders bevorzugt für Fluor, Chlor, Brom, Methyl, Ethyl, Trifluormethyl, Difluormethyl, Difluorchlormethyl oder Trichlormethyl.
- R³³: steht ganz besonders bevorzugt für Fluor, Chlor, Brom, Methyl, Trifluormethyl, Difluor- methyl oder Trichlormethyl.
- R³³: steht insbesonders bevorzugt für Methyl, Trifluormethyl oder Difluormethyl.

- R³⁴: steht bevorzugt für Wasserstoff, Methyl oder Ethyl.
- R³⁴: steht besonders bevorzugt für Methyl.

- R³⁵: steht bevorzugt für Fluor, Chlor, Brom, Methyl, Ethyl, Trifluormethyl oder Difluormethyl.
- R³⁵: steht besonders bevorzugt für Fluor, Chlor, Methyl, Trifluormethyl oder Difluormethyl.

- R³⁶: steht bevorzugt für Wasserstoff, Fluor, Chlor, Brom, Methyl, Ethyl oder C₁-C₂-Halogenalkyl mit 1 bis 5 Fluor, Chlor und/oder Bromatomen.
- R³⁶: steht besonders bevorzugt für Wasserstoff, Fluor, Chlor, Brom, Methyl oder Trifluormethyl.

- R³⁷: steht bevorzugt für Fluor, Chlor, Brom, Iod, Hydroxy, C₁-C₄-Alkyl, Methoxy, Ethoxy, Methylthio, Ethylthio, Difluormethylthio, Trifluormethylthio, C₁-C₂-Halogenalkyl oder C₁- C₂-Halogenalkoxy mit jeweils 1 bis 5 Fluor, Chlor und/oder Bromatomen.
- R³⁷: steht besonders bevorzugt für Fluor, Chlor, Brom, Iod, Methyl, Ethyl, n-Propyl, iso-Propyl, n- Butyl, iso-Butyl, sec-Butyl, tert-Butyl, Trifluormethyl, Difluormethyl, Difluorchlormethyl, Trichlormethyl.
- R³⁷: steht ganz besonders bevorzugt für Fluor, Chlor, Brom, Iod, Methyl, Trifluormethyl, Difluormethyl oder Trichlormethyl.

- R³⁸: steht bevorzugt für Wasserstoff, Methyl, Methyl, C₁-C₂-Halogenalkyl mit 1 bis 5 Fluor-, Chlor- und/oder Bromatomen, C₁-C₂-Alkoxy-C₁-C₂alkyl, Hydroxymethyl, Hydroxyethyl, methyl- sulfonyl oder Dimethylaminosulfonyl.

- R³⁸: steht besonders bevorzugt für Wasserstoff Methyl Ethyl. Trifluormethyl, Methoxymethyl, Ethoxymethyl, Hydroxymethyl oder Hydroxyethyl.
- R³⁸: steht ganz besonders bevorzugt für Methyl oder Methoxymethyl.

- R³⁹: steht bevorzugt für Wasserstoff, Fluor, Chlor, Brom, Methyl, Ethyl oder C₁-C₂-Halogenalkyl mit 1 bis 5 Fluor-, Chlor- und/oder Bromatomen.
- R³⁹: steht besonders bevorzugt für Wasserstoff, Fluor, Chlor, Brom, Methyl, Ethyl, Trifluormethyl, Difluormethyl oder Trichlormethyl.
- R³⁹: steht ganz besonders bevorzugt für Wasserstoff oder Methyl.

- R⁴⁰: steht bevorzugt für Wasserstoff Fluor, Chlor, Brom, Iod, Cyano, Methyl, Ethyl, iso-Propyl oder C₁-C₂-Halogenalkyl mit 1 bis 5 Fluor-, Chlor- und/oder Bromatomen.
- R⁴⁰: steht besonders bevorzugt für Wasserstoff Fluor, Chlor, Brom, Iod, Cyano, Methyl, Ethyl, iso-Propyl, Trifluormethyl, Difluormethyl, Difluorchlormethyl oder Trichlormethyl.
- R⁴⁰: steht ganz besonders bevorzugt für Wasserstoff Iod, Methyl oder Trifluormethyl.

- R⁴¹: steht bevorzugt für Wasserstoff, Fluor, Chlor, Brom, Methyl, Ethyl oder C₁-C₂-Halogenalkyl mit 1 bis 5 Fluor, Chlor und/oder Bromatomen.
- R⁴¹: steht besonders bevorzugt für Wasserstoff, Fluor, Chlor, Brom, Iod, Methyl oder Trifluormethyl.
- R⁴¹: steht ganz besonders bevorzugt für Wasserstoff oder Trifluormethyl.

- R⁴²: steht bevorzugt für Fluor, Chlor, Brom, Iod, Methyl, Ethyl, n-Propyl, iso-Propyl, Trifluormethyl oder Difluormethyl.
- R⁴²: steht besonders bevorzugt für Fluor, Chlor, Brom, Iod, Methyl, Ethyl oder Trifluormethyl.

- R⁴³: steht bevorzugt für Methyl, Ethyl oder C₁-C₂-Halogenalkyl mit 1 bis 5 Fluor-, Chlor- und/oder Bromatomen.
- R⁴³: steht besonders bevorzugt für Methyl, Ethyl, Trifluormethyl, Difluormethyl, Difluor- chlormethyl oder Trichlormethyl.

- R^{44*}: steht bevorzugt für Methyl oder Ethyl.
- R⁴⁴: steht besonders bevorzugt für Methyl.

- Q¹: steht bevorzugt für S (Schwefel), SO₂ oder CH₂.
- Q¹: steht besonders bevorzugt für S (Schwefel) oder CH₂.

- Q¹: steht ganz besonders bevorzugt für S (Schwefel).

- p: steht bevorzugt für 0 oder 1.
- p: steht besonders bevorzugt für 0.

Hervorgehoben sind Verbindungen der Formel (I), in welcher R¹ für Wasserstoff steht. Hervorgehoben sind Verbindungen der Formel (1), in welcher R¹ für Formyl steht. Hervorgehoben sind außerdem Verbindungen der Formel (I), in welcher R⁴ für -C(=O)C(-O)R⁵ steht, wobei R⁵ die oben angegebenen Bedeutungen hat.

Hervorgehoben sind Verbindungen der Formel (I), in welcher A für A1 steht.

Hervorgehoben sind außerdem Verbindungen der Formeln 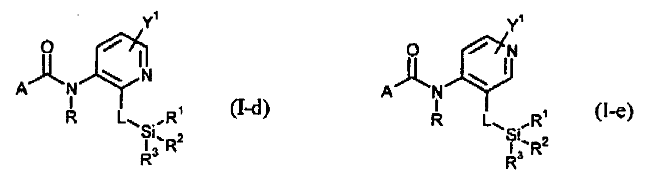 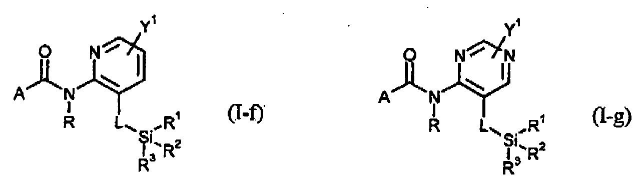 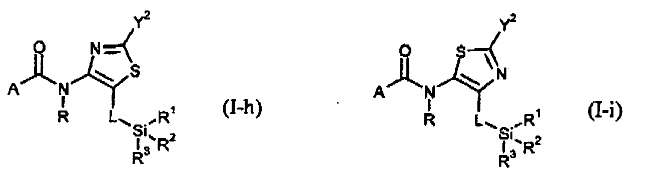 in welchen jeweils Y¹, Y², L, R¹, R², R³, R und A die oben angegebenen allegemeinen, bevorzugten, besonders bevorzugten, ganz besonders bevorzugten usw. Bedeutungen haben.

Gesättigte oder ungesättigte Kohlenwasserstoffreste wie Alkyl oder Alkenyl können, auch in Verbindung mit Heteroatomen, wie z.B. in Alkoxy, soweit möglich, jeweils geradkettig oder verzweigt sein.

Gegebenenfalls substituierte Reste können einfach oder mehrfach substituiert sein, wobei bei Mehrfachsubstitutionen die Substituenten gleich oder verschieden sein können.

Durch Halogen substituierte Reste, wie z.B. Halogenalkyl, sind einfach oder mehrfach halogeniert. Bei mehrfacher Halogenierung können die Halogenatome gleich oder verschieden sein. Halogen steht dabei für Fluor, Chlor, Brom und Iod, insbesondere für Fluor, Chlor und Brom.

Die oben aufgeführten allgemeinen oder in Vorzugsbereichen aufgeführten Restedefinitionen bzw. Erläuterungen können jedoch auch untereinander, also zwischen den jeweiligen Bereichen und Vorzugsbereichen beliebig kombiniert werden. Sie gelten für die Endprodukte sowie für die Vor- und Zwischenprodukte entsprechend.

Die genannten Definitionen können untereinander in beliebiger Weise kombiniert werden. Außerdem können auch einzelne Definitionen entfallen.

Bevorzugt, besonders bevorzugt oder ganz besonders bevorzugt sind Verbindungen der Formel (I), welche jeweils die unter bevorzugt, besonders bevorzugt oder ganz besonders bevorzugt genannten Substituenten tragen.

### Erläuterungen der Verfahren und Zwischenprodukte

### Verfahren (a)

Verwendet man 2-Chlorbenzoylchlorid und {2-[1-Methyl-2-(trimethylsilyl)ethyl]-3-thienyl}amin als Ausgangsstoffe, so kann das erfindungsgemäße Verfahren (a) durch das folgende Formelschema veranschaulicht werden:

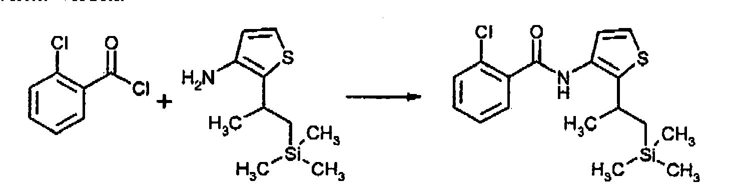

Die zur Durchführung des erfindungsgemäßen Verfahrens (a) als Ausgangsstoffe benötigten Carbonsäure-Derivate sind durch die Formel (II) allgemein definiert. In dieser Formel (II) hat A bevorzugt, besonders bevorzugt bzw. ganz besonders bevorzugt diejenigen Bedeutungen, die bereits im Zusammenhang mit der Beschreibung der erfindungsgemäßen Verbindungen der Formel (I) als bevorzugt, besonders bevorzugt bzw. ganz besonders bevorzugt für A angegeben wurden. X¹ steht bevorzugt für Chlor, Brom oder Hydroxy.

Die Carbonsäure-Derivate der Formel (II) sind bekannt und/oder lassen sich nach bekannten Verfahren herstellen (vgl. WO 93/11117, EP-A 0 545 099, EP-A 0 589 301 und EP-A 0 589 313).

Die zur Durchführung des erfindungsgelmäßen Verfahrens (a) als Ausgangsstoffe weiterhin benötigten Amine sind durch die Formel (III) allgemein definiert. In dieser Formel (III) haben M, L, R¹, R² und R³ bevorzugt, besonders bevorzugt bzw. ganz besonders bevorzugt diejenigen Bedeutungen, die bereits im Zusammenhang mit der Beschreibung der erfindungsgemäßen Verbindungen der Formel (I) für diese Reste als bevorzugt, besonders bevorzugt bzw. ganz besonders bevorzugt angegeben wurden.

Die Amine der Formel (III) sind neu.

Amine der Formel (III-a) 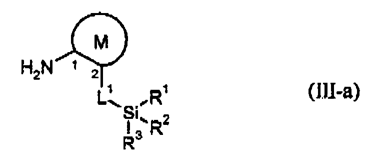 in welcher
L¹ für Alkylen (Alkandiyl) steht,
M, R¹, R² und R³ die oben angegebenen Bedeutungen haben,
werden beispielsweise erhalten, indem man
c) geschützte Amine der Formel (V) 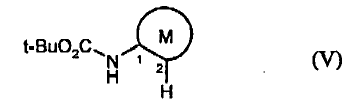 in welcher M und R die oben angegebenen Bedeutungen haben,
   in einem ersten Schritt mit einem Iodierungsmittel (z.B. Iod) gegebenenfalls in Gegenwart eines Verdünnungsmittels (z.B. Tetrahydrofuran) und gegebenenfalls in Gegenwart einer metallorganischen Verbindung (z.B. n-Butyllithium) umsetzt,
   und die so erhaltenen Todidc der Formel (VI) 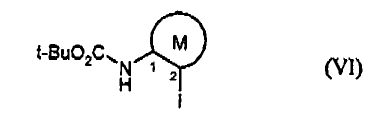 in welcher M und R die oben angegebenen Bedeutungen haben, in einem zweiten Schritt mit Verbindungen der Formel (VII) 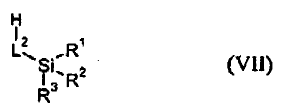 in welcher
   L² für Alkenylen (Akendiyl) oder Alkinylen (Alkindiyl) steht,
   R¹, R² und R³ die oben angegebenen Bedeutungen haben,
   in Gegenwart einer Base (z.B. Triethylamin), in Gegenwart eines Katalysators [z.B. Bis(triphenylphosphin)palladium(II)chlorid] und gegebenenfalls in Gegenwart weiterer Reaktionshilfsmittel [z.B. Kupfer(I)iodid] umsetzt,
und die so erhaltenen geschützten Amine der Formel (VIII) 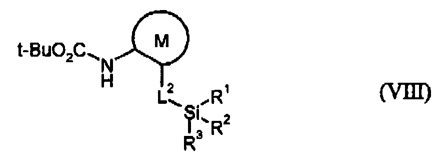 in welcher M, L², R¹, R² und R³ die oben angegebenen Bedeutungen haben, in einem dritten Schritt in Gegenwart eines Katalysators (z.B. Palladium) und gegebenenfalls in Gegenwart eines Verdünnungsmittels (z.B. Methanol) hydriert,
und die so erhaltenen geschützten Amine der Formel (IX) 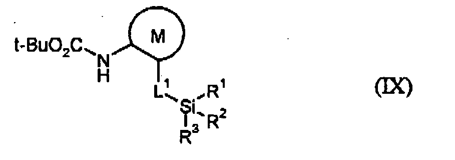 in welcher M, L¹, R¹, R² und R³ die oben angegebenen Bedeutungen haben,
in einem vierten Schritt in Gegenwart einer Säure (z.B. Trifluoressigsäure) und gegebenenfalls in Gegenwart eines Verdünnungsmittels umsetzt
(vgl. auch die Herstellungsbeispiele).

Amine der Formel (III-b) 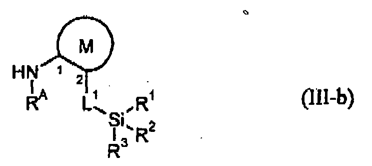 in welcher M, L¹, R¹, R², R³ und R^{A} die oben angegebenen Bedeutungen haben,
werden erhalten, indem man

Amine der Formel (lll-a) mit mit Halogeniden der Formel (IV)

R^{A}-X² (IV)

in welcher X² und R^{A} die oben angegebenen Bedeutungen haben,
entsprechend Verfahren (b) umsetzt.

Amine der Formel (III-b) können auch erhalten werden, indem man zunächst die Amine der Formel (IX) mit Halogeniden der Formel (IV) umsetzt und danach die Schutzgruppe [entsprechend Schritt 4 aus Verfahren (c)] entfernt.

Amine der Formel (III-c) 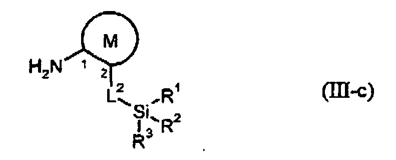 in welcher M, L², R¹, R² und R³ die oben angegebenen Bedeutungen haben,
werden erhalten, indem man geschützte Amine der Formel (VIII) entschützt [entsprechend Schritt 4 aus Verfahren (c)].

Amine der Formel (III-d) 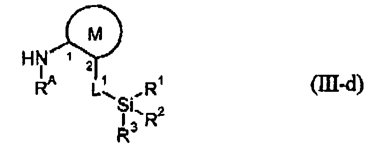 in welcher M, L¹, R¹, R², R³ und R^{A} die oben angegebenen Bedeutungen haben,
werden erhalten, indem man Amine der Formel (III-c) mit Halogeniden der Formel (IV) analog Verfahren (b) umsetzt oder indem man geschützte Amine der Formel (VIII) mit Halogeniden der Formel (IV) umsetzt und anschließend die Schutzgruppe [entsprechend Schritt 4 aus Verfahren (c)] entfernt.

Außerdem können Amine der Formel (III) analog der Beschreibung in WO 03/080628 erhalten werden.

In den Formeln (III-a), (III-b), (III-c), (III-d), (VII, (VIII) und (IX) haben L¹ und L² bevorzugt, besonders bevorzugt und ganz besonders bevorzugt die entsprechenden jeweils für L angegebenen bevorzugten, besonders bevorzugten und ganz besonders bevorzugten Bedeutungen.

### Verfahren (b)

Verwendet man 5-Fluor-1,3-dimethyl-N-{2-[2-(trimethylsilyl)elhyl]-3-thienyl}-1H-pyrazol-4carboxamid und Ethyl-chlor(oxo)acetat als Ausgangsstoffe, so kann der Verlauf des erfindungsgemäßen Verfahrens (b) durch das folgende Formelschema veranschaulicht werden:

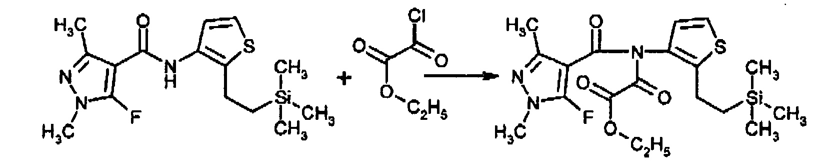

Die zur Durchführung des erfindungsgemäßen Verfahrens (b) als Ausgangsstoffe benötigten silylierte Carboxamide sind durch die Formel (I-a) allgemein definiert. In dieser Formel (I-a) haben M, L, A, R¹, R² und R³ bevorzugt, besonders bevorzugt bzw. ganz besonders bevorzugt diejenigen Bedeutungen, die bereits im Zusammenhang mit der Beschreibung der erfindungsgemäßen Verbindungen der Formel (I) als bevorzugt, besonders bevorzugt bzw. ganz besonders bevorzugt für diese Reste angegeben wurden.

Die silylierte Carboxamide der Formel (I-a) sind ebenfalls erfindungsgemäße Verbindungen und ebenfalls Gegenstand dieser Anmeldung. Sie können nach dem erfindungsgemäßen Verfahren (a) erhalten werden (mit R = Wasserstoff).

Die zur Durchführung des erfindungsgemäßen Verfahrens (b) als Ausgangsstoffe weiterhin benötigten Halogenide sind durch die Formel (IV) allgemein definiert.
- R^{A}: steht bevorzugt für C₁-C₆-Alkyl, C₁-C₄-Alkylsulfinyl, C₁-C₄-Alkylsulfonyl, C₁-C₃-Alkoxy-C₁- C₃-alkyl, C₃-C₆-Cycloalkyl; C₁-C₄-Halogenalkyl, C₁-C₄-Halogenalkylthio, C₁-C₄-Halogen- alkylsulfinyl, C₁-C₄-Halogenalkylsulfonyl, Halogen-C₁-C₃-alkoxy-C₁-C₃-alkyl, C₃-C₈-Halo- gencycloalkyl mit jeweils 1 bis 9 Fluor-, Chlor- und/oder Bromatomen; Formyl, Formyl-C₁- C₃-alkyl, (C₁-C₃-Alkyl)carbonyl-C₁-C₃-alkyl, (C₁-C₃-Alkoxy)carbonyl-C₁-C₃-alkyl; Halogen- (C₁-C₃-alkyl)carbonyl-C₁-C₃-alkyl, Halogen-(C₁-C₃-alkoxy)carbonyl-C₁-C₃-alkyl mit jeweils 1 bis 13 Fluor-, Chlor- und/oder Bromatomen; (C₁-C₆-Alkyl)carbonyl, (C₁-C₄-Alkoxy)carbonyl, (C₁C₃-Alkoxy-C₁-C₃-alkyl)carbonyl, (C₃-C₆- Cycloalky)carbonyl; (C₁-C₄-Halogenalkyl)carbonyl, (C₁-C₄-Halogenalkoxy)carbonyl, (Halo- gen-C₁-C₃-alkoxy-C₁-C₃-alkyl)carbonyl, (C₃-C₆-Halogencycloalkyl)carbonyl mit jeweils 1 bis 9 Fluor-, Chlor- und/oder Bromatomen; oder -C(=O)C(=O)R⁴ -CONR⁵R⁶ oder CH₂NR⁷R⁸,
- R^{A}: steht besonders bevorzugt für Methyl, Ethyl, n- oder iso-Propyl, n-, iso-, sec- oder tert-Butyl, Pentyl oder Hexyl, Methylsulfinyl, Ethylsulfinyl, n- oder iso-Propylsulfinyl, n-, iso-, sec- oder tert-Butylsulfinyl, Methylsulfonyl, Ethylsulfonyl, n- oder iso-Propylsulfonyl, n-, iso-, sec- oder tert-Butylsulfonyl, Methoxymethyl, Methoxyethyl, Ethoxymethyl Ethoxyethyl, Cyclopropyl, Cyclopentyl, Cyclohexyl, Trifluormethyl, Trichlormethyl, Trifluorethyl, Difluormethylthio, Di- fluorchlormethylthio, Trifluormethylthio, Trifluormethylsulfinyl, Trifluormethylsulfonyl, Tri- fluormethoxymethyl; Formyl, -CH₂-CHO, -(CH₂)₂-CHO, -CH₂-CO-CH₃, -CH₂-CO-CH₂CH₃, -CH₂-CO-CH(CH₃)₂, -(CH₂)₂-CO-CH₃, -(CH₂)₂-CO-CH₂CH₃, -(CH₂)₂-CO-CH(CH₃)₂, -CH₂-CO₂CH₃, -CH₂-CO₂CH₂CH₃, -CH₂-CO₂CH(CH₃)₂, -(CH₂)₂-CO₂CH3, -(CH₂)₂CO₂CH₂CH₃, -(CH₂)₂-CO₂CH(CH₃)₂, -CH₂-CO-CF₃, -CH₂-CO-CCl₃, -CH₂-CO-CH₂CF₃, -CH₂-CO-CH₂CCl₃, -(CH₂)₂-CO-CH₂CF₃, -(CH₂)₋CO-CH₂CCl₃, -CH₂-CO₂CH₂CF₃, -CH₂-CO₂CF₂CF₃, -CH₂CO₂CH₂CCl₃, -CH₂-CO₂CCl₂CCl₃, -(CH₂-CO₂CH₂CF₃, -(CH₂)₂-CO₂CF₂CF₃, -(CH₂)₂-CO₂CH₂CCl₃, -(CH₂)₂-CO₂CCl₂CCl₃; Methylcarbonyl, Ethylcarbonyl, n-Prapylcarbonyl, iso-Propylcarbonyl, tert-Butylcarbonyl, Methoxycarbonyl, Ethoxycarbonyl, tert-Butoxycarbonyl, Cyclopropylcarbonyl; Trifluorme- thylcarbonyl, Trifluormethoxycarbonyl, oder -C(=O)C(=O)R⁴, -CONR⁵R⁶ oder -CH₂NR⁷R⁸.
- R^{A}: steht ganz besonders bevorzugt für Methyl, Methoxymethyl, Formyl, -CH₂-CHO, -(CH₂)₂-CHO, -CH₂-CO-CH₃, -CH₂-CO-CH₂CH₃, -CH₂-CO-CH(CH₃)₂. -C(=O)CHO, -C(=O)C(=O)CH₃, -C(=O)C(=O)CH₂OCH₃, -C(=O)CO₂CH₃, -C(=O)CO₂CH₂CH₃-
- X²: steht bevorzugt für Chlor oder Brom.

Halogenide der Formel (IV) sind bekannt.

### Reaktionsbedingungen

Als Verdünnungsmittel zur Durchführung des erfindungsgemäßen Verfahrens (a) kommen alle inerten organischen Lösungsmittel in Betracht. Hierzu gehören vorzugsweise aliphatische, alicyclische oder aromatische Kohlenwasserstoffe, wie beispielsweise Petrolether, Hexan, Heptan, Cyclohexan, Methylcyclohexan, Benzol, Toluol, Xylol oder Decalin; halogenierte Kohlenwasserstoffe, wie beispielsweise Chlorbenzol, Dichlorbenzol, Dichlormethan, Chloroform, Tetrachlormethan, Dichlorethan oder Trichlorethan; Ether, wie Diethylether, Diisopropylether, Methyl-t-butylether, Methyl-tert-Amylether, Dioxan, Tetrahydrofuran, 1,2-Dimethoxyethan, 1,2-Diethoxyethan oder Anisol oder Amide, wie N,N-Dimethylformamid, N,N-Dimethylacetamid, N-Methylformanilid, N-Methylpyrrolidon oder Hexamethylphosphorsäuretriamid.

Das erfindungsgemäße Verfahren (a) wird gegebenenfalls in Gegenwart eines geeigneten Säureakzeptors durchgeführt. Als solche kommen alle üblichen anorganischen oder organischen Basen infrage. Hierzu gehören vorzugsweise Erdalkalimetall- oder Alkalimetallhydride, -hydroxide, -amide, -alkoholate, -acetate, -carbonate oder -hydrogencarbonate, wie beispielsweise Natriumhydrid, Natriumamid, Natrium-methylat, Natrium-ethylat, Kalium-tert.-butylat, Natriumhydroxid, Kaliumhydroxid, Ammoniumhydroxid, Natriumacetat, Kaliumacetat, Calciumacetat, Ammoniumacetat, Natriumcarbonat, Kaliumcarbonat, Kaliumhydrogencarbonat, Natriumhydrogencarbonat oder Ammoniumcarbonat, sowie tertiäre Amine, wie Trimethylamin, Triethylamin, Tributylamin, N,N-Dimethylanilin, N,N-Dimethyl-benzylamin, Pyridin, N-Methylpiperidin, N-Methylmorpholin, N,N-Dimethylaminopyridin, Diazabicyclooctan (DABCO), Diazabicyclononen (DBN) oder Diazabicycloundecen (DBU).

Das erfindungsgemäße Verfahren (a) wird gegebenenfalls in Gegenwart eines geeigneten Kondensationsmittels durchgeführt. Als solche kommen alle üblicherweise für derartige Amidierungsreaktionen verwendbaren Kondensationsmittel infrage. Beispielhaft genannt seien Säurehalogenidbildner wie Phosgen, Phosphortribromid, Phosphortrichlorid, Phosphorpentachlorid, Phosphoroxychlorid oder Thionylchlorid; Anhydridbildner wie Chlorameisensäureethylester, Chlorameisensäuremethylester, Chlorameisensäureisopropylester, Chlorameisensäureisobutylester oder Methansulfonylchlorid; Carbodiimide, wie N,N-Dicyclohexylcarbodiimid (DCC) oder andere übliche Kondensationsmittel, wie Phosphorpentoxid, Polyphosphorsäure, N,N-Carbonyldümidazol, 2-Ethoxy N-ethoxycarbonyl-1,2-dihydrochinolin (EEDQ), Triphenylphosphin/Tetrachlorkohlenstoff oder Brom-tripyrrolidinophosphonium-hexafluorophosphat.

Das erfindungsgemäße Verfahren (a) wird gegebenenfalls in Gegenwart eines Katalysators durchgeführt. Beispielsweise genannt seien 4-Dimethylaminopyridin, 1-Hydroxy-benzotriazol oder Dimethylformamid.
Die Reaktionstemperaturen können bei der Durchführung des erfindungsgemäßen Verfahrens (a) in einem größeren Bereich variiert werden. Im allgemeinen arbeitet man bei Temperaturen von 0°C bis 150°C, vorzugsweise bei Temperaturen von 0°C bis 80°C.

Zur Durchführung des erfindungsgemäßen Verfahrens (a) zur Herstellung der Verbindungen der Formel (I) setzt man pro mol des Carbonsäure-Derivates der Formel (II) im allgemeinen 0,2 bis 5 mol, vorzugsweise 0,5 bis 2 mol an Anilin-Derivat der Formel (III) ein.

Als Verdünnungsmittel zur Durchführung des erfindungsgemäßen Verfahrens (b) kommen alle inerten organischen Lösungsmittel in Betracht. Hierzu gehören vorzugsweise aliphatische, alicyclische oder aromatische Kohlenwasserstoffe, wie beispielsweise Petrolether, Hexan, Heptan, Cyclohexan, Methylcyclohexan, Benzol, Toluol, Xylol oder Decalin; halogenierte Kohlenwasserstoffe, wie beispielsweise Chlorbenzol, Dichlorbenzol, Dichlormethan, Chloroform, Tetrachlormethan, Dichlorethan oder Trichlorethan; Ether, wie Diethylether, Diisopropylether, Methyl-tert-butylether, Methyl-tert-Amylether, Dioxan, Tetrahydrofuran, 1,2-Dimethoxyethan, 1,2-Diethoxyethan oder Anisol oder Amide, wie N,N-Dimethylformamid, N,N-Dimethylacetamid, N-Methylformanilid, N-Methylpyrrolidon oder Hexamethylphosphorsäuretriamid.

Das erfindungsgemäße Verfahren (b) wird in Gegenwart einer Base durchgeführt. Als solche kommen alle üblichen anorganischen oder organischen Basen infrage. Hierzu gehören vorzugsweise Erdalkalimetall- oder Alkalimetallhydride, -hydroxide, -amide, -alkoholate, -acetate, -carbonate oder -hydrogencarbonate, wie beispielsweise Natriumhydrid, Natriumamid, Natrium-methylat, Natrium-ethylat, Kalium-tert.-butylat, Natriumhydroxid, Kaliumhydroxid, Ammoniumhydroxid, Natriumacetat, Kaliumacetat, Calciumacetat, Ammoniumacetat, Natriumcarbonat, Kaliumcarbonat, Kaliumhydrogencarbonat, Natriumhydrogencarbonat oder Caesiumcarbonat, sowie tertiäre Amine, wie Trimethylamin, Triethylamin, Tributylamin, N,N-Dimethylanilin, N,N-Dimethyl-benzylamin, Pyridin, N-Methylpiperidin, N-Methylmorpholin, N,N-Dimethylaminopyridin, Diazabicyclooctan (DABCO), Diazabicyclononen (DBN) oder Diazabicycloundecen (DBU).

Die Reaktionstemperaturen können bei der Durchführung des erfindungsgemäßen Verfahrens (b) in einem größeren Bereich variiert werden. Im allgemeinen arbeitet man bei Temperaturen von 0°C bis 150°C, vorzugsweise bei Temperaturen von 20°C bis 110°C.

Zur Durchführung des erfindungsgemäßen Verfahrens (b) zur Herstellung der Verbindungen der Formel (I) setzt man pro Mol des Isopentylcarboxanilids der Formel (I-a) im allgemeinen 0,2 bis 5 Mol, vorzugsweise 0,5 bis 2 Mol an Halogenid der Formel (IV) ein.
Wenn nicht anders angegeben, werden alle erfindungsgemäßen Verfahren im Allgemeinen unter Normaldruck durchgeführt. Es ist jedoch auch möglich, unter erhöhtem oder vermindertem Druck - im Allgemeinen zwischen 0,1 bar und 10 bar- zu arbeiten.

Die erfindungsgemäßen Stoffe weisen eine starke mikrobizide Wirkung auf und können zur Bekämpfung von unerwünschten Mikroorganismen, wie Fungi und Bakterien, im Pflanzenschutz und im Materialschutz eingesetzt werden.

Fungizide lassen sich Pflanzenschutz zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz zur Bekämpfung von Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:
Xanthomonas-Arten, wie beispielsweise Xanthomonas campestris pv. oryzae;
Pseudomonas-Arten, wie beispielsweise Pseudomonas syringae pv lachrymans;
Erwinia-Arten, wie beispielsweise Erwinia amylovora;
Pythium-Arten, wie beispielsweise Pythium ultimum;
Phytoplithora-Arten, wie beispielsweise Phytophthora infestans;
Pseudoperonospora-Arten, wie beispielsweise Pseudoperonospora humuli oder Pseudoperonospora cubensis;
Plasmopara-Arten, wie beispielsweise Plasmopara viticola;
Bremia-Arten, wie beispielsweise Bremia lactucae;
Peronospora-Arten, wie beispielsweise Peronospora pisi oder P. brassicae;
Erysiphe-Arten, wie beispielsweise Erysiphe graminis;
Sphaerotheca-Arten, wie beispielsweise Sphaerotheca fuliginea;
Podosphaera-Arten, wie beispielsweise Podosphaera leucotricha;
Venftuia-Arten, wie beispielsweise Venturia inaequalis;
Pyrenophora-Arten, wie beispielsweise Pyrenophora teres oder P. graminea
(Konidienform: Drechslera, Syn: Helminthosporium);
Cochliobolus-Arten, wie beispielsweise Cochliobolus sativus
(Konidienform: Drechslera, Syn: Helminthosporium);
Uromyces-Arten, wie beispielsweise Uromyces appendiculatus;
Puccinia-Arten, wie beispielsweise Puccinia recondita;
Selerotinia-Arten, wie beispielsweise Sclerotinia sclerotiorum;
Tilletia-Arten, wie beispielsweise Tilletia caries;
Ustilago-Arten, wie beispielsweise Ustilago nuda oder Ustilago avenae;
Pellicularia-Arten, wie beispielsweise Pellicularia sasakii;
Pyricularia-Arten, wie beispielsweise Pyricularia oryzae;
Fusarium-Arten, wie beispielsweise Fusarium culmorum;
Botrytis-Arten, wie beispielsweise Botrytis cinerea;
Septoria-Arten, wie beispielsweise Septoria nodorum;
Leptosphaeria-Arten, wie beispielsweise Leptosphaeria nodorum;
Cercospora-Arten, wie beispielsweise Cercospora canescens;
Alternaria-Arten, wie beispielsweise Alternaria brassicae;
Pseudocercosporella-Arten, wie beispielsweise Pseudocercosporella herpotrichoides; Rhizoctonia-Arten, wie beispielsweise Rhizoctonia solani.

Die erfindungsgemäßen Wirkstoffe weisen auch eine starke stärkende Wirkung in Pflanzen auf. Sie eignen sich daher zur Mobilisierung pflanzeneigener Abwehrkräfte gegen Befall durch unerwünschte Mikroorganismen.

Unter pflanzenstärkenden (resistenzinduzierenden) Stoffen sind im vorliegenden Zusammenhang solche Substanzen zu verstehen, die in der Lage sind, das Abwehrsystem von Pflanzen so zu stimulieren, dass die behandelten Pflanzen bei nachfolgender Inokulation mit unerwünschten Mikroorganismen weitgehende Resistenz gegen diese Mikroorganismen entfalten.

Unter unerwünschten Mikroorganismen sind im vorliegenden Fall phytopathogene Pilze, Bakterien und Viren zu verstehen. Die erfindungsgemäßen Stoffe können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im allgemeinen von 1 bis 10 Tage, vorzugsweise 1 bis 7 Tage nach der Behandlung der Pflanzen mit den Wirkstoffen.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Dabei lassen sich die erfindungsgemäßen Wirkstoffe mit besonders gutem Erfolg zur Bekämpfung von Getreidekrankheiten, wie beispielsweise gegen Puccinia-Arben und von Krankheiten im Wein-, Obst- und Gemüseanbau, wie beispielsweise gegen Botrytis-, Venturia- oder Alternaria-Arten, einsetzen.

Die erfindungsgemäßen Wirkstoffe eignen sich auch zur Steigerung des Ernteertrages. Sie sind außerdem mindertoxisch und weisen eine gute Pflanzenverträglichkeit auf.

Die erfindungsgemäßen Wirkstoffe können gegebenenfalls in bestimmten Konzentrationen und Aufwandmengen auch als Herbizide, zur Beeinflussung des Pflanzenwachstums, sowie zur Bekämpfung von tierischen Schädlingen verwendet werden. Sie lassen sich gegebenenfalls auch als Zwischen- und Vorprodukte für die Synthese weiterer Wirkstoffe einsetzen.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Im Materialschutz lassen sich die erfindungsgemäßen Stoffe zum Schutz von technischen Materialien gegen Befall und Zerstörung durch unerwünschte Mikroorganismen einsetzen.

Unter technischen Materialien sind im vorliegenden Zusammenhang nichtlebende Materialien zu versehen, die für die Verwendung in der Technik zubereitet worden sind. Beispielsweise können technische Materialien, die durch erfindungsgmnäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Wärmeübertragungsflüssigkeiten genannt, besonders bevorzugt Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten) sowie gegen Schleimorganismen und Algen.

Es seien beispielsweise Mikroorganismen der folgenden Gattungen genannt:
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Die Wirkstoffe können in Abhängigkeit von ihren jeweiligen physikalischen und/ oder chemischen Eigenschaften in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Bims, Marmor, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier und/oder schaumerzeugende Mittel kommen infrage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwickiungen vorzubeugen. In vielen Fällen erhält man dabei synergistische Effekte, d.h. die Wirksamkeit der Mischung ist größer als die Wirksamkeit der Einzelkomponenten.

Als Mischpartner kommen zum Beispiel folgende Verbindungen infrage:

### Fungizide:

2-Phenylphenol; 8-Hydroxychinolinsulfat; Acibenzolar-S-methyl; Aldimorph; Amidoflumet; Ampropylfos; Ampropylfos-potassium; Andoprim; Anilazine; Azaconazole; Azoxystrobin; Benalaxyl; Benalaxyl-M; Benodanil; Benomyl; Benthiavalicarb-isopropyl; Benzamacril; Benzamacril-isobutyl; Bilanafos; Binapacryl; Biphenyl; Bitertanol; Blasticidin-S; Bromuconazole; Bupirimate; Buthiobate; Butylamin; Calcium polysulfide; Capsimycin; Captafol; Captan; Carbendazim; Carboxin; Carpropamid; Carvone; Chinomethionat; Chlobenthiazone; Chlorfenazole; Chloroneb; Chlorothalonil; Chlozolinate; Clozylacon; Cyazofamid; Cyflufenamid; Cymoxanil; Cyproconazole; Cyprodinil; Cyprofuram; Dagger G; Debacarb; Dichlofluanid; Dichlone; Dichlorophen; Diclocymet; Diclomezine; Dicloran; Diethofencarb; Difenoconazole; Diflumetorim; Dimethirimol; Dimethomorph; Dimoxystrobin; Diniconazole; Diniconazole-M; Dinocap; Diphenylamine; Dipyrithione; Ditalimfos; Dithianon; Dodine; Drazzoxolon; Edifenphos; Epoxiconazole; Ethaboxam; Ethirimol; Etridiazole; Famoxadone; Fenamidone; Fenapanil; Fenarimol; Fenbuconazole; Fenfuram: Fenhexamid; Fenitropan; Fenoxanil; Fenpiclonil; Fenpropidin; Fenpropimorph; Ferbam; Fluazinam; Flubenzimine; Fludioxonil; Flumetover, Flumorph; Fluoromide; Fluoxastrobin; Fluquinconazole; Flurprimidol; Flusilazole; Flusulfamide; Flutolanil; Flutriafol; Folpet; Fosetyl-Al; Fosetyl-sodium; Fuberidazole; Furalaxyl; Furametpyr; Furcarbanil; Furmecyclox; Guazatine; Hexachlorobenzene; Hexaconazole; Hymexazol; Imazalil; Imibenconazole; Iminoctadine triacetate; Iminoctadine tris(albesil; Iodocarb; Ipconazole, Iprobenfos; Iprodione; Iprovalicarb; Irumamycin; Isoprothiolane; Isovaledione; Kasugamycin; Kresoxim-methyl; Mancozeb; Maneb; Meferimzone; Mepanipyrim; Mepronil; Metalaxyl; Metalaxyl-M; Metconazole; Methasulfocarb; Methfuroxam; Metiram; Metominostrobin; Metsulfovax; Mildiomycin; Myclobutanil; Myclozolin; Natamycin; Nicobifen; Nitrothal-iso. propyl, Noviflumuron; Nuarimol; Ofurace; Orysastrobin; Oxadixyl; Oxolinic acid; Oxpoconaxole; Oxycarboxin; Oxyfenthiin; Paclobutrazol; Pefurazoate; Penconazole; Pencycuron; Phosdiphen; Phthalide; Picoxystrobin; Piperalin; Polyoxins; Polyoxorim; Probenazole; Prochloraz; Procymidone; Propamocarb; Propanosine-sodium; Propiconazole; Propineb; Proquinazid; Prothioconazole; Pyraclostrobin; Pyrazophos; Pyrifenox; Pyrimethanil; Pyroquilon; Pyroxyfur, Pyrrolnitrine; Quinconazole; Quinoxyfen; Quintozene; Simeconazole; Spiroxamine; Sulfur, Tebuconazol; Tecloftalam; Tecnazene; Tetcyclacis; Tetraconazole; Thiabendazole; Thicyofen; Thifluzamide; Thiophanate-methyl; Thiram; Tioxymid; Tolclofosmethyl; Tolylfluanid; Triadimefon; Triadimenol; Triazbutil; Triazolide; Tricyclamide; Tricyclazole; Tridemorph; Trifloxystrobin, Triflumizole; Triforine; Triticonazole; Uniconazole; Validamycin A; Vinclozolin; Zineb; Ziram; Zoxamide; (2S)N-[2-[4-[[3-(4-Chlorphenyl)2-propinyl]oxy]-3-methoxyphenyl]ethyl]-3-methyl-2-[(methylsulfonyl)amino]-butanamid; 1-(1-Naphthalenyl)-1H-pyrrol-2,5-dion; 2,3,5,6-Tetrachlor-4-(methylsulfonyl)-pyridin; 2-Amino-4-methyl-N-phenyl-5-thiazolcarboxamid; 2-Chlor-N-(2,3-dihydro-1,1,3-trimethyl-1H-inden-4-yl)-3-pyridincarboxamide; 3,4,5-Trichlor-2,6-pyridindicarbonitril; Actinovate; cis-1-(4-Chlorphenyl)-2-(1H-1,2,4-triazol-1-yl)-cycloheptanol; Methyl 1-(2,3-dihydro-2,2-dimethyl-1H-inden-1-yl)-1H-imidazol-5-carboxylat; Monokaliumcarbonat; N-(6-Methoxy-3-pyridinyl)-cyclopropancarboxamid; N-Butyl-8-(1,1-dimethylethyl)-1-oxaspiro[4.5]decan-3-amin; Natriumtetrathiocarbonat; sowie Kupfersalze und -zubereitungen, wie Bordeaux mixture; Kupferhydroxid; Kupfemaphthenat; Kupferoxychlorid; Kupfersulfat; Cufraneb; Kupferoxid; Mancopper; Oxine-copper.

### Bakterizide:

Bronopol, Dichlorophen, Nitrapyrin, Nickel-dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

*1. Acetylcholinesterase (ACHE) Inhibitoren*
   1.1 Carbamate (z.B. Alanycarb, Aldicarb, Aldoxycarb, Allyxycarb, Aminocarb, Azamethiphos, Bendiocarb, Benfuracarb, Bufencarb, Butacarb, Butocarboxim, Butoxycarboxim, Carbaryl, Carbofuran, Carbosulfan, Chloethocarb, Coumaphos, Cyanofenphos, Cyanophos, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Triazamate, Trimethacarb, XMC, Xylylcarb)
   1.2 Organophosphate (z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methytsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, lodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion)
*2. Natriwn-Kanal-Modulatoren* /*Spannungsabhängige Natrium-Kanal-B*/*ocker*
   2.1 Pyrethroide (z.B. Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, DDT, Deltamethrin, Empenthrin (IR-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (IR-isomer), Tralomethrin, Transfluthrin, ZXI 8901, Pyrethrins (pyrethrum))
   2.2 Oxadiazine (z.B. Indoxacarb)
*3. Acetylcho*/*in-Rezeptor-Agonisten*/*-Antagonisten*
   3.1 Chloronicotinyle/Neonicotinoide (z.B. Acetamiprid, Clothianidin, Dinotefuran, Imidacloprid, Nitenpyram, Nithiazine, Thiacloprid, Thiamethoxam)
   3.2 Nicotine, Bensultap, Cartap
*4. Acetylcholin-Rezeptor-Modulatoren*
   4.1 Spinosyne (z.B. Spinosad)
*5. GABA-gesteuerte Chlorid-Kanal-Antagonisten*
   5.1 Cyclodiene Organochlorine (z.B. Camphechlor, Chlordane, Endosulfan, Gamma-HCH. HCH, Heptachlor, Lindane, Methoxychlor)
   5.2 Fiprole (z.B. Acetoprole, Ethiprole, Fipronil, Vaniliprole)
*6. Chlorid-Kanal-Aktivatoren*
   6.1 Mectine (z.B. Abamectin, Avermectin, Emamectin, Emamectin-benzoate, Ivermectin, Milbemectin, Milbemycin)
*7. Juvenilhormon-Mimetika*
   (z.B. Diofenolan, Epofenonane, Fenoxycarb, Hydroprene, Kinoprene, Methoprene, Pyriproxifen, Triprene)
*8. Ecdysonagonisten*/*disruptoren*
   8.1 Diacylhydrazine (z.B. Chromafenozide, Halofenozide, Methoxyfenozide, Tebufenozide)
9. *Inhibitoren der Chitinbiosynthese*
   9.1 Benzoylharnstoffe (z.B. Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron)
   9.2 Buprofezin
   9.3 Cyromazine
*10. Inhibitoren der oxidativen Phosphorylierung, ATP-Disruptoren*
   10.1 Diafenthiuron
   10.2 Organotine (z.B. Azocyclotin, Cyhexatin, Fenbutatin-oxide)
11. *Entkoppler der oxidativen Phoshorylierung durch Unterbrechung des H-Protongradienten*
   11.1 Pyrrole (z.B. Chlorfenapyr)
   11.2 Dinitrophenole (z.B. Binapacyrl, Dinobuton, Dinocap, DNOC)
*12. Seite-I-Elektronentransportinhibitoren*
   12.1 METTs (z.B. Fenazaquin, Fenpyroximate, Pyrimidifen, Pyridaben; Tebufenpyrad, Tolfenpyrad)
   12.2 Hydramethylnone
   12.3 Dicofol
13. *Seite-II-Elektronentransportinhibitoren*
   13.1 Rotenone
*14. Seite-III-Elektronentransportinhibitoren*
   14.1 Acequinocyl, Fluacrypyrim
*15. Mikrobielle Disruptoren der Insektendarmmembran*
   Bacillus thuringiensis-Stämme
*16. Inhibitoren der Fettsynthese*
   16.1 Tetronsäuren (z.B. Spirodiclofen. Spiromesifen)
   16.2 Tetramsäuren [z.B. 3-(2,5-Dimethylphenyl)-8-methoxy-2-oxo-1-azapiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azaspiro[4.5]dec-3-en-4-yl ethyl ester (CAS-Reg.-No.: 203313-25-1)]
*17. Carboxamide*
   (z.B. Flonicamid)
*18. Oktopaminerge Agonisten*
   (z.B. Amitraz)
*19. Inhibitoren der Magnesium-stimulierten ATPase*
   (z.B. Propargite)
*20. Phthalamide*
   (z.B. N²-[1,1-Dimethyl-2-(methylsulfonyl)ethyl]-3-iod-N'-[2-methyl-4-[1,2,2,2-tetrafluor-1-(trifluormethyl)ethyl]phenyl]-1,2-benzenedicarboxamide (CAS-Reg.-No.: 272451-65-7), Flubendiamide)
*21. Nereistoxin-Analoge*
   (z.B. Thiocyclam hydrogen oxalate, Thiosultap-sodium)
*22. Biologika, Hormone oder Pheromone*
   (z.B. Azadirachtin, Bacilius spec., Beauveria spec., Codlemone, Metarrhizium spec., Paecilomyces spec., Thuringiensin, Verticillium spec.)
*23. Wirkstoffe mit unbekannten oder nicht spezifischen Wirkmechanismen*
   23.1 Begasungsmittel (z.B. Aluminium phosphide, Methyl bromide, Sulfuryl fluoride)
   23.2 Selektive Fraßhemmer (z.B. Cryolite, Flonicamid, Pymetrozine)
   23.3 Milbenwachstumsinhibitoren (z.B. Clofentezine, Etoxazole, Hexythiazox)
   23.4 Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin,
ferner die Verbindung 3-Methyl-phenyl-propylcarbamat (Tsumacide Z), die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pftanzenextrakte, Nematoden, Pilze oder Viren enthalten.

Auch eine Mischung mit anderen bekannten Wirkstoffen, wie Herbiziden oder mit Düngemitteln und Wachstumsregulatoren, Safener bzw. Semiochemicals ist möglich.

Darüber hinaus weisen die erfindungsgemäßen Verbindungen der Formen (I) auch sehr gute antimykotische Wirkungen auf. Sie besitzen ein sehr breites antimykotisches Wirkungsspektrum, insbesondere gegen Dermatophyten und Sprosspilze, Schimmel und diphasische Pilze (z.B. gegen Candida-Spezies wie Candida albicans, Candida glabrata) sowie Epidermophyton floccosum, Aspergillus-Spezies wie Aspergillus niger und Aspergillus fumigatus, Trichophyton-Spezies wie Trichophyton mentagrophytes, Microsporon-Spezies wie Microsporon canis und audouinii. Die Aufzählung dieser Pilze stellt keinesfalls eine Beschränkung des erfassbaren mykotischen Spektrums dar, sondern hat nur erläuternden Charakter.

Die Wirkstoffe können als solche, in Form ihrer Formulierungen oder den daraus bereiteten Anwendungsformen, wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Beim Einsatz der erfindungsgemäßen Wirkstoffe als Fungizide können die Aufwandmengen je nach Applikationsart innerhalb eines größeren Bereiches variiert werden. Bei der Behandlung von Pflanzenteilen liegen die Aufwandmengen an Wirkstoff im allgemeinen zwischen 0,1 und 10.000 g/ha, vorzugsweise zwischen 10 und 1.000 g/ha. Bei der Saatgutbehandlung liegen die Aufwandmengen an Wirkstoff im allgemeinen zwischen 0,001 und 50 g pro Kilogramm Saatgut vorzugsweise zwischen 0,01 und 10g pro Kilogramm Saatgut. Bei der Behandlung des Bodens liegen die Aufwandmengen an Wirkstoff im allgemeinen zwischen 0,1 und 10.000 g/ha, vorzugsweise zwischen 1 und 5.000 g/ha.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutern.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein.

Je nach Pflanzenarten bzw. Pflanzensorten, deren Standort und Wachstumsbedingungen (Böden, Klima, Vegetationsperiode, Ernährung) können durch die erfindunasgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Emährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Tabak, Raps sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirstoffen, z.B. Imidazolinonen, Sulfonylharnstoffen, Glyphosate oder Phosphinotricin (z.B. "PAT"-Gen). Die jeweils die gewünschten EigenschaRen ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucoton® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Verbindungen der allgemeinen Formel (I) bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Fflanzenbehandlung mit den im vorliegenden Text speziell aufgeführten Verbindungen bzw. Mischungen.

Die Herstellung und die Verwendung der erfindungsgemäßen Wirkstoffe, geht aus den folgenden Beispielen hervor.

### Herstellungsbeispiele

### Beispiel 1*

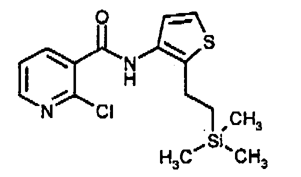

Zu einer Lösung bestehend aus 240 mg (1.2 mmol) 2-[2-(Trimethylsilyl)ethyl]thiophen-3-amin in 15 ml Acetonitril werden 183 mg (1.3 mmol) Kaliumcarbonate und 443 mg (2.1 mmol) 2-Chlornicotinoylchlorid gegeben. Nach 16 h bei Raumtemperatur wird die Reaktionsmischung auf Wasser gegeben, mit Essigsäureethylester extrahiert, über Natriumsulfat getrocknet und im Vakuum aufkonzentriert. Säulenchromatographie (Gradient Cyclobexan/Essigsäureethylester) liefert 100 mg (24% der Theorie) an 2-Chlor-N-{2-[2-(trimethylsilyl)ethyl]-3-thienyl}nicotinamid [log P (pH 2.3) = 3.65].

Analog Beispiel 1 sowie entsprechend den Angaben in den allgemeinen Verfahrensbeschreibungen, werden die in der nachstehenden Tabelle 1 genannten Verbindungen der Formel (T) erhalten, wobei die mit einen Stern (*) gekennzeichneten Beispiele nicht-erfindungsgemäß sind.

**Tabelle 1**

| | | | | | |
|---|---|---|---|---|---|
| 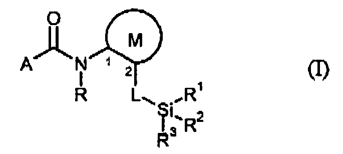 | | | | | |
| 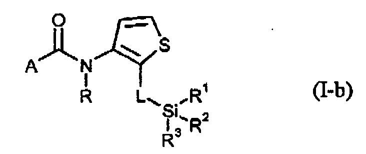 | | | | | |

| **Bsp.** | **A** | **M^{a)}** | **R** | **L-Si(R¹R²R³)** | **logP (pH 2.3)** |
|---|---|---|---|---|---|
| 2* | 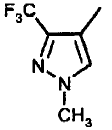 | 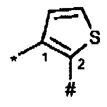 | H | -(CH₂)₂₋Si(CH₃)₃ | 3.85 |
| 3* | 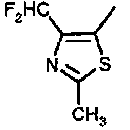 | 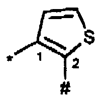 | H | -(CH₂)₂-Si(CH₃)₃ | 4.01 |
| 4* | 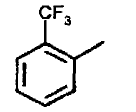 | 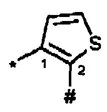 | H | -(CH₂)₂-Si(CH₃)₃ | 4.38 |
| 5* | 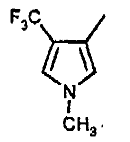 | 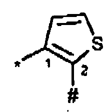 | H | -(CH₂)₂-Si(CH₃)₃ | 4.13 |
| 6* | 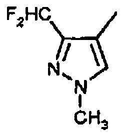 | 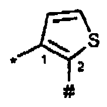 | H | -(CH₂)₂-Si(CH₃)₃ | 3.66 |
| 7* | 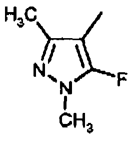 | 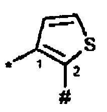 | H | -((CH₂)₂-Si(CH₃)₃ | 3.69 |
| 8* | 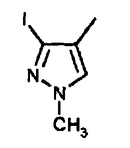 | 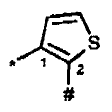 | H | -(CH₂)₂-Si(CH₃)₃ | 3.72 |
| 9 | 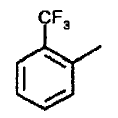 | 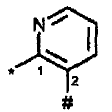 | H | -(CH₂)₂-Si(CH₃)₃ | 3.17 |
| 10 | 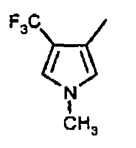 | 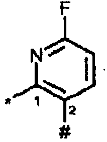 | H | -(CH₂)₂-Si(CH₃)₃ | 3.28 |
| 11 | 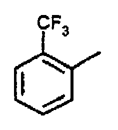 | 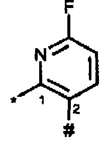 | H | -(CH₂)₂-Si(CH₃)₃ | 3.78 |
| 12 | 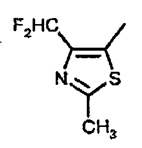 | 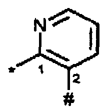 | H | -(CH₂)₂-Si(CH₃)₃ | 3.78 |
| 13 | 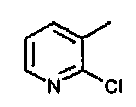 | 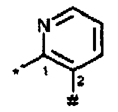 | H | -(CH₂)₂Si(CH₃)₃ | 2.32 |
| 14* | 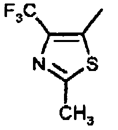 | 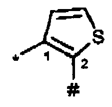 | H | -(CH₂)₂-Si(CH₃)₃ | 4.29 |
| 15 | 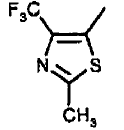 | 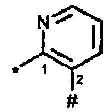 | H | -(CH₂)₂-Si(CH₃)₃ | 3.68 |

| | | | | | |
|---|---|---|---|---|---|
| a) Die mit "*" markierte Bindung ist mit dem Amid, die mit "#" markierte Bindung mit dem Rest Z verknüpft. | | | | | |

### Herstellung von Ausgangsstoffen der Formel (VI)

### Beispiel VI-1

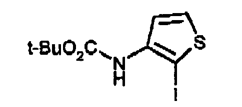

Bei -78°C werden 7.8 ml n-BuLi (1.6 M in Hexan, 0.013 mol) unter Argonatmosphäre zu einer Lösung bestehend aus 5.0 g (0.025 mol) tert-Butyl-N-(3-thienyl)carbamat in 50 ml THF getropft. Nach 30 min. bei -78°C wird die Reaktionsmischung auf -10°C erwärmt und mit einer Lösung bestehend aus 7.6 g (0.030 mol) Iod in 20 ml of THF versetzt. Nach einer Stunde bei -10°C wird die Reaktionsmischung auf Raumtemperatur erwärmt, auf Wasser gegossen, mit Essigsäureethylester extrahiert, über Natriumsulfat getrocknet und im Vakuum aufkonzentriert. Säulenchromatographie (Cyclohexan/Essigsäureethylester 10:1) liefert 4.8 g (59 % der Theorie) (2-Iod-thiophen-3-yl)- *tert-*butoxy carbamat.
¹H-NMR (CD₃CN) : δ = 1.48 (s, 9H), 6.87 (s breit, 1H), 7.22 (d, 1H), 7.55 (d, 1H) ppm.

### Herstellung von Ausgansstoffen der Formel (VIII)

### Beispiel (VIII-1)

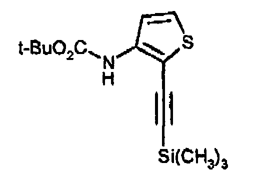

Unter Schutzgas (Argon) werden 4.8 g (0.015 mol) (2-Iodo-thiophen-3-yl)- tert-butoxyearbamat (VI-1) in 50 ml Triethylamin gelöst und mit 622 mg (0.89 mmol) Bis(triphenylphosphin)palladium (II)chlorid, 169 mg (0.89 mmol) Kupfer(I)iodid und 2.2 g (0.022 mmol) Trimethylsilylacetylen versetzt Die Reaktionsmischung wird 14 h bei Raumtemperatur gerührt, anschließen auf Wasser gegeben, mit Essigsäureethylester extrahiert, über Natriumsulfat getrocknet und im Vakuum aufkonzentriert. Säulenchromatographie (Cyclohexan/Essigsäureethylester 10:1) liefert 3.7 g (84% der Theorie) *tert*-Butyl-{2-[(trimethylsilyl)ethinyl]-3-thienyl}carbamat.
¹H-NMR (CD₃CN) : δ= 0.06 (s, 9H), 1.31 (s, 9H), 7.08 (s breit, 1H), 7.10 (d, 1H), 7.30 (d,1H) ppm.

### Herstellung von Ausgansstoffen der Formel (IX)

### Beispiel (IX-1)

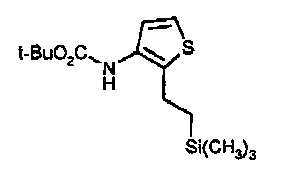

In einem Autoklav wird eine Reaktionsmischung bestehend aus 2.9 g (9.8 mmol) *tert*-Butyl-{2-[(trimethylsilyl)ethinyl]-3-thienyl}carbamat (VIII-1) in 50 ml Methanol und 800 mg Palladium (5% auf Kohle) für 10 h unter 8 bar Wasserstoff hydriert und nach Zugabe weiterer 800 mg Palladium (5% auf Kohle) für weitere 10 h (8 bar Wassetstoff. Die Reaktionsmischung wird über Silicagel filtriert und im Vakuum aufkonzentriert, was 2.8 g (95 % der Theorie) [2-(2-Trimethylsilanyl-ethyl)-thiophen-3-yl]-tert-butoxycarbamat liefert.
¹H-NMR (CD₃CN). δ = 0.04 (s, 9H), 0.85-0.90 (m, 2H), 2.64-2.70 (m, 2H), 1.49 (s, 9H), 6.89 (s breit, 1H), 7.02-7.06 (m, 2H) ppm.

### Herstellung von Ausgansstoffen der Formel (III)

### Beispiel (III-1)

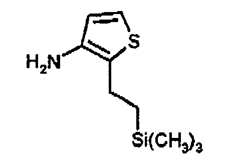

Zu einer Lösung bestehend aus 2.8 g (9.3 mmol) [2-(2-Trimethylsilanyl-ethyl)-thiophen-3-yl]-*tert-*butoxycarbamat (IX-1) in 50 ml Dichlormethan werden 5 ml Trifluoressigsäure gegeben. Die Reaktionslösung wird 3 h bei Raumtemperatur gerührt und anschließend im Vakuum aufkonzentriert. Säulenchromatographie (Gradiant Cyclohexane/Essigsäureethylester 4:1 nach 1:1) liefert 1.2 g (65 % der Theorie) 2-(2-Trimethylsilanyl-ethyl)-thiophen-3-ylamin [log P (pH 2.3) = 1.78].

Die Bestimmung der angegebenen logP-Werte erfolgte gemäß EEC-Directive 79/831 Annex V.A8 durch HPLC (High Performance Liquid Chromatography) an einer Phasenumkehrsäule (C 18). Temperatur: 43°C. Eluenten für die Bestimmung im sauren Bereich (pH 2,3): 0,1 % wässrige Phosphorsäure, Acetonitril; linearer Gradient von 10 % Acetonitril bis 90 % Acetonitril. Die Eichung erfolgte mit unverzweigten Alkan-2-onen (mit 3 bis 16 Kohlenstoffatomen), deren Log-werte bekannt sind (Bestimmung der LogP-Werte anhand der Retentionszeiten durch lineare Interpolation zwischen zwei aufeinanderfolgenden Alkanonen). Die lamöda-max-Werte wurden an Hand der UV-Spektren von 200 nm bis 400 nm in den Maxima der chromatographischen Signale ermittelt.

### Anwendungsbeispiele

### Beispiel A

### Podosphaera-Test (Apfel) / protektiv

| | | |
|---|---|---|
| Lösungsmittel: | 24,5 | Gewichtsteile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wässrigen Sporensuspension des Apfelmehltauerregers *Podosphaera leucotricha* inokuliert. Die Pflanzen werden dann im Gewächshaus bei ca. 23°C und einer relativen Luftfeuchtigkeit von ca. 70 % aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

**Tabelle A**

| **Podosphaera-Test (Apfel) / protektiv** | | |
|---|---|---|
| Wirkstoff Nicht erfindungsgemäß | Aufwandmenge an Wirkstoff in g/ha | Wirkungsgrad in % |
| 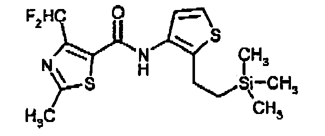 | 100 | 100 |
| 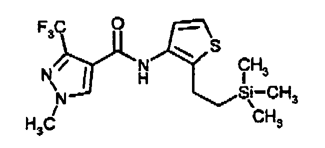 | 100 | 100 |
| 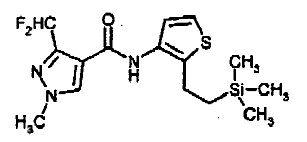 | 100 | 100 |
| 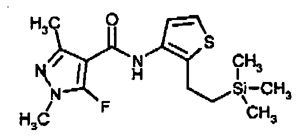 | 100 | 100 |
| 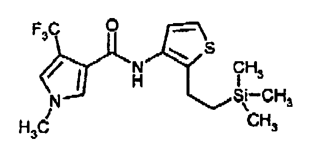 | 100 | 99 |

### Beispiel B

### Sphaerotheca-Test (Gurke) / protektiv

| | | |
|---|---|---|
| Lösungsmitten: | 24,5 | Gewichststeile Aceton |
| | 24,5 | Gewichtsteile Dimethylacetamid |
| Emulgator: | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht Nach Antrocknen des Spritzbelages werden die Pflanzen mit einer wässrigen Sporensuspension von *Sphaerotheca fuliginea* inokuliert. Die Pflanzen werden dann bei ca 23°C und einer relativen Luftfeuchtigkeit von ca. 70 % im Gewächshaus aufgestellt.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

**Tabelle B**

| | | |
|---|---|---|
| **Sphaerotheca-Test (Gurke) / protektiv** | | |

| Wirkstoff Nicht erfindungsgemäß | Aufwandmenge an Wirkstoff in g/ha | Wirkungsgad in % |
|---|---|---|
| 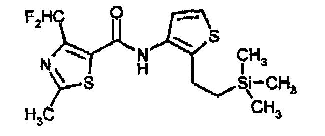 | 100 | 100 |
| 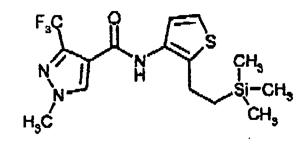 | 100 | 100 |
| 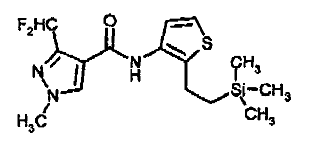 | 100 | 100 |
| 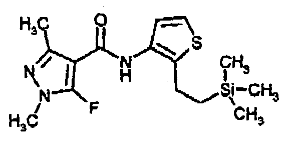 | 100 | 100 |
| 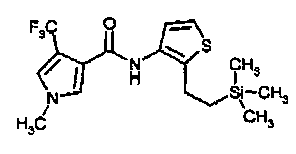 | 100 | 100 |
| 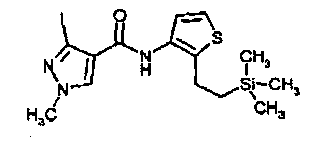 | 100 | 98 |

### Beispiel C

### Venturia - Test (Apfel) / protektiv

| | | |
|---|---|---|
| Lösungsmittel: | 24,5 | Gewichtsteile Aceton |
| | 24,5 | Gewichtsteile Dimethylacetamid |
| Emulgator : | 1 | Gewichtsteil Alkyl-Aryl-Polyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wässrigen Konidiensuspension des Apfelschorferregers *Venturia inaequalis* inokuliert und verbleiben dann 1 Tag bei ca. 20°C und 100 % relativer Luftfeuchtigkeit in einer Inkubationskabine.

Die Pflanzen werden dann im Gewächshaus bei ca. 21°C und einer relativen Luftfeuchtigkeit von ca. 90 % aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

**Tabelle C**

| **Venturia - Test (ApfeI) / protektiv** | | |
|---|---|---|
| Wirkstoff Nicht erfindungsgemäß | Aufwandmenge an Wirkstoff in g/ha | Wirkungsgrad in % |
| 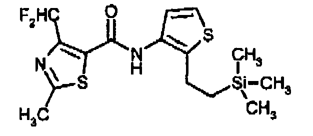 | 100 | 100 |
| 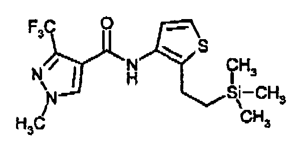 | 100 | 100 |
| 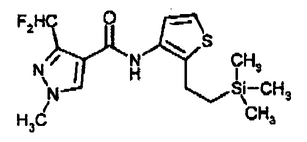 | 100 | 100 |
| 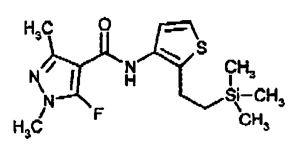 | 100 | 100 |
| 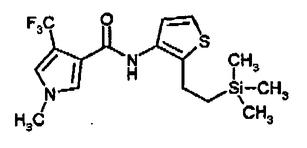 | 100 | 99 |
| 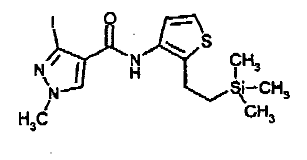 | 100 | 100 |

### Beispiel D

### Botrytis - Test (Bohne) / protektiv

| | | |
|---|---|---|
| Lösungsmittel : | 24,5 | Gewichtsteile Aceton |
| | 24,5 | Gewichtsteile Dimethylacetamid |
| Emulgator : | 1 | Gewichtsteil Alkyl-Aryl-Polyglykolother |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden auf jedes Blatt 2 kleine mit *Botrytis cinerea* bewachsene Agarstückchen aufgelegt Die inokulierten Pflanzen werden in einer abgedunkelten Kammer bei ca. 20°C und 100 % relativer Luftfeuchtigkeit aufgestellt.

2 Tage nach der Inokulation wird die Größe der Befallsflecken auf den Blättern ausgewertet. Dabei bedeutet 0 % ein Wirkungsgrad, der demjenigen der Kontrolle entspricht, während ein Wirkungsgrad von 100 % bedeutet, dass kein Befall beobachtet wird.

**Tabelle D**

| **Botrytis - Test (Bohne) / protektiv** | | |
|---|---|---|
| Wirkstoff Nicht erfindungsgemäß | Aufwandmenge an Wirkstoff in g/ha | Wirkungsgrad in % |
| 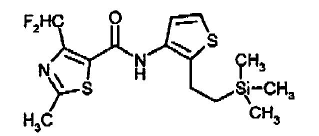 | 500 | 100 |
| 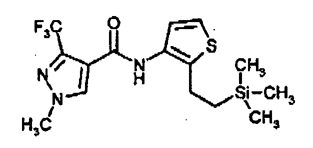 | 500 | 100 |
| 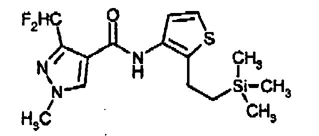 | 500 | 100 |
| 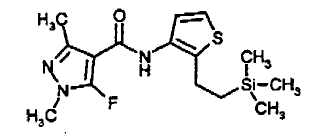 | 500 | 100 |
| 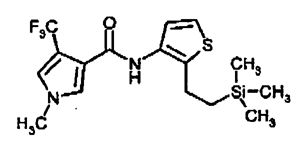 | 500 | 100 |
| 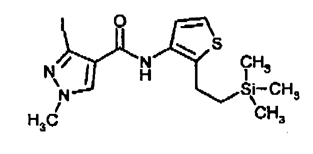 | 500 | 100 |

### Beispiel E.

### Puccinia - Test (Weizea) / protektiv

| | | |
|---|---|---|
| Lösungsmittel: | 50 | Gewichtsteile N,N-Dimethylacetamid |
| Emulgator: | 1 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Konidiensuspension von Puccinia recondita besprüht. Die Pflanzen verbleiben 48 Stunden bei 20°C und 100 % relativer Luftfeuchtigkeit in einer Inkubationskabine.

Die Pflanzen werden dann in einem Gewächshaus bei einer Temperatur von ca. 20°C und einer relativen Luftfeuchtigkeit von 80 % aufgestellt, um die Entwicklung von Rostpusteln zu begünstigen.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

**Tabelle E**

| **Puccinia - Test (Weizen) / protektiv** | | |
|---|---|---|
| Wirkstoff Nicht erfindungsgemäß | Aufwandmenge an Wirkstoff in g/ha | Wirkungsgrad in % |
| 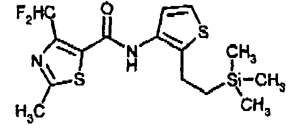 | 500 | 100 |
| 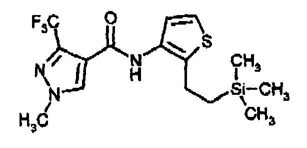 | 500 | 100 |
| 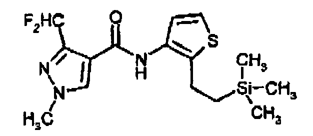 | 500 | 100 |
| 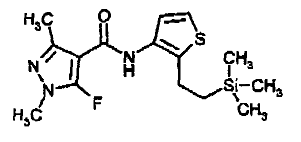 | 500 | 100 |

### Beispiel F

### In vitro-Test zur ED₅₀-Bestimmung bei Mikroorganismen

In die Kavitäten von Mikrotiterplatten wird eine methanolische Lösung des zu prüfenden Wirkstoffs, versetzt mit dem Emulgator PS16, pipettiert. Nachdem das Lösungsmittel abgedampft ist, werden je Kavität 200 µl Potatoe-Dextrose-Medium hinzugefügt. Das Medium wurde vorher mit einer geeigneten Konzentration von Sporen bzw. Mycel des zu prüfenden Pilzes versetzt. Die resultierenden Konzentrationen des Wirkstoffs betragen 0.05, 0.5, 5 und 50 ppm. Die resultierende Konzentration des Emulgators beträgt 300 ppm.

Die Platten werden anschließend 3-5 Tage auf einem Schüttler bei einer Temperatur von 20°C inkubiert, bis in der unbehandelten Kontrolle ein ausreichendes Wachstum feststellbar ist.

Die Auswertung erfolgt photometrisch bei einer Wellenlänge von 620 nm. Aus den Messdaten der verschiedenen Konzentrationen wird die Wirkstoffdosis, die zu einer 50%igen Hemmung des Pilzrwachstums gegenüber der unbehandelten Kontrolle führt (ED₅₀), berechnet.

**Tabelle F.**

| **In vitro-Test zur ED₅₀-Bestimmung bei Mikroorganismen** | | |
|---|---|---|
| Wirkstoff Nicht erfindungsgmäß | Mikroorganismus | ED₅₀-Wert |
| 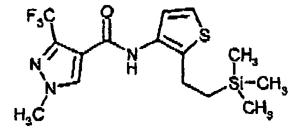 | Alternaria mali | < 0.05 |
| 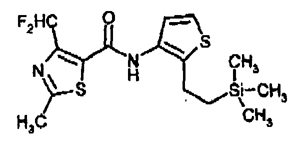 | Alternaria mali | < 0.05 |
| 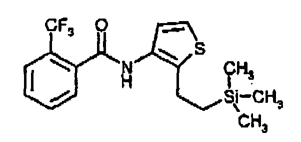 | Alternaria mali | < 0.05 |
| 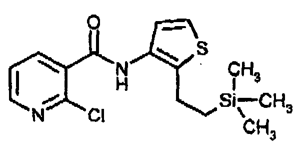 | Alternaria mali | < 0.05 |
| 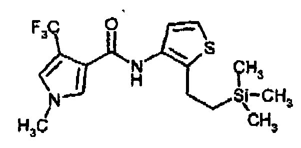 | Alternaria mali | < 0.05 |
| 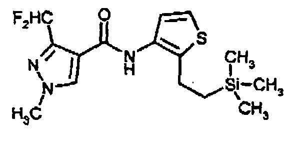 | Alternaria mali | < 0.05 |

## Patentansprüche

1. Silylierte Carboxamide der Formel (I) 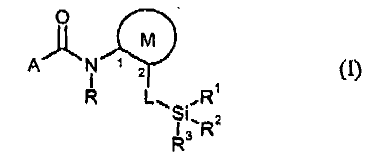 in welcher
M für einen jeweils einfach durch Y¹ substituierten Pyridin-, Pyrimidin-, Pyridazin- oder Pyrazin-Ring oder für einen durch Y² substituierten Thiazol-Ring steht,
Y¹ für Wasserstoff, Fluor, Chlor, Brom, Methyl, iso-Propyl, Methylthio oder Trifluorme- thyl steht,
Y³ für Wasserstoff, Fluor, Chlor, Brom, Methyl, Methylthio oder Trifluormethyl steht,
L für eine direkte Bindung oder für jeweils gegebenenfalls substituiertes geradkettiges oder verzweigtes Alkylen (Alkandiyl), Alkenylen (Alkendiyl) oder Alkinylen (Alkindiyl) steht,
R¹ und R² unabhängig voneinander für Wasserstoff, C₁-C₈-Alkyl, C₁-C₈-Alkoxy, C₁-C₄-Alkoxy- C₁-C₄-alkyl, C₁-C₄-Atkylthio-C₁-C₄-alkyl oder C₁-C₆-Halogenalkyl stehen,
R³ für Wasserstoff, C₁-C₈-Alkyl, C₁-C₈-Alkoxy, C₁-C₄-Alkoxy-C_{I}-C₄-alkyl, C₁-C₄- Alkylthio-C₁-C₄-alkyl, C₂₋C₈-Alkenyl, C₂-C₈-Alkinyl, C₁₋C₆-Hälogenalkyl, C₂-C₆- Halogenalkenyl, C₂-C₆-Halogenalkinyl, C₃-C₆-Cycloalkyl, oder für jeweils gegebenen- falls substituiertes Phenyl oder Phenylalkyl steht,
R für Wasserstoff, C₁-C₈-Alkyl, C₁-C₆-Alkylsulfinyl, C₁-C₆-Alkylsulfonyl, C₁-C₄-Alkoxy- C₁-C₄-alkyl, C₃-C₈-Cycloalkyl; C₁-C₆-Halogenalkyl, C₁-C₄-Halogenalkylthio, C₁-C₄-Halo- genalkylsulfinyl, C₁-C₄-Halogenalkylsulfonyl, Halogen-C₁-C₄-alkoxy-C₁-C₄-alkyl, C₃-C₈- Halogencycloalkyl mit jeweils 1 bis 9 Fluor-, Chlor- und/oder Bromatomen; Formyl, Formyl-C₁-C₃-alkyl, (C₁-C₃-Alkyl)carbonyl-C₁-C₃-alkyl, (C₁-C₃-Alkoxy)carbonyl-C₁-C₃- alkyl; Halogen-(C₁-C₃-alkyl)carbonyl-C₁-C₃-alkyl, Halogen-(C₁₋C₃-alkoxy)carbonyl-C₁- C₃-alkyl mit jeweils 1 bis 13 Fluor-, Chlor- und/oder Bromatomen; (C₁-C₈-Alkyl)carbanyl, (C₁-C₈-Alkoxy)carbonyl, (C₁-C₄-Alkoxy-C₁-C₄-alkyl)carbonyl, (C₃-C₈-Cycloalkyl)carbonyl; (C₁-C₆-Halogenalkyl)carbonyl (C₁-C₆-Halogenalkoxy)car- bonyl, (Halogen-C₁-C₄-alkoxy-C₁-C₄-alkyl)carbonyl, (C₃-C₈-Halogencycloalkyl)carbonyl mit jeweils 1 bis 9 Fluor-, Chlor- und/oder Bromatomen; oder -C(=O)C(=O)R⁴, -CONR⁵R⁶ oder -CH₂NR⁷R⁸ steht,
R⁴ für Wasserstoff, C₁-C₈-Alkyl, C₁-C₈-Alkoxy, C₁-C₄-Alkoxy-C₁-C₄-alkyl, C₃-C₈-Cycloal- kyl; C₁-C₆-Halogenalkyl, C₁-C₆-Halogenalkoxy, Halogen-C₁-C₄-alkoxy-C₁-C₄-alkyl, C₃- C₈-Halogencycloalkyl mit jeweils 1 bis 9 Fluor-, Chlor- und/oder Bromatomen steht,
R⁵ und R⁶ unabhängig voneinander jeweils für Wasserstoff, C₁-C₈-Alkyl, C₁-C₄-Alkoxy-C₁-C₄- alkyl, C₃-C₈-Cycloalkyl; C₁-C₈-Halogeoalkyl, Halogen-C₁-C₄-alkoxy-C₁-C₄-alkyl, C₃-C₈- Halogencycloalkyl mit jeweils 1 bis 9 Fluor-, Chlor- und/oder Bromatomen stehen,
R⁵ und R⁶ außerdem gemeinsam mit dem Stickstoffatom, an das sie gebunden sind, einen gege- benenfalls einfach oder mehrfach, gleich oder verschieden durch Halogen oder C₁-C₄- Alkyl substituierten gesättigten Heterocyclus mit 5 bis 8 Ringatomen bilden, wobei der Heterocyclus 1 oder 2 weitere, nicht benachbarte Heteroatome aus der Reihe Sauerstoff Schwefel oder NR⁹ enthalten kann,
R⁷ und R⁸ unabhängig voneinander für Wasserstoff, C₁-C₈-Alkyl, C₃-C₈-Cycloalkyl; C₁-C₈- Halogenalkyl, C₃-C₈-Halogencycloalkyl mit jeweils 1 bis 9 Fluor-, Chlor- und/oder Bromatomen stehen,
R⁷ und R⁸ außerdem gemeinsam mit dem Stickstoffatom, an das sie gebunden sind, einen gege- benenfalls einfach oder mehrfach, gleich oder verschieden durch Halogen oder C₁-C₄- Alkyl substituierten gesättigten Heterocyclus mit 5 bis 8 Ringatomen bilden, wobei der Heterocyclus 1 oder 2 weitere, nicht benachbarte Heteroatome aus der Reihe Sauerstoff, Schwefel oder NR⁹ enthalten kann,
R⁹ für Wasserstoff oder C₁-C₆-Alkyl steht,
A für den Rest der Formel (A1) 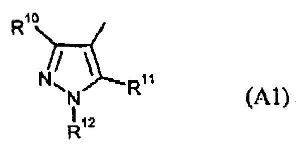 steht, in welcher
R¹⁰ für Wasserstoff, Hydroxy, Formyl, Cyano, Halogen, Nitro, C₁-C₄-Alkyl, C₁-C₄- Alkoxy, C₁-C₄-Alkylthio, C₃-C₆-Cycloalkyl, C₁-C₄₋Halogenalkyl, C₁-C₄-Halo- genalkoxy oder C₁-C₄-Halogenalkylthio mit jeweils 1 bis 5 Halogenatomen, Aminocarbonyl oder Aminocarbonyl-C₁-C₄-alkyl steht,
R¹¹ für Wasserstoff, Halogen, Cyano, C₁-C₄-Alkyl, C₁-C₄-Alkoxy, C₁-C₄-Alkylthio, C₁-C₄-Halogenalkyl oder C₁-C₄-Halogenatkylthio mit jeweils 1 bis 5 Halogen- atomen, steht und
R¹² für Wasserstoff, C₁-C₄-Alkyl, Hydroxy-C₁-C₄-alkyl, C₂-C₆-Alkenyl, C₃-C₆- Cycloalkyl, C₁-C₄-Alkylthio-C₁-C₄-alkyl, C₁₋C₄-Alkoxy-C₁-C₄-alkyl, C₁-C₄-Ha- logenalkyl, C₁-C₄-Halogenalkylthio-C₁-C₄-alkyl, C₁-C₄-Halogenalkoxy-C₁-C₄- alkyl mit jeweils 1 bis 5 Halogenatomen, oder für Phenyl steht,
oder
A für den Rest der Formel (A2) 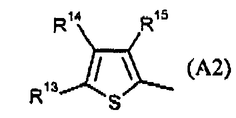 steht, in welcher
R¹³ und R¹⁴ unabhängig voreinander für Wasserstoff, Halogen, C₁-C₄-Alkyl oder C₁-C₄- Halogenalkyl mit 1 bis 5 Halogenatomen stehen und
R¹⁵ für Halogen, Cyano oder C₁-C₄-Alkyl, oder C₁-C₄-Halopenalkyl oder C₁-C₄- Halogenalkoxy mit jeweils 1 bis 5 Halogenatome steht,
oder
A für den Rest der Formel (A3) 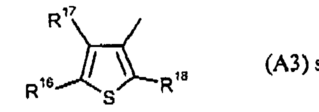 steht, in welcher
R¹⁶und R¹⁷ unabhängig voneinander für Wasserstoff Halogen, C₁-C₄-Alkyl oder C₁-C₄- Halogenalkyl mit 1 bis 5 Halogenatomen stehen und
R¹⁸ für Wasserstoff, C₁-C₄-Alkyl oder C₁-C₄-Halogenalkyl mit 1 bis 5 Halogen- atomen steht,
oder
A für den Rest der Formel (A4) 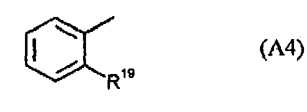 steht, in welcher
R¹⁹ für Wasserstoff, Halogen, Hydroxy, Cyano, C₁-C₆-Alkyl, C₁-C₄-Halogenalkyl, C₁-C₄-Malogenalkoxy oder C₁-C₄-Halogenalkylthio mit jeweils 1 bis 5 Halogen- atomen steht,
oder
A für den Rest der Formel (A5) 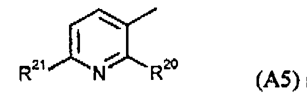 steht, in welcher
R²⁰ für Halogen, Hydroxy, Cyano, C₁-C₄-Alkyl, C₁-C₄-Alkoxy, C₁-C₄-Alkylthio, C₁-C₄-Halogenalkyl, C₁-C₄-Halogonalkylthio oder C₁-C₄-Halogenalkoxy mit jeweils 1 bis 5 Halogenatomen steht und
R²¹ für Wasserstoff, Halogen, Cyano, C₁-C₄-Alkyl, C₁-C₄-Alkoxy, C₁-C₄-Alkylthio, C₁-C₄-Halogenalkyl, C₁-C₄-Halogenalkoxy mit jeweils 1 bis 5 Halogenatomen, C₁-C₄-Alkylsulfinyl oder C₁-C₄-Alkylsulfonyl steht,
oder
A für den Rest der Formel (A6) 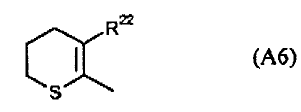 steht, in welcher
R²² für C₁-C₄-Alkyl oder C₁-C₄-Halogenalkyl mit 1 bis 5 Halogenatomen steht,
oder
A für den Rest der Formel (A7) 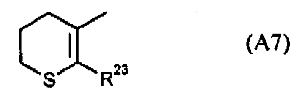 steht, in welcher
R²³ für C₁-C₄-Alkyl oder C₁-C₄-Halogenalkyl mit 1 bis 5 Halogenatomen steht,
oder
A für den Rest der Formel (A8) 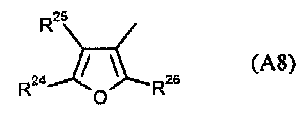 steht, in welcher
R²⁴ und R²⁵ unabhängig voneinander für Wasserstoff, Halogen, Amino, C₁-C₄-Alkyl oder C₁-C₄-Halogenalkyl mit 1 bis 5 Halogenatomen stehen und
R²⁶ für Wasserstoff, C₁-C₄-Alkyl oder C₁-C₄-Halogenalkyl mit 1 to 5 Halogenato- men steht,
oder
A für den Rest der Formel (A9) 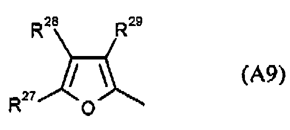 steht, in welcher
R²⁷ und R²⁸ unabhängig voneinander für Wasserstoff, Halogen, Amino, Nitro, C₁-C₄- Alkyl oder C₁-C₄-Halogenalkyl mit 1 bis 5 Halogenatomen stehen und
R²⁹ für Halogen, C₁-C₄-Alkyl oder C₁-C₄-Halogenalkyl mit 1 bis 5 Halogenatomen steht,
oder
A für den Rest der Formel (A10) 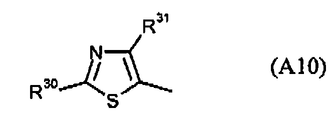 steht, in weicher
R³⁰ für Wasserstoff, Halogen, Amino, C₁-C₄-Alkylamino, Di-(C₁-C₄-alkyl)amino, Cyano, C₁-C₄-Alkyl oder C₁-C₄-Halogenalkyl mit 1 bis 5 Halogenatomen steht und
R³¹ für Halogen, Hydroxy, C₁-C₄-Alkyl, C₁-C₄-Alkoxy, C₃-C₆-Cycloalkyl, C₁-C₄- Halogenalkyl oder C₁-C₄-Halogenalkoxy mit jeweils 1 bis 5 Halogenatomen steht,
oder
A für den Rest der Formel (A11) 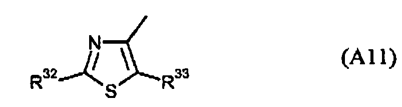 steht, in welcher
R³² für Wasserstoff, Halogen, Amino, C₁-C₄-Alkylamino, Di-(C₁-C₄-alkyl)amino, Cyano, C₁-C₄-Alkyl oder C₁-C₄-Halogenalkyl mit 1 bis 5 Halogenatome steht und
R³³ für Halogen, C₁-C₄-Alkyl oder C₁-C₄-Halogenalkyl mit 1 bis 5 Halogenatomen steht,
oder
A für den Rest der Formel (A12) 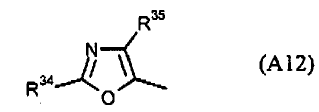 steht, in welcher
R³⁴ für Wasserstoff oder C₁-C₄-Alkyl steht und
R³⁵ für Halogen, C₁-C₄-Alkyl oder C₁-C₄-Hatogenalkyl mit 1 bis 5 Halogenatomen steht,
oder
A für den Rest der Formel (A13) 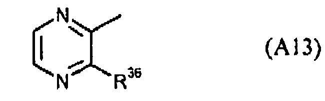 steht, in weicher
R³⁶ für Wasserstoff, Halogen, C₁-C₄-Alkyl oder C₁-C₄-Halogenalkyl mit 1 bis 5 Ha- logenatomen steht,
oder
A für den Rest der Formel (A14) 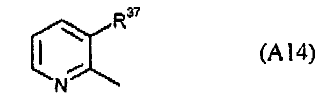 steht, in welcher
R³⁷ für Halogen, Hydroxy, C₁-C₄-Alkyl, C₁-C₄-Alkoxy, C₁-C₄₋Alkylthio, C₁-C₄-Ha- logenalkyl, C₁-C₄-Halogenalkylthio oder C₁-C₄-Hatogenalkoxy mit jeweils 1 bis 5 Halogenatomen steht,
oder
A für den Rest der Formel (A 15) 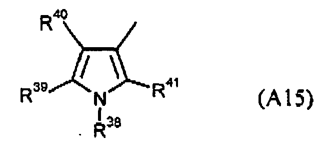 steht, in welcher
R³⁸ für Wasserstoff, Cyano, C₁-C₄-Alkyl, C₁-C₄-Halogenalkyl mit 1 bis 5 Halogen- atomen, C₁-C₄-Alkoxy-C₁-C₄-alkyl, Hydroxy-C₁-C₄-alkyl, C₁-C₄-Alkylsulfonyl, Di(C₁-C₄-alkyl)aminosulfonyl, C₁-C₆-Alkylcarbonyl oder für jeweils gegebe- nenfalls substituiertes Phenylsulfonyl oder βenzoyl steht,
R³⁹ für Wasserstoff, Halogen, C₁-C₄-Alkyl oder C₁-C₄-Halogenakyl mit 1 bis 5 Ha- logenatomen steht,
R⁴⁰ für Wasserstoff, Halogen, Cyano, C₁-C₄-Alkyl oder C₁-C₄-Halogenalkyl mit 1 bis 5 Halogenatomen steht,
R⁴¹ für Wasserstoff, Halogen, C₁-C₄-Alkyl oder C₁-C₄-Halogenalkyl mit 1 bis 5 Ha- logenatomen steht,
oder
A für den Rest der Formel (A 16) 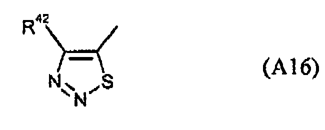 steht, in welcher
R⁴² für Halogen, C₁-C₄-Alkyl oder C₁-C₄-Halogenalkyl mit 1 bis 5 Halogenatomen steht,
oder
A für den Rest der Formel (A 17) 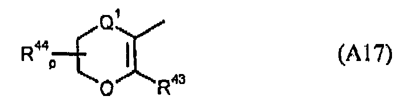 steht, in welcher
R⁴³ für C₁-C₄-Alkyl oder C₁-C₄-Halogenalkyl mit 1 bis 5 Halogenatomen steht,
R⁴⁴ für C₁-C₄-Alkyl steht,
Q¹ für S (Schwefel), O (Sauerstoff, SO, SO₂ oder CH₂ steht,
p für 0, 1 oder 2 steht, wobei R⁴⁴ gleich oder verschieden ist, wenn p für 2 steht.

2. Silylierte Carboxamide der Formel (I) gemäß Anspruch 1, in welcher
M für einen der folgenden Heterocyclen 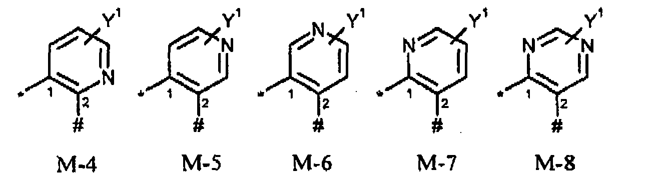 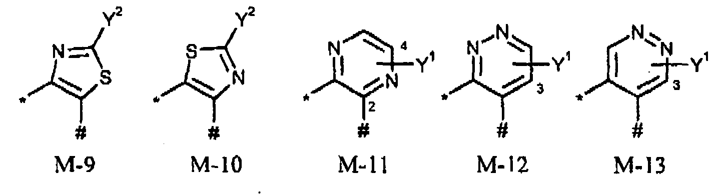 steht,
wobei die mit "*" markierte Bindung mit dem Amid, die mit "#" markierte Bindung mit dem Rest Z verknüpft ist,
Y¹ für Wasserstoff, Fluor, Chlor, Methyl, iso-Propyl, Methylthio oder Trifluormethyl steht,
Y² für Wasserstoff, Methyl, Methylthio oder Trifluormethyl steht,
L für eine direkte Bindung oder für gegebenenfalls durch Halogen substituiertes geradkettiges oder verzweigtes C₁-C₆-Alkylen, C₂-C₄-Alkenylen oder C₂-C₆-Alkinylen steht,
R¹ und R² unabhängig voneinander für C₁-C₆-Alkyl, C₁-C₆-Alkoxy, C₁-C₃-Alkoxy-C₁-C₃-alkyl oder C₁-C₃-Alkylthio-C₁-C₃-alkyl stehen,
R³ für C₁-C₆-Alkyl, C₁-C₆-Alkoxy, C₁-C₃-Alkoxy-C₁-C₃-alkyl, C₁-C₃-Alkylthio-C₁-C₃- alkyl, C₁-C₆-Cycloalkyl, Phenyl oder Benzyl steht,
R für Wasserstoff, C₁-C₆-Alkyl, C₁-C₄-Alkylsulfinyl, C₁-C₄-Alkylsulfonyl, C₁-C₃-Alkoxy- C₁-C₃-alkyl, C₃-C₆-Cycloalkyl; C₁-C₄-Halogenalkyl, C₁-C₄-Halogenalkylthio, C₁-C₄- Halogenalkylsulfinyl, C₁-C₄-Halogenalkylsulfonyl, Halogen-C₁-C₃-alkoxy-C₁-C₃-alkyl, C₃-C₈-Halogencycloalkyl mit jeweils 1 bis 9 Fluor-, Chlor- und/oder Bromatomen; Formyl, Formyl-C₁-C₃-alkyl, (C₁-C₃-Alkyl)carbonyl-C₁-C₃-alky), (C₁-C₃-Alkoxy)car- bonyl-C₁-C₃-alkyl; Halogen-(C₁-C₃-alkyl)carbonyl-C₁-C₃-alkyl, Halogen-(C₁-C₃-alk- oxy)carbonyl-C₁-C₃-alkyl mit jeweils 1 bis 13 Fluor-, Chlor- und/oder Bromatomen; (C₁-C₆-Alkyl)carbonyl, (C₁-C₄-Alkoxy)carbonyl, (C₁-C₃-Alkoxy-C₁-C₃-alkyl)carbonyl, (C₃-C₆-Cycloalkyl)carbonyl; (C₁-C₄-Halogenalkyl)carbonyl, (C₁-C₄-Halogenalkoxy)car- bonyl, (Halogen-C₁-C₃-alkoxy-C₁-C₃-alkyl)carbonyl, (C₃-C₆-Halogen- cycloalkyl)carbonyl mit jeweils 1 bis 9 Fluor-, Chlor- und/oder Bromatomen; oder -C(=O)C(=O)R⁴, -CONR⁵R⁶ oder -CH₂NR⁷R⁸ steht,
R⁴ für Wasserstoff, C₁-C₆-Alkyl, C₁-C₄-Alkoxy, C₁-C₃-Alkoxy-C₁-C₃-alkyl, C₃-C₆- Cycloalkyl; C₁-C₄-Halogenalkyl, C₁-C₄-Halogenalkoxy, Halogen-C₁-C₃-alkoxy-C₁-C₃- alkyl, C₃-C₆-Halogencycloalkyl mit jeweils 1 bis 9 Fluor-, Chlor- und/oder Bromatomen steht,
R⁵ und R⁶ unabhängig voneinander jeweils für Wasserstoff, C₁-C₆-Alkyl, C₁-C₃-Alkoxy-C₁-C₃- alkyl, C₃-C₆-Cycloalkyl; C₁-C₄-Halogenalkyl, Halogen-C₁-C₃-alkoxy-C₁-C₃-alkyl, C₃- C₆-Halogencycloalkyl mit jeweils 1 bis 9 Fluor-, Chlor- und/oder Bromatomen stehen,
R⁵ und R⁶ außerdem gemeinsam mit dem Stickstoffatom, an das sie gebunden sind, einen gege- benenfalls einfach bis vierfach, gleich oder verschieden durch Halogen oder C₁-C₄- Alkyl substituierten gesättigten Heterocyclus mit 5 oder 6 Ringatomen bilden, wobei der Heterocyclus 1 oder 2 weitere, nicht benachbarte Heteroatome aus der Reihe Sauerstoff, Schwefel oder NR⁹ enthalten kann,
R⁷ und R⁸ unabhängig voneinander für Wasserstoff, C₁-C₆-Alkyl, C₃-C₆-Cycloalkyl; C₁-C₄- Halogenalkyl, C₃-C₆-Halogencycloalkyl mit jeweils 1 bis 9 Fluor-, Chlor- und/oder Bromatomen stehen,
R⁷ und R⁸ außerdem gemeinsam mit dem Stickstoffatom, an das sie gebunden sind, einen gege- benenfalls einfach bis vierfach, gleich oder verschieden durch Halogen oder C₁-C₄- Alkyl substituierten gesättigten Heterocyclus mit 5 oder 6 Ringatomen bilden, wobei der Heterocyclus 1 oder 2 weitere, nicht benachbarte Heteroatome aus der Reihe Sauerstoff, Schwefel oder NR⁹ enthalten kann,
R⁹ für Wasserstoff oder C₁-C₄-Alkyl,
A für den Rest der Formel (A1) 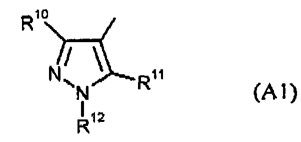 steht, in welcher
R¹⁰ für Wasserstoff, Hydroxy, Formyl, Cyano, Fluor, Chlor, Brom, Iod, Methyl, Ethyl, iso-Propyl, Methoxy, Ethoxy, Methylthio, Ethylthio, Cyclopropyl, C₁-C₂- Halogenalkyl, C₁-G₂-Halogenalkoxy mit jeweils 1 bis 5 Fluor, Chlor und/oder Bromatomen, Trifluormethylthio, Difluormethylthio, Aminocarbonyl, Amino- carbonylmethyl oder Aminocarbonylethyl steht,
R¹¹ für Wasserstoff, Fluor, Chlor, Brom, Iod, Methyl, Ethyl, Methoxy, Ethoxy, Methylthio, Ethylthio, C₁-C₂-Halogenalkyl mit 1 bis 5 Fluor, Chlor und/oder Bromatomen, steht und
R¹² für Wasserstoff, Methyl, Ethyl, n-Propyl, iso-Propyl, C₁-C₂-Halogenalkyl mit 1 bis 5 Fluor, Chlor und/oder Bromatomen, Hydroxymethyl, Hydroxyethyl, Cyclopropyl, Cyclopentyl, Cyclohexyl oder Phenyl steht,
oder
A für den Rest der Formel (A2) 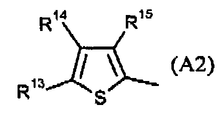 steht, in welcher
R¹³ und R¹⁴ unabhängig voneinander für Wasserstoff, Fluor, Chlor, Brom, Methyl, Ethyl oder C₁-C₂-Halogenalkyl mit 1 bis 5 Fluor, Chlor und/oder Bromatomen stehen und
R¹⁵ für Fluor, Chlor, Brom, lod, Cyano, Methyl, Ethyl, C₁-C₂-Halogenalkyl oder C₁- C₂-Halogenalkoxy mit jeweils 1 bis 5 Fluor, Chlor und/oder Bromatomen steht,
oder
A für den Rest der Formel (A3) 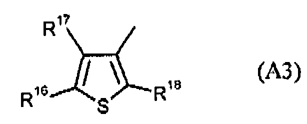 steht, in welcher
R¹⁶ und R¹⁷ unabhängig voneinander für Wasserstoff, Fluor, Chlor, Brom, Methyl, Ethyl oder C₁-C₂-Halogenalkyl mit 1 bis 5 Fluor, Chlor und/oder Bromatomen stehen und
R¹⁸ für Wasserstoff, Methyl, Methyl oder C₁-C₂-Halogenalkyl mit 1 bis 5 Fluor, Chlor und/oder Bromatome steht,
oder
A für den Rest der Formel (A4) 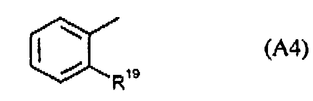 steht, in welcher
R¹⁹ für Wasserstoff, Fluor, Chlor, Brom, Iod, Hydroxy, Cyano, C₁-C₄-Alkyl, C₁-C₂- Halogenalkyl, C₁-C₂-Halogenalkoxy oder C₁-C₂-Halogenalkylthio mit jeweils 1 bis 5 Fluor, Chlor und/oder Bromatomen steht,
oder
A für den Rest der Formel (A5) 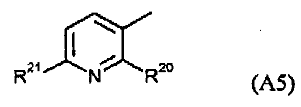 steht, in welcher
R²⁰ für Fluor, Chlor, Brom, Iod, Hydroxy, Cyano, C₁-C₄-Alkyl, Methoxy, Ethoxy, Methylthio, Ethylthio, Difluormethylthio, Trifluormethylthio, C₁-C₂-Halogenal- kyl oder C₁-C₂-Halogenalkoxy mit jeweils 1 bis 5 Fluor, Chlor und/oder Bromatomen steht und
R²¹ für Wasserstoff, Fluor, Chlor, Brom, Iod, Cyano, C₁-C₄-Alkyl, Methoxy, Ethoxy, Methylthio, Ethylthio, C₁-C₂-Halogenalkyl oder C₁-C₂-Halogenalkoxy mit jeweils 1 bis 5 Fluor, Chlor und/oder Bromatomen, C₁-C₂-Alkylsulfinyl oder C₁-C₂-Alkylsulfonyl steht,
oder
A für den Rest der Formel (A8) 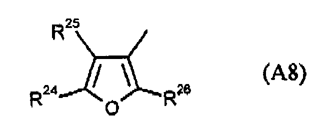 steht, in welcher
R²⁴ und R²⁵ unabhängig voneinander für Wasserstoff, Fluor, Chlor, Brom, Amino, Methyl, Ethyl oder C₁-C₂-Halogenalkyl mit 1 bis 5 Fluor, Chlor und/oder Bromatomen stehen und
R²⁶ für Wasserstoff, Fluor, Chlor, Brom, Iod, Methyl, Methyl oder C₁-C₂-Halogenal- kyl mit 1 bis 5 Fluor, Chlor und/oder Bromatomen steht,
oder
A für den Rest der Formel (A9) 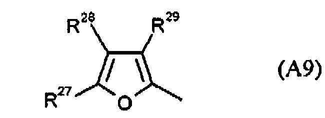 steht, in welcher
R²⁷ und R²⁸ unabhängig voneinander für Wasserstoff, Fluor, Chlor, Brom, Amino, Nitro, Methyl, Ethyl oder C₁-C₂-Halogenalkyl mit 1 bis 5 Fluor, Chlor und/oder Bromatomen stehen und
R²⁹ für Fluor, Chlor, Brom, Methyl, Ethyl oder C₁-C₂-Halogenalkyl mit 1 bis 5 Fluor, Chlor und/oder Bromatomen steht,
oder
A für den Rest der Formel (A10) 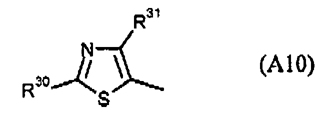 steht, in welcher
R³⁰ für Wasserstoff, Fluor, Chlor, Brom, Amino, C₁-C₄-Alkylamino, Di(C₁-C₄- alkyl)amino, Cyano, Methyl, Ethyl oder C₁-C₂-Halogenalkyl mit 1 bis 5 Fluor, Chlor und/oder Bromatomen steht und
R³¹ für Fluor, Chlor, Brom, Hydroxy, Methyl, Ethyl, Methoxy, Ethoxy, Cyclopropyl, C₁-C₂-Halogenalkyl oder C₁-C₂-Halogenalkoxy mit 1 bis 5 Fluor, Chlor und/oder Bromatomen steht,
oder
A für den Rest der Formel (A11) 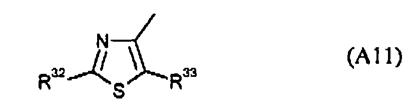 steht, in welcher
R³² für Wasserstoff, Fluor, Chlor, Brom, Amino, C₁-C₄-Alkylamino, Di(C₁-C₄- alkyl)amino, Cyano, Methyl, Ethyl oder C₁-C₂-Halogenalkyl mit 1 bis 5 Fluor, Chlor und/oder Bromatomen steht und
R¹³ für Fluor, Chlor, Brom, Methyl, Ethyl oder C₁-C₂-Halogenalkyl mit 1 bis 5 Fluor, Chlor und/oder Bromatomen steht,
oder
A für den Rest der Formel (A 12) 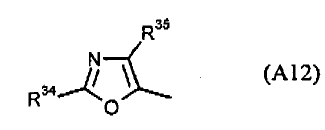 steht, in welcher
R³⁴ für Wasserstoff, Methyl oder Ethyl steht und
R³⁵ für Fluor, Chlor, Brom, Methyl, Ethyl, Trifluormethyl oder Difluormethyl steht,
oder
A für den Rest der Formel (A 13) 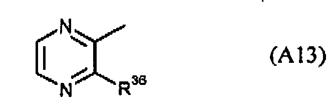 steht, in welcher
R³⁶ für Wasserstoff, Fluor, Chlor, Brom, Methyl, Ethyl oder C₁-C₂-Halogenalkyl mit 1 bis 5 Fluor, Chlor und/oder Bromatomen steht,
oder
A für den Rest der Formel (A14) 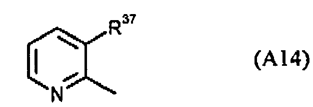 steht, in welcher
R³⁷ für Fluor, Chlor, Brom, Iod, Hydroxy, C₁-C₄-Alkyl, Methoxy, Ethoxy, Methylthio, Ethylthio, Difluormethylthio, Trifluormethylthio, C₁-C₂-Halogenal- kyl oder C₁-C₂-Halogenalkoxy mit jeweils 1 bis 5 Fluor, Chlor und/oder Bromatomen steht,
oder
A für den Rest der Formel (A 15) 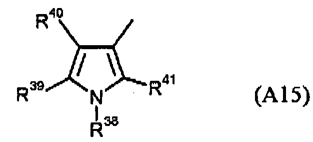 steht, in welcher
R³⁸ für Wasserstoff, Methyl, Ethyl, C₁-C₂-Halogenalkyl mit 1 bis 5 Fluor-, Chlor- und/oder Bromatomen, C₁-C₂-Alkoxy-C₁-C₂-alkyl, Hydroxymethyl, Hydroxyethyl, methylsulfonyl oder Dimethylaminosulfonyl steht,
R³⁹ für Wasserstoff, Fluor, Chlor, Brom, Methyl, Ethyl oder C₁-C₂-Halogenalkyl mit 1 bis 5 Fluor-, Chlor- und/oder Bromatomen steht,
R⁴⁰ für Wasserstoff, Fluor, Chlor, Brom, Iod, Cyano, Methyl, Ethyl, iso-Propyl oder C₁-C₂-Halogenalkyl mit 1 bis 5 Fluor-, Chlor- und/oder Bromatomen steht,
R⁴¹ für Wasserstoff, Fluor, Chlor, Brom, Methyl, Ethyl oder C₁-C₂-Halogenalkyl mit 1 bis 5 Fluor, Chlor und/oder Bromatomen steht,
oder
A für den Rest der Formel (A17) 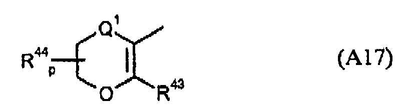 steht, in welcher
R⁴³ für Methyl, Ethyl oder C₁-C₂-Halogenalkyl mit 1 bis 5 Fluor-, Chlor- und/oder Bromatomen steht,
R⁴⁴ für Methyl oder Ethyl steht,
Q¹ für S (Schwefel), SO₂ oder CH₂ steht,
p für 0 oder 1 steht.

3. Verfahren zum Herstellen der Verbindungen der Formel (I) gemäß Anspruch 1, **dadurch gekennzeichnet, dass** man
a) Carbonsäure-Derivate der Formel (II) 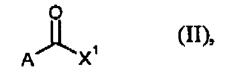 in welcher
A die in Anspruch 1 angegebenen Bedeutungen hat und
X¹ für Halogen oder Hydroxy steht,
mit einem Amin der Formel (III) 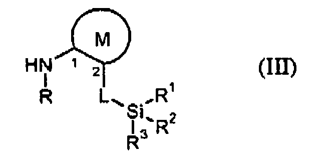 in welcher M, L, R¹, R², R³ und R die in Anspruch 1 angegebenen Bedeutungen haben, gegebenenfalls in Gegenwart eines Katalysators, gegebenenfalls in Gegenwart eines Kondensationsmittels, gegebenenfalls in Gegenwart eines Säurebindemittels und gegebenenfalls in Gegenwart eines Verdünnungsmittels umsetzt,
oder
b) silylierte Carboxamide der Formel (I-a) 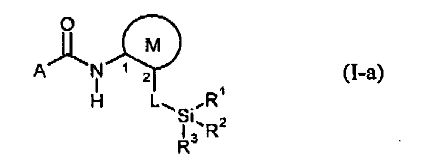 in welcher M, L, A, R¹, R² und R³ die in Anspruch 1 angegebenen Bedeutungen haben mit Halogeniden der Formel (IV)
R^{A}- X² (IV)
in welcher
X² für Chlor, Brom oder Iod steht,
R^{A} für C₁-C₈-Alkyl, C₁-C₆-Alkylsulfinyl, C₁-C₆-Alkylsulfonyl, C₁-C₄-Alkoxy-C₁- C₄-alkyl, C₃-C₈-Cycloalkyl; C₁-C₆-Halogenalkyl, C₁-C₄-Halogenalkylthio, C₁- C₄-Halogenalkylsulfinyl, C₁-C₄-Halogenalkylsulfonyl, Halogen-C₁-C₄-alkoxy- C₁-C₄-alkyl, C₃-C₈-Halogencycloalkyl mit jeweils 1 bis 9 Fluor-, Chlor- und/oder Bromatomen; Formyl, Formyl-C₁-C₃-alkyl, (C₁-C₃-Alkyl)carbonyl-C₁- C₃-alkyl, (C₁-C₃-Alkoxy)carbonyl-C₁-C₃-alkyl; Halogen-(C₁-C₃-alkyl)carbonyl- C₁-C₃-alkyl, Halogen-(C₁-C₃-alkoxyxarbonyl-C₁-C₃-alkyl mit jeweils 1 bis 13 Fluor-, Chlor- und/oder Bromatomen; (C₁-C₈-Alkyl)carbonyl, (C₁-C₈-Alkoxy)carbonyl, (C₁-C₄-Alkoxy-C₁-C₄-alkyl)- carbonyl, (C₃-C₈-Cycloalkyl)carbonyl; (C₁-C₆-Halogenalkyl)carbonyl, (C₁-C₆- Halogenalkoxy)carbonyl, (Halogen-C₁-C₄-alkoxy-C₁-C₄-alkyl)carbonyl, (C₃-C₈- Halogencycloalkyl)carbonyl mit jeweils 1 bis 9 Fluor-, Chlor- und/oder Brom- atomen; oder -C(=O)C(=O)R⁴, -CONR⁵R⁶ oder -CH₂NR⁷R⁸ steht,
wobei R⁴, R⁵, R⁶, R⁷ und R⁸ die in Anspruch 1 angegebenen Bedeutungen haben,
in Gegenwart einer Base und in Gegenwart eines Verdünnungsmittels umsetzt.

4. Mittel zum Bekämpfen unerwünschter Mikroorganismen, **gekennzeichnet durch** einen Gehalt an mindestens einem silylierten Carboxamid der Formel (I) gemäß Anspruch 1 neben Streckmitteln und/oder oberflächenaktiven Stoffen.

5. Verwendung von silylierten Carboxamiden der Formel (I) gemäß Anspruch 1 zum Bekämpfen unerwünschter Mikroorganismen.

6. Verfahren zum Bekämpfen unerwünschter Mikroorganismen, **dadurch gekennzeichnet, dass** man silylierte Carboxamide der Formel (I) gemäß Anspruch 1 auf die Mikroorganismen und/oder deren Lebensraum ausbringt.

7. Verfahren zum Herstellen von Mitteln zum Bekämpfen unerwünschter Mikroorganismen, **dadurch gekennzeichnet, dass** man silylierte Carboxamides der Formel (I) gemäß Anspruch 1 mit Streckmitteln und/oder oberflächenaktiven Stoffen vermischt.

## Claims

1. Silylated carboxamides of the formula (I) 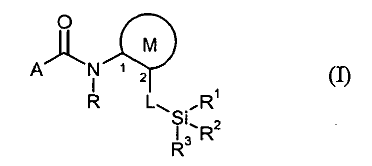 in which
M represents a pyridine, pyrimidine, pyridazine or pyrazine ring, each of which is monosubstituted by Y¹, or represents a thiazole ring substituted by Y²,
Y¹ represents hydrogen, fluorine, chlorine, bromine, methyl, isopropyl, methylthio or trifluoromethyl,
Y² represents hydrogen, fluorine, chlorine, bromine, methyl, methylthio or trifluoromethyl,
L represents a direct bond or represents straight-chain or branched alkylene (alkanediyl), alkenylene (alkenediyl) or alkynylene (alkynediyl), each of which is optionally substituted,
R¹ and R² independently of one another represent hydrogen, C₁-C₈-alkyl, C₁-C₈-alkoxy, C₁- C₄-alkoxy-C₁-C₄-alkyl, C₁-C₄-alkylthio-C₁-C₄-alkyl or C₁-C₆-haloalkyl,
R³ represents hydrogen, C₁-C₈-alkyl, C₁-C₈-alkoxy, C₁-C₄-alkoxy-C₁-C₄-alkyl, C₁-C₄- alkylthio-C₁-C₄-alkyl, C₂-C₈-alkenyl, C₂-C₈-alkynyl, C₁-C₆-haloalkyl, C₂-C₆- haloalkenyl, C₂-C₆-haloalkynyl, C₃-C₆-cycloalkyl, or represent in each case optionally substituted phenyl or phenylalkyl,
R represents hydrogen, C₁-C₈-alkyl, C₁-C₆-alkylsulphinyl, C₁-C₆-alkylsulphonyl, C₁-C₄- alkoxy-C₁-C₄-alkyl, C₃-C₈-cycloalkyl; C₁-C₆-haloalkyl, C₁-C₄-haloalkylthio, C₁-C₄- haloalkylsulphinyl, C₁-C₄-haloalkylsulphonyl, halo-C₁-C₄-alkoxy-C₁-C₄-alkyl, C₃-C₈- halocycloalkyl having in each case 1 to 9 fluorine, chlorine and/or bromine atoms; formyl, formyl-C₁-C₃-alkyl, (C₁-C₃-alkyl)carbonyl-C₁-C₃-alkyl, (C₁-C₃-alkoxy)carbonyl-
R⁴ C₁-C₃-alkyl; halo-(C₁-C₃-alkyl)carbonyl-C₁-C₃alkyl, halo-(C₁-C₃-alkoxy)carbonyl-C₁- C₃-alkyl having in each case 1 to 13 fluorine, chlorine and/or bromine atoms; (C₁-C₈-alkyl)carbonyl, (C₁-C₈-alkoxy)carbonyl, (C₁-C₄-alkoxy-C₁-C₄-alkyl)carbonyl, (C₃-C₈-cycloalkyl)carbonyl; (C₁-C₆-haloalkyl)carbonyl, (C₁-C₆-haloalkoxy)carbonyl, (halo-C₁-C₄-alkoxy-C₁-C₄-alkyl)carbonyl, (C₃-C₈-halocycloalkyl)carbonyl having in each case 1 to 9 fluorine, chlorine and/or bromine atoms; or -C(=O)C(=O)R⁴, -CONR⁵R⁶ or -CH₂NR⁷R⁸, represents hydrogen, C₁-C₈-alkyl, C₁-C₈-alkoxy, C₁-C₄-alkoxy-C₁-C₄-alkyl, C₃-C₈- cycloalkyl; C₁-C₆-haloalkyl, C₁-C₆-haloalkoxy, halo-C₁-C₄-alkoxy-C₁-C₄-alkyl, C₃- C₈-halocycloalkyl having in each case 1 to 9 fluorine, chlorine and/or bromine atoms,
R⁵ and R⁶ independently of one another each represent hydrogen, C₁-C₈-alkyl, C₁-C₄-alkoxy-C₁- C₄-alkyl, C₃-C₈-cycloalkyl; C₁-C₈-haloalkyl, halo-C₁-C₄-alkoxy-C₁-C₄-alkyl, C₃-C₈- halocycloalkyl having in each case 1 to 9 fluorine, chlorine and/or bromine atoms,
R⁵ and R⁶ furthermore together with the nitrogen atom to which they are attached form a saturated heterocycle having 5 to 8 ring atoms which is optionally mono- or polysubstituted by identical or different substituents from the group consisting of halogen and C₁-C₄-alkyl, where the heterocycle may contain 1 or 2 further non- adjacent heteroatoms from the group consisting of oxygen, sulphur and NR⁹,
R⁷ and R⁸ independently of one another represent hydrogen, C₁-C₈-alkyl, C₃-C₈-cycloalkyl; C₁-C₈-haloalkyl, C₃-C₈-halocycloalkyl having in each case 1 to 9 fluorine, chlorine and/or bromine atoms,
R⁷ and R⁸ furthermore together with the nitrogen atom to which they are attached form a saturated heterocycle having 5 to 8 ring atoms which is optionally mono- or polysubstituted by identical or different substituents from the group consisting of halogen and C₁-C₄-alkyl, where the heterocycle may contain 1 or 2 further non- adjacent heteroatoms from the group consisting of oxygen, sulphur and NR⁹,
R⁹ represents hydrogen or C₁-C₆-alkyl,
A represents the radical of the formula (A1) 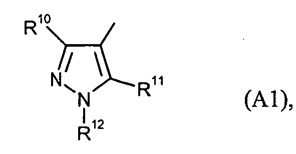 in which
R¹⁰ represents hydrogen, hydroxyl, formyl, cyano, halogen, nitro, C₁-C₄-alkyl, C₁-C₄-alkoxy, C₁-C₄-alkylthio, C₃-C₆-cycloalkyl, C₁-C₄-haloalkyl, C₁-C₄- haloalkoxy or C₁-C₄-haloalkylthio having in each case 1 to 5 halogen atoms, aminocarbonyl or aminocarbonyl-C₁-C₄-alkyl,
R¹¹ represents hydrogen, halogen, cyano, C₁-C₄-alkyl, C₁-C₄-alkoxy, C₁-C₄-alkyl- thio, C₁-C₄-haloalkyl or C₁-C₄-haloalkylthio having in each case 1 to 5 halogen atoms, and
R¹² represents hydrogen, C₁-C₄-alkyl, hydroxy-C₁-C₄-alkyl, C₂-C₆-alkenyl, C₃-C₆- cycloalkyl, C₁-C₄-alkylthio-C₁-C₄-alkyl, C₁-C₄-alkoxy-C₁-C₄-alkyl, C₁-C₄- haloalkyl, C₁-C₄-haloalkylthio-C₁-C₄-alkyl, C₁-C₄-haloalkoxy-C₁-C₄-alkyl having in each case 1 to 5 halogen atoms, or represents phenyl,
or
A represents the radical of the formula (A2) 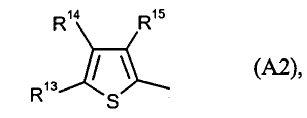 in which
R¹³ and R¹⁴ independently of one another represents hydrogen, halogen, C₁-C₄-alkyl or C₁-C₄-haloalkyl having 1 to 5 halogen atoms and
R¹⁵ represents halogen, cyano or C₁-C₄-alkyl, or C₁-C₄-haloalkyl or C₁-C₄- haloalkoxy having in each case 1 to 5 halogen atoms,
or
A represents the radical of the formula (A3) 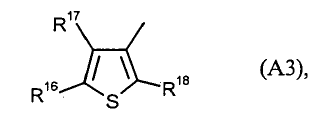 in which
R¹⁶ and R¹⁷ independently of one another represent hydrogen, halogen, C₁-C₄-alkyl or C₁-C₄-haloalkyl having 1 to 5 halogen atoms and
R¹⁸ represents hydrogen, C₁-C₄-alkyl or C₁-C₄-haloalkyl having 1 to 5 halogen atoms,
or
A represents the radical of the formula (A4) 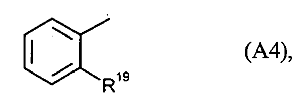 in which
R¹⁹ represents hydrogen, halogen, hydroxyl, cyano, C₁-C₆-alkyl, C₁-C₄-haloalkyl, C₁-C₄-haloalkoxy or C₁-C₄-haloalkylthio having in each case 1 to 5 halogen atoms,
or
A represents the radical of the formula (A5) 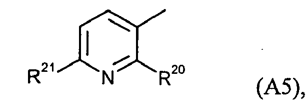 , in which
R²⁰ represents halogen, hydroxyl, cyano, C₁-C₄-alkyl, C₁-C₄-alkoxy, C₁-C₄-alkyl- thio, C₁-C₄-haloalkyl, C₁-C₄-haloalkylthio or C₁-C₄-haloalkoxy having in each case 1 to 5 halogen atoms and
R²¹ represents hydrogen, halogen, cyano, C₁-C₄-alkyl, C₁-C₄-alkoxy, C₁-C₄-alkyl- thio, C₁-C₄-haloalkyl, C₁-C₄-haloalkoxy having in each case 1 to 5 halogen atoms, C₁-C₄-alkylsulphinyl or C₁-C₄-alkylsulphonyl,
or
A represents the radical of the formula (A6) 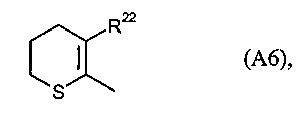 in which
R²² represents C₁-C₄-alkyl or C₁-C₄-haloalkyl having 1 to 5 halogen atoms,
or
A represents the radical of the formula (A7) 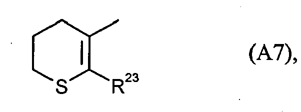 in which
R²³ represents C₁-C₄-alkyl or C₁-C₄-haloalkyl having 1 to 5 halogen atoms,
or
A represents the radical of the formula (A8) 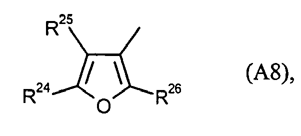 in which
R²⁴ and R²⁵ independently of one another represent hydrogen, halogen, amino, C₁-C₄- alkyl or C₁-C₄-haloalkyl having 1 to 5 halogen atoms and
R²⁶ represents hydrogen, C₁-C₄-alkyl or C₁-C₄-haloalkyl having 1 to 5 halogen atoms,
or
A represents the radical of the formula (A9) 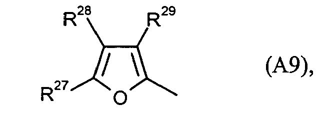 in which
R²⁷ and R²⁸ independently of one another represent hydrogen, halogen, amino, nitro, C₁-C₄-alkyl or C₁-C₄-haloalkyl having 1 to 5 halogen atoms and
R²⁹ represents halogen, C₁-C₄-alkyl or C₁-C₄-haloalkyl having 1 to 5 halogen atoms,
or
A represents the radical of the formula (A10) 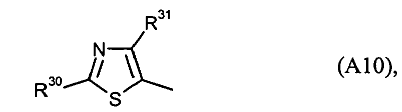 in which
R³⁰ represents hydrogen, halogen, amino, C₁-C₄-alkylamino, di(C₁-C₄-alkyl)- amino, cyano, C₁-C₄-alkyl or C₁-C₄-haloalkyl having 1 to 5 halogen atoms and
R³¹ represents halogen, hydroxyl, C₁-C₄-alkyl, C₁-C₄-alkoxy, C₃-C₆-cycloalkyl, C₁-C₄-haloalkyl or C₁-C₄-haloalkoxy having in each case 1 to 5 halogen atoms,
or
A represents the radical of the formula (A11) 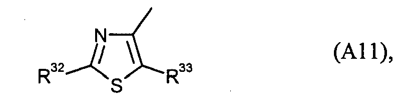 in which
R³² represents hydrogen, halogen, amino, C₁-C₄-alkylamino, di(C₁-C₄-alkyl)- amino, cyano, C₁-C₄-alkyl or C₁-C₄-haloalkyl having 1 to 5 halogen atoms and
R³³ represents halogen, C₁-C₄-alkyl or C₁-C₄-haloalkyl having 1 to 5 halogen atoms,
or
A represents the radical of the formula (A12) 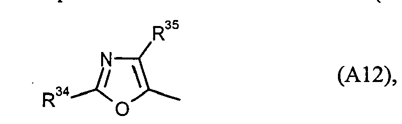 in which
R³⁴ represents hydrogen or C₁-C₄-alkyl and
R³⁵ represents halogen, C₁-C₄-alkyl or C₁-C₄-haloalkyl having 1 to 5 halogen atoms,
or
A represents the radical of the formula (A13) 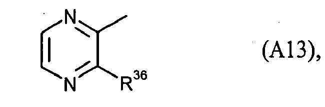 in which
R³⁶ represents hydrogen, halogen, C₁-C₄-alkyl or C₁-C₄-haloalkyl having 1 to 5 halogen atoms,
or
A represents the radical of the formula (A14) 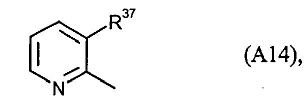 in which
R³⁷ represents halogen, hydroxyl, C₁-C₄-alkyl, C₁-C₄-alkoxy, C₁-C₄-alkylthio, C₁- C₄-haloalkyl, C₁-C₄-haloalkylthio or C₁-C₄-haloalkoxy having in each case 1 to 5 halogen atoms,
or
A represents the radical of the formula (A15) 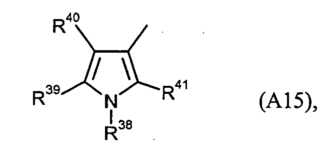 , in which
R³⁸ represents hydrogen, cyano, C₁-C₄-alkyl, C₁-C₄-haloalkyl having 1 to 5 halogen atoms, C₁-C₄-alkoxy-C₁-C₄-alkyl, hydroxy-C₁-C₄-alkyl, C₁-C₄-alkyl- sulphonyl, di(C₁-C₄-alkyl)aminosulphonyl, C₁-C₆-alkylcarbonyl or represents in each case optionally substituted phenylsulphonyl or benzoyl,
R³⁹ represents hydrogen, halogen, C₁-C₄-alkyl or C₁-C₄-haloalkyl having 1 to 5 halogen atoms,
R⁴⁰ represents hydrogen, halogen, cyano, C₁-C₄-alkyl or C₁-C₄-haloalkyl having 1 to 5 halogen atoms,
R⁴¹ represents hydrogen, halogen, C₁-C₄-alkyl or C₁-C₄-haloalkyl having 1 to 5 halogen atoms,
or
A represents the radical of the formula (A16) 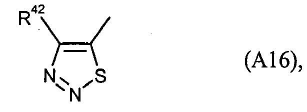 , in which
R⁴² represents halogen, C₁-C₄-alkyl or C₁-C₄-haloalkyl having 1 to 5 halogen atoms,
or
A represents the radical of the formula (A17) 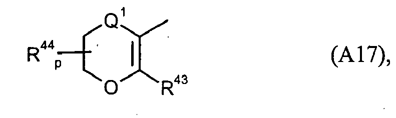 in which
R⁴³ represents C₁-C₄-alkyl or C₁-C₄-haloalkyl having 1 to 5 halogen atoms,
R⁴⁴ represents C₁-C₄-alkyl,
Q¹ represents S (sulphur), O (oxygen), SO, SO₂ or CH₂,
p represents 0, 1 or 2, where the radicals R⁴⁴ are identical or different if p is 2.

2. Silylated carboxamides of the formula (I) according to Claim 1 in which
M represents one of the heterocycles below 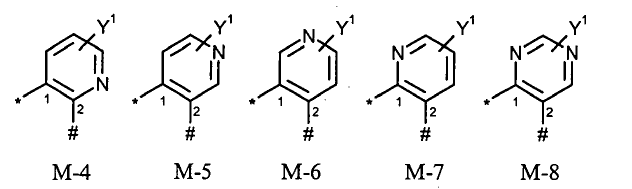 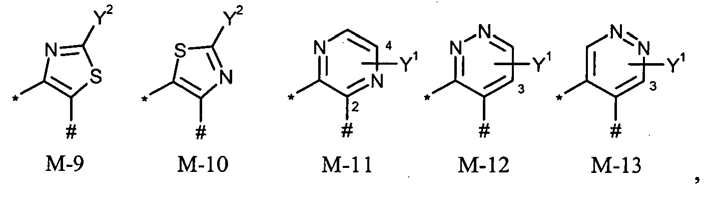 where the bond marked "*" is attached to the amide and the bond marked "#" is attached to the radical Z,
Y¹ represents hydrogen, fluorine, chlorine, methyl, isopropyl, methylthio or trifluoromethyl,
Y² represents hydrogen, methyl, methylthio or trifluoromethyl,
L represents a direct bond or represents optionally halogen-substituted straight-chain or branched C₁-C₆-alkylene, C₂-C₆-alkenylene or C₂-C₆-alkynylene,
R¹ and R² independently of one another represent C₁-C₆-alkyl, C₁-C₆-alkoxy, C₁-C₃-alkoxy- C₁-C₃-alkyl or C₁-C₃-alkylthio-C₁-C₃-alkyl,
R³ represents C₁-C₆-alkyl, C₁-C₆-alkoxy, C₁-C₃-alkoxy-C₁-C₃-alkyl, C₁-C₃-alkylthio- C₁-C₃-alkyl, C₃-C₆-cycloalkyl, phenyl or benzyl,
R represents hydrogen, C₁-C₆-alkyl, C₁-C₄-alkylsulphinyl, C₁-C₄-alkylsulphonyl, C₁-C₃- alkoxy-C₁-C₃-alkyl, C₃-C₆-cycloalkyl; C₁-C₄-haloalkyl, C₁-C₄-haloalkylthio, C₁-C₄- haloalkylsulphinyl, C₁-C₄-haloalkylsulphonyl, halo-C₁-C₃-alkoxy-C₁-C₃-alkyl, C₃₋₈- halocycloalkyl having in each case 1 to 9 fluorine, chlorine and/or bromine atoms; formyl, formyl-C₁-C₃-alkyl, (C₁-C₃-alkyl)carbonyl-C₁-C₃-alkyl, (C₁-C₃-alkoxy)car- bonyl-C₁-C₃-alkyl; halo-(C₁-C₃-alkyl)carbonyl-C₁-C₃-alkyl, halo-(C₁-C₃-alkoxy)- carbonyl-C₁-C₃-alkyl having in each case 1 to 13 fluorine, chlorine and/or bromine atoms;
R⁴ (C₁-C₆-alkyl)carbonyl, (C₁-C₄-alkoxy)carbonyl, (C₁-C₃-alkoxy-C₁-C₃-alkyl)carbonyl, (C₃-C₆-cycloalkyl)carbonyl; (C₁-C₄-haloalkyl)carbonyl, (C₁-C₄-haloalkoxy)carbonyl, (halo-C₁-C₃-alkoxy-C₁-C₃-alkyl)carbonyl, (C₃-C₆-halocycloalkyl)carbonyl having in each case 1 to 9 fluorine, chlorine and/or bromine atoms; or -C(=O)C(=O)R⁴, -CONR⁵R⁶ or -CH₂NR⁷R⁸, represents hydrogen, C₁-C₆-alkyl, C₁-C₄-alkoxy, C₁-C₃-alkoxy-C₁-C₃-alkyl, C₃-C₆- cycloalkyl; C₁-C₄-haloalkyl, C₁-C₄-haloalkoxy, halo-C₁-C₃-alkoxy-C₁-C₃-alkyl, C₃- C₆-halocycloalkyl having in each case 1 to 9 fluorine, chlorine and/or bromine atoms,
R⁵ and R⁶ independently of one another each represent hydrogen, C₁-C₆-alkyl, C₁-C₃-alkoxy- C₁-C₃-alkyl, C₃-C₆-cycloalkyl; C₁-C₄-haloalkyl, halo-C₁-C₃-alkoxy-C₁-C₃-alkyl, C₃- C₆-halocycloalkyl having in each case 1 to 9 fluorine, chlorine and/or bromine atoms,
R⁵ and R⁶ furthermore together with the nitrogen atom to which they are attached form a saturated heterocycle having 5 or 6 ring atoms which is optionally mono- to tetrasubstituted by identical or different substitutents from the group consisting of halogen and C₁-C₄-alkyl, where the heterocycle may contain 1 or 2 further non- adjacent heteroatoms from the group consisting of oxygen, sulphur and NR⁹,
R⁷ and R⁸ independently of one another are hydrogen, C₁-C₆-alkyl, C₃-C₆-cycloalkyl; C₁-C₄- haloalkyl, C₃-C₆-halocycloalkyl having in each case 1 to 9 fluorine, chlorine and/or bromine atoms,
R⁷ and R⁸ furthermore together with the nitrogen atom to which they are attached form a saturated heterocycle having 5 or 6 ring atoms which is optionally mono- to tetrasubstituted by identical or different substituents from the group consisting of halogen and C₁-C₄-alkyl, where the heterocycle may contain 1 or 2 further non- adjacent heteroatoms from the group consisting of oxygen, sulphur and NR⁹,
R⁹ represents hydrogen or C₁-C₄-alkyl,
A represents the radical of the formula (A1) 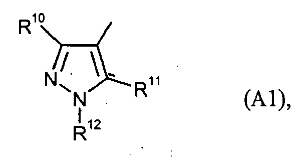 in which
R¹⁰ represents hydrogen, hydroxyl, formyl, cyano, fluorine, chlorine, bromine, iodine, methyl, ethyl, isopropyl, methoxy, ethoxy, methylthio, ethylthio, cyclopropyl, C₁-C₂-haloalkyl, C₁-C₂-haloalkoxy having in each case 1 to 5 fluorine, chlorine and/or bromine atoms, trifluoromethylthio, difluormethylthio, aminocarbonyl, aminocarbonylmethyl or amino- carbonylethyl,
R¹¹ represents hydrogen, fluorine, chlorine, bromine, iodine, methyl, ethyl, methoxy, ethoxy, methylthio, ethylthio, C₁-C₂-haloalkyl having 1 to 5 fluorine, chlorine and/or bromine atoms, and
R¹² represents hydrogen, methyl, ethyl, n-propyl, isopropyl, C₁-C₂-haloalkyl having 1 to 5 fluorine, chlorine and/or bromine atoms, hydroxymethyl, hydroxyethyl, cyclopropyl, cyclopentyl, cyclohexyl or phenyl,
or
A represents the radical of the formula (A2) 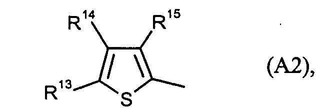 in which
R¹³ and R¹⁴ independently of one another represent hydrogen, fluorine, chlorine, bromine, methyl, ethyl or C₁-C₂-haloalkyl having 1 to 5 fluorine, chlorine and/or bromine atoms and
R¹⁵ represents fluorine, chlorine, bromine, iodine, cyano, methyl, ethyl, C₁-C₂- haloalkyl or C₁-C₂-haloalkoxy having in each case 1 to 5 fluorine, chlorine and/or bromine atoms,
or
A represents the radical of the formula (A3) 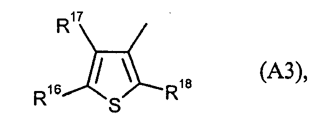 in which
R¹⁶ and R¹⁷ independently of one another represent hydrogen, fluorine, chlorine, bromine, methyl, ethyl or C₁-C₂-haloalkyl having 1 to 5 fluorine, chlorine and/or bromine atoms and
R¹⁸ represents hydrogen, methyl, ethyl or C₁-C₂-haloalkyl having 1 to 5 fluorine, chlorine and/or bromine atoms,
or
A represents the radical of the formula (A4) 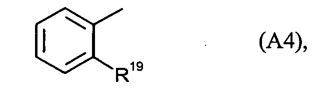 in which
R¹⁹ represents hydrogen, fluorine, chlorine, bromine, iodine, hydroxyl, cyano, C₁-C₄-alkyl, C₁-C₂-haloalkyl, C₁-C₂-haloalkoxy or C₁-C₂-haloalkylthio having in each case 1 to 5 fluorine, chlorine and/or bromine atoms,
or
A represents the radical of the formula (A5) 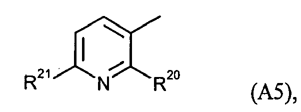 in which
R²⁰ represents fluorine, chlorine, bromine, iodine, hydroxyl, cyano, C₁-C₄-alkyl, methoxy, ethoxy, methylthio, ethylthio, difluoromethylthio, trifluoromethyl- thio, C₁-C₂-haloalkyl or C₁-C₂-haloalkoxy having in each case 1 to 5 fluorine, chlorine and/or bromine atoms and
R²¹ represents hydrogen, fluorine, chlorine, bromine, iodine, cyano, C₁-C₄-alkyl, methoxy, ethoxy, methylthio, ethylthio, C₁-C₂-haloalkyl or C₁-C₂-haloalkoxy having in each case 1 to 5 fluorine, chlorine and/or bromine atoms, C₁-C₂- alkylsulphinyl or C₁-C₂-alkylsulphonyl,
or
A represents the radical of the formula (A8) 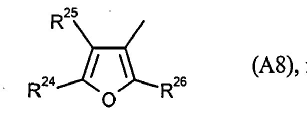 in which
R²⁴ and R²⁵ independently of one another represent hydrogen, fluorine, chlorine, bromine, amino, methyl, ethyl or C₁-C₂-haloalkyl having 1 to 5 fluorine, chlorine and/or bromine atoms and
R²⁶ represents hydrogen, fluorine, chlorine, bromine, iodine, methyl, ethyl or C₁- C₂-haloalkyl having 1 to 5 fluorine, chlorine and/or bromine atoms,
or
A represents the radical of the formula (A9) 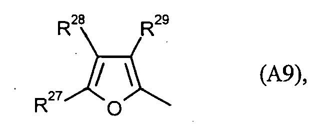 , in which
R²⁷ and R²⁸ independently of one another represent hydrogen, fluorine, chlorine, bromine, amino, nitro, methyl, ethyl or C₁-C₂-haloalkyl having 1 to 5 fluorine, chlorine and/or bromine atoms and
R²⁹ represents fluorine, chlorine, bromine, methyl, ethyl or C₁-C₂-haloalkyl having 1 to 5 fluorine, chlorine and/or bromine atoms,
or
A represents the radical of the formula (A10) 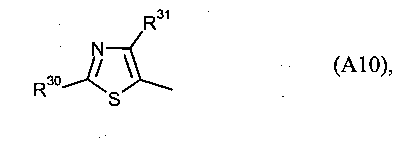 in which
R³⁰ represents hydrogen, fluorine, chlorine, bromine, amino, C₁-C₄-alkylamino, di(C₁-C₄-alkyl)amino, cyano, methyl, ethyl or C₁-C₂-haloalkyl having 1 to 5 fluorine, chlorine and/or bromine atoms and
R³¹ represents fluorine, chlorine, bromine, hydroxyl, methyl, ethyl, methoxy, ethoxy, cyclopropyl, C₁-C₂-haloalkyl or C₁-C₂-haloalkoxy having 1 to 5 fluorine, chlorine and/or bromine atoms,
or
A represents the radical of the formula (A11) 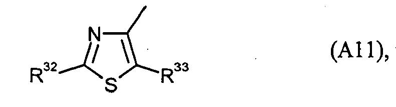 in which
R³² represents hydrogen, fluorine, chlorine, bromine, amino, C₁-C₄-alkylamino, di(C₁-C₄-alkyl)amino, cyano, methyl, ethyl or C₁-C₂-haloalkyl having 1 to 5 fluorine, chlorine and/or bromine atoms and
R³³ represents fluorine, chlorine, bromine, methyl, ethyl or C₁-C₂-haloalkyl having 1 to 5 fluorine, chlorine and/or bromine atoms,
or
A represents the radical of the formula (A12) 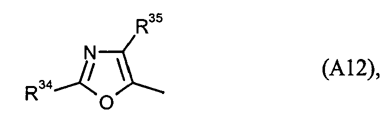 in which
R³⁴ represents hydrogen methyl or ethyl and
R³⁵ represents fluorine, chlorine, bromine, methyl, ethyl, trifluoromethyl or difluoromethyl,
or
A represents the radical of the formula (A13) 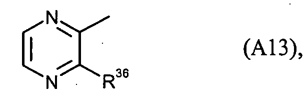 in which
R³⁶ represents hydrogen, fluorine, chlorine, bromine, methyl, ethyl or C₁-C₂- haloalkyl having 1 to 5 fluorine, chlorine and/or bromine atoms,
or
A represents the radical of the formula (A14) 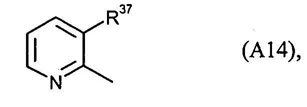 in which
R³⁷ represents fluorine, chlorine, bromine, iodine, hydroxyl, C₁-C₄-alkyl, methoxy, ethoxy, methylthio, ethylthio, difluoromethylthio, trifluoromethylthio, C₁-C₂-haloalkyl or C₁-C₂-haloalkoxy having in each case 1 to 5 fluorine, chlorine and/or bromine atoms,
or
A represents the radical of the formula (A15) 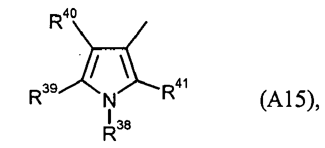 in which
R³⁸ represents hydrogen, methyl, ethyl, C₁-C₂-haloalkyl having 1 to 5 fluorine, chlorine and/or bromine atoms, C₁C₂-alkoxy-C₁-C₂-alkyl, hydroxymethyl, hydroxyethyl, methylsulphonyl or dimethylaminosulphonyl,
R³⁹ represents hydrogen, fluorine, chlorine, bromine, methyl, ethyl or C₁-C₂- haloalkyl having 1 to 5 fluorine, chlorine and/or bromine atoms,
R⁴⁰ represents hydrogen, fluorine, chlorine, bromine, iodine, cyano, methyl, ethyl, isopropyl or C₁-C₂-haloalkyl having 1 to 5 fluorine, chlorine and/or bromine atoms,
R⁴¹ represents hydrogen, fluorine, chlorine, bromine, methyl, ethyl or C₁-C₂- haloalkyl having 1 to 5 fluorine, chlorine and/or bromine atoms,
or
A represents the radical of the formula (A17) 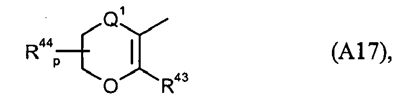 in which
R⁴³ represents methyl, ethyl or C₁-C₂-haloalkyl having 1 to 5 fluorine, chlorine and/or bromine atoms,
R⁴⁴ represents methyl or ethyl,
Q¹ represents S (sulphur), SO₂ or CH₂,
p represents 0 or 1.

3. Process for preparing compounds of the formula (I) according to Claim 1, **characterized in that**
a) carboxylic acid derivatives of the formula (II) 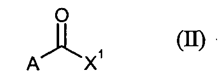 in which
A is as defined in Claim 1 and
X¹ represents halogen or hydroxyl,
are reacted with an amine of the formula (III) 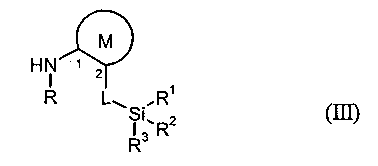 in which M, L, R¹, R², R³ and R are as defined in Claim 1,
if appropriate in the presence of a catalyst, if appropriate in the presence of a condensing agent, if appropriate in the presence of an acid binder and if appropriate in the presence of a diluent,
or
b) silylated carboxamides of the formula (I-a) 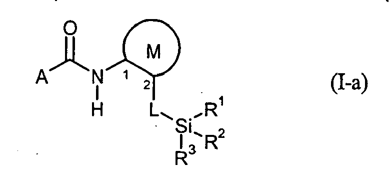 in which M, L, A, R¹, R² and R³ are as defined in Claim 1 are reacted with halides of the formula (IV)
R^{A}-X² (IV)
in which
X² represents chlorine, bromine or iodine,
R^{A} represents C₁-C₈-alkyl, C₁-C₆-alkylsulphinyl, C₁-C₆-alkylsulphonyl, C₁-C₄- alkoxy-C₁-C₄-alkyl, C₃-C₈-cycloalkyl; C₁-C₆-haloalkyl, C₁-C₄-haloalkylthio, C₁-C₄-haloalkylsulphinyl, C₁-C₄-haloalkylsulphonyl, halo-C₁-C₄-alkoxy-C₁- C₄-alkyl, C₃-C₈-halocycloalkyl having in each case 1 to 9 fluorine, chlorine and/or bromine atoms; formyl, formyl-C₁-C₃-alkyl, (C₁-C₃-alkyl)carbonyl-C₁- C₃-alkyl, (C₁-C₃-alkoxy)carbonyl-C₁-C₃-alkyl; halo-(C₁-C₃-alkyl)carbonyl- C₁-C₃-alkyl, halo-(C₁-C₃-alkoxy)carbonyl-Cₗ-C₃-alkyl having in each case 1 to 13 fluorine, chlorine and/or bromine atoms; (C₁-C₈-alkyl)carbonyl, (C₁-C₈-alkoxy)carbonyl, (C₁-C₄-alkoxy-C₁-C₄-alkyl)- carbonyl, (C₃-C₈-cycloalkyl)carbonyl; (C₁-C₆-haloalkyl)carbonyl, (C₁-C₆- haloalkoxy)carbonyl, (halo-C₁-C₄-alkoxy-C₁-C₄-alkyl)carbonyl, (C₃-C₈- halocycloalkyl)carbonyl having in each case 1 to 9 fluorine, chlorine and/or bromine atoms; or -C(=O)C(=O)R⁴, -CONR⁵R⁶ or -CH₂NR⁷R⁸,
where R⁴, R⁵, R⁶, R⁷ and R⁸ are as defmed in Claim 1, in the presence of a base and in the presence of a diluent.

4. Compositions for controlling unwanted microorganisms, **characterized in that** they comprise at least one silylated carboxamide of the formula (I) according to Claim 1, in addition to extenders and/or surfactants.

5. Use of silylated carboxamides of the formula (I) according to Claim 1 for controlling unwanted microorganisms.

6. Method for controlling unwanted microorganisms, **characterized in that** silylated carboxamides of the formula (I) according to Claim 1 are applied to the microorganisms and/or their habitat.

7. Process for preparing compositions for controlling unwanted microorganisms, **characterized in that** silylated carboxamides of the formula (I) according to Claim 1 are mixed with extenders and/or surfactants.

## Revendications

1. Carboxamides silylés de formule (I) 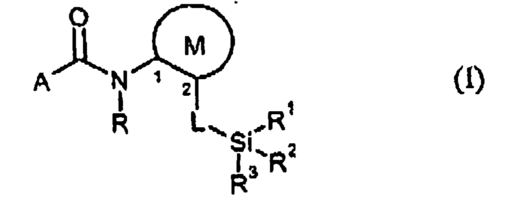 dans laquelle
M représente un noyau pyridine, pyrimidine, pyridazine ou pyrazine chacun substitué une fois par Y¹, ou un noyau thiazole substitué par Y²,
Y¹ représente l'hydrogène, le fluor, le chlore, le brome, un reste méthyle, isopropyle, méthylthio ou trifluorométhyle,
Y² représente l'hydrogène, le fluor, le chlore, le brome, un reste méthyle, méthylthio ou trifluorométhyle,
L représente une liaison directe ou un reste alkylène (alcanediyle), alcénylène (alcènediyle) ou alcynylène (alcynediyle) linéaire ou ramifié, chacun éventuellement substitué,
R¹ et R² représentent, indépendamment l'un de l'autre, l'hydrogène, un reste alkyle en C₁ à C₈, alkoxy en C₁ à C₈, (alkoxy en C₁ à C₉)-(alkyle en C₁ à C₄), (alkylthio en C₁ à C₄)-(alkyle en C₁ à C₄) ou halogénalkyle en C₁ à C₆,
R³ représente l'hydrogène_{,} un reste alkyle en C₁ à C₈, alkoxy en C₁ à C₈, (alkoxy en C₁ à C₄)-(alkyle en C₁ à C₄), (alkylthio en C₁ à C₄)-(alkyle en C₁ à C₉), alcényle en C₂ à C₈, alcynyle en C₂ à C₈, halogénalkyle en C₁ à C₆, halogénalcényle en C₂ à C₆, halogénalcynyle en C₂ à C₆, cycloalkyle en C₃ à C₆ ou un groupe phényle ou phénylalkyle, chacun éventuellement substitué,
R représente l'hydrogène, un reste alkyle en C₁ à C₈, alkylsulfinyle en C₁ à C₆, alkylsulfonyle en C₁ à C₆, (alkoxy en C₁ à C₉)-(alkyle en C₁ à C₉), cycloalkyle en C₃ à C₈ ;halogénalkyle en C₁ à C₆, halogénalkylthio en C₁ à C₄, halogénalkylsulfinyle en C₁ à C₄, halogénalkylsulfonyle en C₁ à C₄, halogéno-(alkoxy en C₁ à C₄)-(alkyle en C₁ à C₄), halogénocycloalkyle en C₃ à C₈ avec à chaque fois 1 à 9 atomes de fluor, de chlore et/ou de brome, formyle, formyl-(alkyle en C₁ à C₃), (alkyle en C₁ à C₃) carbonyl-(alkyle en C₁ à C₃), (alkoxy en C₁ à C₃)carbonyl-(alkyleen C₁ à C₃) ; halogéno-(alkyle en C₁ à C₃)carbonyl-(alkyle en C₁ à C₃), halogéno-(alkoxy en C₁ à C₃)carbonyl-(alkyle en C₁ à C₃) avec chacun 1 à 13 atomes de fluor, de chlore et/ou de brome ; (alkyle en C₁ à C₈) carbonyle, (alkoxy en C₁ à C₈)carbonyle, (alkoxy en C₁ à C₄)-(alkyle en C₁ à C₄)carbonyle, (cycloalkyle en C₃ à C₈)carbonyle; (halogénalkyle en C₁ à C₆)carbonyle, (halogénalkoxy en C₁ à C₆)carbonyle, halogéno-(alkoxy en C₁ à C₄)-(alkyle en C₁ à C₄)carbonyle, (halogénocycloalkyle en C₃ à C₈)carbonyle avec chacun 1 à 9 atomes de fluor, de chlore et/ou de brome ; ou un groupe -C(=O)C(=O)R⁴, -CONR⁵R⁶ ou -CH₂NR⁷R⁸,
R⁴ représente l'hydrogène, un reste alkyle en C₁ à C₈, alkoxy en C₁ à C₈, (alkoxy en C₁ à C₄)-(alkyle en C₁ à C₄), cycloalkyle en C₃ à C₈ ; un reste halogénalkyle en C₁ à C₆, halogénalkoxy en C₁ à C₆, halogéno-(alkoxy en C₁ en C₄)-(alkyle en C₁ à C₄), halogénocycloalkyle en C₃ à C₈) avec à chaque fois 1 à 9 atomes de fluor, de chlore et/ou de brome,
R⁵ et R⁶ représentent chacun indépendamment l'un de l'autre l'hydrogène, un reste alkyle en C₁ à C₈, (alkoxy en C₁ à C₄)-(alkyle en C₁ à C₄), cycloalkyle en C₃ à C₈ ; halogénalkyle en C₁ à C₈, halogéno-(alkoxy en C₁ en C₄)-(alkyle en C₁ à C₄), halogénocycloalkyle en C₃ à C₈, avec à chaque fois 1 à 9 atomes de fluor, de chlore et/ou de brome,
R⁵ et R⁶ forment en outre conjointement avec l'atome d'azote auquel ils sont liés un hétérocycle saturé à noyau de 5 à 8 atomes, éventuellement substitué une ou plusieurs fois identiques ou différentes par un halogène ou un radical alkyle en C₁ à C₄, l'hétérocycle pouvant contenir un ou deux autres hétéroatomes non contigus de la série oxygène, soufre ou NR⁹
R⁷ et R⁸ représentent indépendamment l'un de l'autre l'hydrogène, un reste alkyle en C₁ à C₈, cycloalkyle en C₃ à C₈ ; halogénalkyle en C₁ à C₈, halogéno- cycloalkyle en C₃ à C₈ avec à chaque fois 1 à 9 atomes de fluor, de chlore et/ou de brome,
R⁷ et R⁸ forment en outre, conjointement avec l'atome d'azote auquel ils sont liés, un hétérocycle saturé à noyau de 5 à 8 atomes, éventuellement substitué une ou plusieurs fois identiques ou différentes par un halogène ou un radical alkyle en C₁ à C₄, l'hétérocycle pouvant contenir un ou deux autres hétéroatomes non contigus de la série oxygène, soufre ou NR⁹,
R⁹ représente l'hydrogène ou un reste alkyle en C₁ à C₆,
A représente le reste de formule (A1) 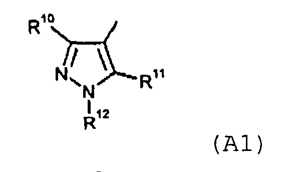 dans laquelle
R¹⁰ représente l'hydrogène, une reste hydroxy, formyle, cyano, halogéno, nitro, alkyle en C₁ à C₄, alkoxy en C₁ à C₄, alkylthio en C₁ à C₄, cycloalkyle en C₃ à C₆ ; halogénalkyle en C₁ à C₄, halogénalkoxy en C₁ à C₄ ou halogénalkylthio en C₁ à C₄ avec chacun 1 à 5 atomes d'halogène, amino- carbonyle ou aminocarbonyl-(alkyle en C₁ à C₄),
R¹¹ représente l'hydrogène, un halogène, un reste cyano, alkyle en C₁ à C₄, alkoxy en C₁ à C₄, alkylthio en C₁ à C₄ ; halogénalkyle en C₁ à C₄ ou halogénalkylthio en C₁ à C₄ avec chacun 1 à 5 atomes d'halogène,
R¹² représente l'hydrogène, un reste alkyle en C₁ à C₄, hydroxyalkyle en C₁ à C₄, alcényle en C₂ à C₆, cycloalkyle en C₃ à C₆, (alkylthio en C₁ à C₄)-(alkyle en C₁ à C₄), (alkoxy en C₁ à C₄)-(alkyle en C₁ à C₄), halogénalkyle en C₁ à C₄, (halogénalkylthio en C₁ à C₉)-(alkyle en C₁ à C₄), (halogénalkoxy en C₁ à C₄)-(alkyle en C₁ à C₄) avec chacun 1 à 5 atomes d'halogène, ou un reste phényle,
ou bien
A représente le reste de formule (A2) 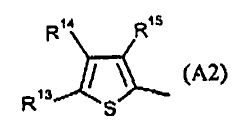 dans laquelle,
R¹³ et R¹⁹ représentent, indépendamment l'un de l'autre, l'hydrogène, un halogène, un reste alkyle en C₁ à C₄ ou halogénalkyle en C₁ à C₄ avec 1 à 5 atomes d'halogène,
R¹⁵ représente un halogène, un reste cyano ou alkyle en C₁ à C₄ ou un reste halogénalkyle en C₁ à C₄ ou halogénalkoxy en C₁ à C₄ avec chacun 1 à 5 atomes d'halogène,
ou bien
A représente le reste de formule (A3) 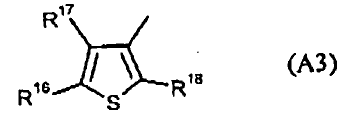 dans laquelle
R¹⁶ et R¹⁷ représentent, indépendamment l'un de l'autre, l'hydrogène, un halogène, un reste alkyle en C₁ à C₄ ou halogénalkyle en C₁ à C₄ avec 1 à 5 atomes d'halogène et R¹⁸ représente l'hydrogène, un reste alkyle en C₁ à C₄ ou halogénalkyle en C₁ à C₄ avec 1 à 5 atomes d'halogène,
ou bien
A représente le reste de formule (A4) 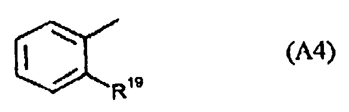 dans laquelle
R¹⁹ représente l'hydrogène, un halogène, un reste hydroxy, cyano, alkyle en C₁ à C₆, halogénalkyle en C₁ à C₄, halogénalkoxy en C₁ à C₄ ou halogénalkylthio en C₁ à C₄ avec à chaque fois 1 à 5 atomes d'halogène,
ou bien
A représente le reste de formule (A5) 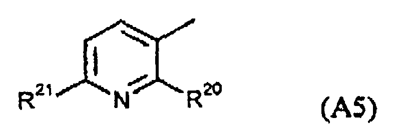 dans laquelle
R²⁰ représente un halogène, un reste hydroxy, cyano, alkyle en C₁ à C₄, alkoxy en C₁ à C₉, alkylthio en C₁ à C₉, halogénalkyle en C₁ à C₄, halogénalkylthio en C₁ à C₄ ou halogénalkoxy en C₁ à C₄ avec à chaque fois 1 à 5 atomes d'halogène, et
R²¹ représente l'hydrogène, un halogène, un reste cyano, alkyle en C₁ à C₄, alkoxy en C₁ à C₄, alkylthio C₁ à C₉, halogénalkyle C₁ à C₄, halogénalkoxy C₁ à C₄ avec à chaque fois 1 à 5 atomes d'halogène, alkylsulfinyle en C₁ à C₄ ou alkylsulfonyle en C₁ à C₄,
ou bien
A représente le reste de formule (A6) 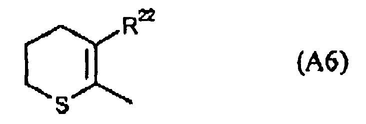 dans laquelle
R²² représente un reste alkyle en C₁ à C₄ ou halogénalkyle en C₁ à C₄ avec 1 à 5 atomes d'halogène
ou bien
A représente le reste de formule (A7) 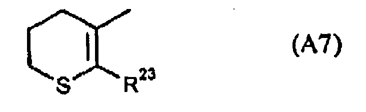 dans laquelle
R²³ représente un reste alkyle en C₁ à C₄ ou halogénalkyle en C₁ à C₄ avec 1 à 5 atomes d'halogène
ou bien
A représente le reste de formule (A8) 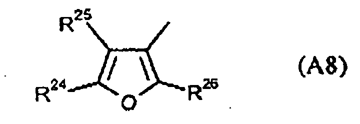 dans laquelle
R²⁴ et R²⁵ représentent, indépendamment l'un de l'autre, l'hydrogène, un halogène, un reste amino, alkyle en C₁ à C₄ ou halogénalkyle en C₁ à C₉ avec 1 à 5 atomes d'halogène et
R²⁶ représente l'hydrogène, un reste alkyle en C₁ à C₄ ou halogénalkyle en C₁ à C₄ avec 1 à 5 atomes d'halogène,
ou bien
A représente le reste de formule (A9) 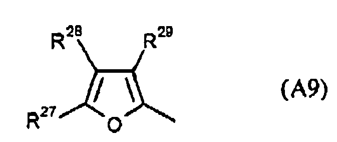 dans laquelle
R²⁷ et R²⁸ représentent, indépendamment l'un de l'autre, l'hydrogène, un halogène, un reste amino, nitro, alkyle en C₁ à C₉ ou halogénalkyle en C₁ à C₄ avec 1 à 5 atomes d'halogène, et
R²⁹ représente un halogène, un reste alkyle en C₁ à C₄ ou halogénalkyle en C₁ à C₄ avec 1 à 5 atomes d'halogène,
ou bien
A représente le reste de formule (A10) 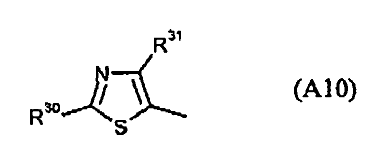 dans laquelle
R³⁰ représente l'hydrogène, un halogène, un reste amino, alkylamino en C₁ à C₄, di(alkyle en C₁ à C₄)amino, cyano, alkyle en C₁ à C₄ ou halogén- alkyle en C₁ à C₄ avec 1 à 5 atomes d'halogène
et
R³¹ représente l'hydrogène, un reste hydroxy, alkyle en C₁ à C₄, alkoxy en C₁ à C₄, cycloalkyle en C₃ à C₆, halogénalkyle en C₁ à C₄ ou halogénalkoxy en C₁ à C₄ avec à chaque fois 1 à 5 atomes d'halogène,
ou bien
A représente le reste de formule (A11) 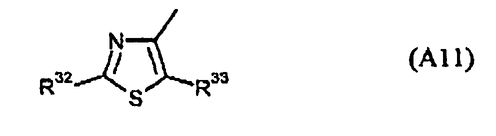 dans laquelle
R³² représente l'hydrogène, un halogène, un reste amino, alkylamino en C₁ à C₄, di(alkyle en C₁ à C₄)amino, cyano, alkyle en C₁ à C₄ ou halogén- alkyle en C₁ à C₄ avec 1 à 5 atomes d'halogène
et
R³³ représente un halogène, un reste alkyle en C₁ à C₄ ou halogénalkyle en C₁ à C₉ avec 1 à 5 atomes d'halogène,
ou bien
A représente le reste de formule (A12) 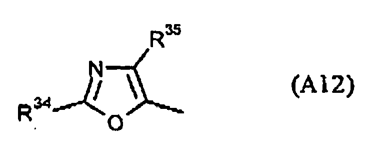 dans laquelle
R³⁴ représente l'hydrogène ou un reste alkyle en C₁ à C₄
et
R³⁵ représente un halogène, un reste alkyle en C₁ à C₄ ou halogénalkyle en C₁ à C₄ avec 1 à 5 atomes d'halogène,
ou bien
A représente le reste de formule (A13) 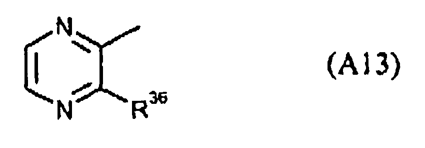 dans laquelle
R³⁶ représente l'hydrogène, l'halogène, un reste alkyle en C₁ à C₄ ou halogénalkyle en C₁ à C₄ avec 1 à 5 atomes d'halogène,
ou bien
A représente le reste de formule (A14) 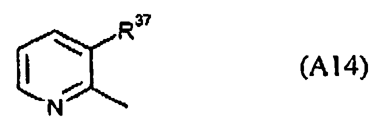 dans laquelle
R³⁷ représente un halogène, un reste hydroxy, alkyle en C₁ à C₄, alkoxy en C₁ à C₄, alkylthio en C₁ à C₄, halogénalkyle en C₁ à C₄, halogénalkylthio en C₁ à C₄ ou halogénalkoxy en C₁ à C₄ avec à chaque fois 1 à 5 atomes d'halogène,
ou bien
A représente le reste de formule (A15) 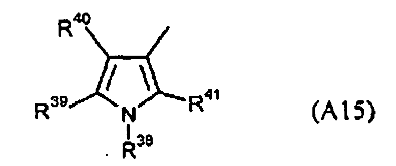 dans laquelle
R³⁸ représente l'hydrogène, un reste cyano, alkyle en C₁ à C₄, halogénalkyle en C₁ à C₄ avec 1 à 5 atomes d'halogène, (alkoxy en C₁ à C₄)-(alkyle en C₁ à C₉), hydroxyalkyle en C₁ à C₄, alkylsulfonyle en C₁ à C₄, di(alkyle en C₁ à C₉)aminosulfonyle, (alkyle en C₁ à C₆)carbonyle ou un reste phénylsulfonyle ou benzoyle, chacun éventuellement substitué,
R³⁹ représente l'hydrogène, un halogène, un reste alkyle en C₁ à C₄ ou halogénalkyle en C₁ à C₄ avec 1 à 5 atomes d'halogène,
R⁴⁰ représente l'hydrogène, un halogène, un reste cyano, alkyle en C₁ à C₄ ou halogénalkyle en C₁ à C₄ avec 1 à 5 atomes d'halogène,
R⁴¹ représente l'hydrogène, un halogène, un reste alkyle en C₁ à C₄ ou halogénalkyle en C₁ à C₄ avec 1 à 5 atomes d'halogène,
A ou bien représente le reste de formule (A16) 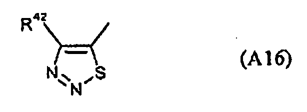 dans laquelle
R⁴² représente un halogène, un reste alkyle en C₁ à C₄ ou halogénalkyle en C₁ à C₄ avec 1 à 5 atomes d'halogène,
ou bien
A représente le reste de formule (A17) 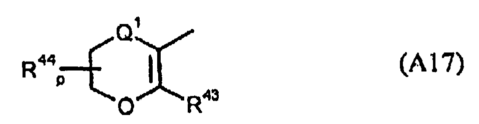 dans laquelle
R⁴³ représente un reste alkyle en C₁ à C₄ ou halogénalkyle en C₁ à C₉ avec 1 à 5 atomes d'halogène,
R⁴⁴ représente un reste alkyle en C₁ à C₄,
Q¹ représente le soufre (S), l'oxygène (O), SO, SO₂ ou CH₂,
p a la valeur 0, 1 ou 2, les restes R⁴⁴ étant identiques ou différents lorsque p est égal à 2.

2. Carboxamides silylés de formule (I) suivant la revendication 1, formule dans laquelle
M représente l'un des hétérocycles suivants 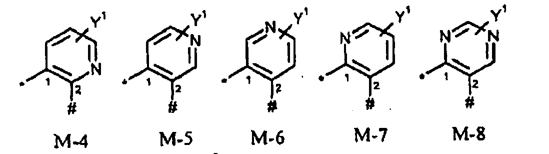 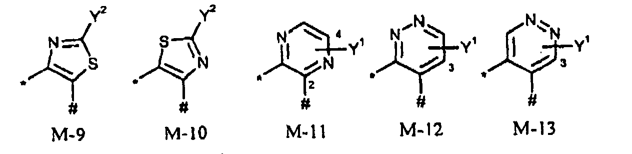 dans lesquels la liaison marquée "^{*}" est raccordée à l'amide, la liaison marquée "#" est raccordée au reste Z,
Y¹ représente l'hydrogène, le fluor, le chlore, un reste méthyle, isopropyle, méthylthio ou trifluorométhyle,
Y² représente l'hydrogène, un reste méthyle, méthylthio ou trifluorométhyle,
L représente une liaison directe ou un reste alkylène en C₁ à C₆, alcénylène en C₂ à C₆ ou alcynylène en C₂ à C₆ linéaire ou ramifié éventuellement substitué par un halogène,
R¹ et R² représentent, indépendamment l'un de l'autre, un reste alkyle en C₁ à C₆, alkoxy en C₁ à C₆, (alkoxy en C₁ à C₃)-(alkyle en C₁ à C₃) ou (alkylthio en C₁ à C₃)- (alkyle en C₁ à C₃),
R³ représente un reste alkyle en C₁ à C₆, alkoxy en C₁ à C₆, (alkoxy en C₁ à C₃)-(alkyle en C₁ à C₃), (alkylthio en C₁ à C₃)-(alkyle en C₁ à C₃), cycloalkyle en C₃ à C₆, phényle ou benzyle,
R représente l'hydrogène, un reste alkyle en C₁ à C₆, alkylsulfinyle en C₁ à C₄, alkylsulfonyle en C₁ à C₄, (alkoxy en C₁ à C₃)-(alkyle en C₁ à C₃), cycloalkyle en C₃ à C₆, halogénalkyle en C₁ à C₄, halogénalkylthio en C₁ à C₄, halogénalkylsulfinyle en C₁ à C₄, halogénalkylsulfonyle en C₁ à C₉, halogéno-(alkoxy en C₁ à C₃)-(alkyle en C₁ à C₃), halogénocycloalkyle en C₃ à C₈ avec à chaque fois 1 à 9 atomes de fluor, de chlore et/ou de brome; formyle, formyl-(alkyle en C₁ à C₃), (alkyle en C₁ à C₃)carbonyl-(alkyle en C₁ à C₃), (alkoxy en C₁ à C₃)carbonyl-(alkyle en C₁ à C₃) ; halogéno-(alkyle en C₁ à C₃)carbonyl-(alkyle en C₁ à C₃), halogéno-(alkoxy en C₁ à C₃)carbonyl-(alkyle en C₁ à C₃) avec dans chaque cas 1 à 13 atomes de fluor, de chlore et/ou de brome; (alkyle en C₁ à C₆) carbonyle, (alkoxy en C₁ à C₉)carbonyle, (alkoxy en C₁ à C₃)- (alkyle en C₁ à C₃)carbonyle ; (cycloalkyle en C₃ à C₆)carbonyle, (halogénalkyle en C₁ à C₉)carbonyle, (halogénalkoxy en C₁ à C₄)carbonyle, halogéno-(alkoxy en C₁ à C₃)-(alkyle en C₁ à C₃) carbonyle, (halogénocycloalkyle en C₃ à C₆)carbonyle avec à chaque fois 1 à 9 atomes de fluor, de chlore et/ou de brome; ou un groupe -C (=O)C(=O)R⁴, -CONR⁵R⁶ ou -CH₂NR⁷R⁸,
R⁴ représente l'hydrogène, un reste alkyle en C₁ à C₈, alkoxy en C₁ à C₄, (alkoxy en C₁ à C₃)-(alkyle en C₁ à C₃), cycloalkyle en C₃ à C₆; un reste halogénalkyle en C₁ à C₄, halogénalkoxy en C₁ à C₉, halogéno-(alkoxy en C₁ en C₃)-(alkyle en C₁ à C₃), halogénocycloalkyle en C₃ à C₆) avec à chaque fois 1 à 9 atomes de fluor, de chlore et/ou de brome,
R⁵ et R⁶ représentent chacun, indépendamment l'un de l'autre, l'hydrogène, un reste alkyle en C₁ à C₆, (alkoxy en C₁ à C₃)-(alkyle en C₁ à C₃), cycloalkyle en C₃ à C₆; halogénalkyle en C₁ à C₄, halogéno-(alkoxy en C₁ en C₃)-(alkyle en C₁ à C₃), halogénocycloalkyle en C₃ à C₆) avec à chaque fois 1 à 9 atomes de fluor, de chlore et/ou de brome,
R⁵ et R⁶ forment en outre, conjointement avec l'atome d'azote auquel ils sont liés, un hétérocycle saturé à noyau de 5 ou 6 atomes, éventuellement substitué une ou plusieurs fois identiques ou différentes par un halogène ou un radical alkyle en C₁ à C₄, l'hétérocycle pouvant contenir un ou deux autres hétéroatomes non contigus de la série oxygène, soufre ou NR⁹,
R⁷ et R⁸ représentent, indépendamment l'un de l'autre, l'hydrogène, un reste alkyle en C₁ à C₆, cycloalkyle en C₃ à C₆ ; halogénalkyle en C₁ à C₄, halogéno- cycloalkyle en C₃ à C₆) avec à chaque fois 1 à 9 atomes de fluor, de chlore et/ou de brome,
R⁷ et R⁸ forment en outre, conjointement avec l'atome d'azote auquel ils sont liés, un hétérocycle saturé à noyau de 5 ou 6 atomes, éventuellement substitué une ou plusieurs fois identiques ou différentes par un halogène ou un radical alkyle en C₁ à C₉, l'hétérocycle pouvant contenir un ou deux autres hétéroatomes non contigus de la série oxygène, soufre ou NR⁹,
R⁹ représente l'hydrogène ou un reste alkyle en C₁ à C₄,
A représente le reste de formule (A1) 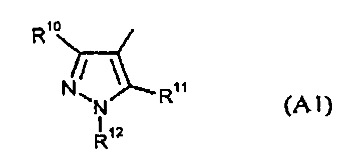 dans laquelle
R¹⁰ représente l'hydrogène, une reste hydroxy, formyle, cyano, fluoro, chloro, bromo, iodo, méthyle, éthyle, isopropyle, méthoxy, éthoxy, méthylthio, éthylthio, cyclopropyle, halogén- alkyle en C₁ ou C₂ ou halogénalkoxy en C₁ ou C₂ avec à chaque fois 1 à 5 atomes de fluor, de chlore et/ou de brome, trifluorométhylthio, difluorométhylthio, aminocarbonyle, aminocar- bonylméthyle ou aminocarbonyléthyle,
R¹¹ représente l'hydrogène, le fluor, le chlore, le brome, l'iode, un reste méthyle, éthyle, méthoxy, éthoxy, méthylthio, éthylthio, halogénalkyle en C₁ ou C₂ avec à chaque fois 1 à 5 atomes de fluor, de chlore et/ou de brome,
R¹² représente l'hydrogène, un reste méthyle, éthyle, n-propyle, isopropyle, halogénalkyle en C₁ ou C₂ avec à chaque fois 1 à 5 atomes de fluor, de chlore et/ou de brome, un reste hydroxy- méthyle, hydroxyéthyle, cyclopropyle, cyclo- pentyle, cyclohexyle ou phényle,
ou bien
A représente le reste de formule (A2) 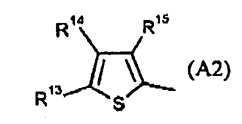 dans laquelle,
R¹³ et R¹⁹ représentent, indépendamment l'un de l'autre, l'hydrogène, le fluor, le chlore, le brome, l'iode, un reste méthyle, éthyle ou un reste halogénalkyle en C₁ ou C₂ avec 1 à 5 atomes de fluor, de chlore et/ou de brome,
et
R¹⁵ représente le fluor, le chlore, le brome, l'iode, un reste méthyle, éthyle ou un reste halogénalkyle en C₁ ou C₂ avec 1 à 5 atomes de fluor, de chlore et/ou de brome,
ou bien
A représente le reste de formule (A3) 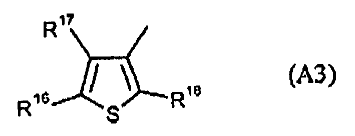 dans laquelle
R¹⁶ et R¹⁷ représentent, indépendamment l'un de l'autre, l'hydrogène, le fluor, le chlore, le brome, un reste méthyle, éthyle ou un reste halogénalkyle en C₁ ou C₂ avec 1 à 5 atomes de fluor, de chlore et/ou de brome, et
R¹⁸ représente l'hydrogène, un reste méthyle, éthyle ou halogénalkyle en C₁ ou C₂ avec 1 à 5 atomes de fluor, de chlore et/ou de brome,
ou bien
A représente le reste de formule (A4) 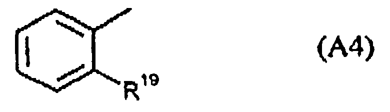 dans laquelle
R¹⁹ représente l'hydrogène, le fluor, le chlore, le brome, l'iode, un reste hydroxy, cyano, alkyle en C₁ à C₉, halogénalkyle en C₁ ou C₂ ou halogénalkylthio en C₁ ou C₂ avec à chaque fois 1 à 5 atomes de fluor, de chlore et/ou de brome,
ou bien
A représente le reste de formule (A5) 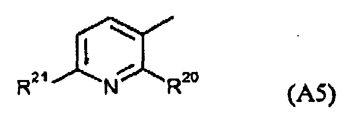 dans laquelle
R²⁰ représente le fluor, le chlore, le brome, l'iode, un reste hydroxy, cyano, alkyle en C₁ à C₄, méthoxy, éthoxy, méthylthio, éthylthio, difluoro- méthylthio, trifluorométhylthio, halogénalkyle en C₁ ou C₂ ou halogénalkoxy en C₁ ou C₂ avec à chaque fois 1 à 5 atomes de fluor, de chlore et/ou de brome et
R²¹ représente l'hydrogène, le fluor, le chlore, le brome, l'iode, un reste cyano, alkyle en C₁ à C₄, un reste méthoxy, éthoxy, méthylthio, éthylthio, halogénalkyle en C₁ ou C₂ ou halogénalkoxy en C₁ ou C₂ avec à chaque fois 1 à 5 atomes de fluor, de chlore et/ou de brome, un reste alkylsulfinyle en C₁ ou C₂ ou alkylsulfonyle en C₁ ou C₂,
ou bien
A représente le reste de formule (A8) 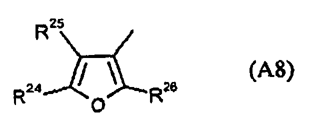 dans laquelle
R²⁴ et R²⁵ représentent, indépendamment l'un de l'autre, l'hydrogène, le fluor, le chlore, le brome, un reste amino, méthyle, éthyle ou un reste halogénalkyle en C₁ ou C₂ avec 1 à 5 atomes
de fluor, de chlore et/ou de brome,
et
R²⁶ représente l'hydrogène, le fluor, le chlore, le brome, l'iode, un reste méthyle, éthyle ou halogénalkyle en C₁ ou C₂ avec 1 à 5 atomes de fluor, de chlore et/ou de brome
ou bien
A représente le reste de formule **(A9)** 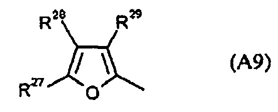 dans laquelle
R²⁷ et R²⁸ représente, indépendamment l'un de l'autre, l'hydrogène, le fluor, le chlore, le brome, un reste amino, nitro, méthyle, éthyle ou halogénalkyle en C₁ ou C₂ avec 1 à 5 atomes de fluor, de chlore et/ou de brome et
R²⁹ représente le fluor, le chlore, le brome, un reste méthyle, éthyle ou halogénalkyle en C₁ ou C₂ avec 1 à 5 atomes de fluor, de chlore et/ou de brome
ou bien
A représente le reste de formule **(A10)** 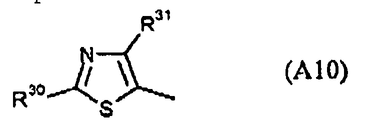 dans laquelle
R³⁰ représente l'hydrogène, le fluor, le chlore, le brome, un reste amino, alkylamino en C₁ à C₄, di(alkyle en C₁ à C₄)amino, cyano, méthyle, éthyle ou halogénalkyle en C₁ ou C₂ avec 1 à 5 atomes de fluor, de chlore et/ou de brome et
R³¹ représente le fluor, le chlore, le brome, un reste hydroxy, méthyle, éthyle, méthoxy, éthoxy, cyclopropyle, halogénalkyle en C₁ ou C₂ ou halogénalkoxy en C₁ ou C₂ avec 1 à 5 atomes de fluor, de chlore et/ou de brome,
ou bien
A représente le reste de formule (A11) 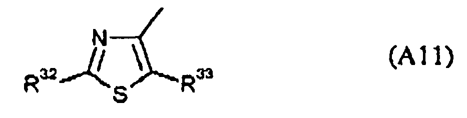 dans laquelle
R³² représente l'hydrogène, le fluor, le chlore, le brome, un reste amino, alkylamino en C₁ à C₄, di(alkyle en C₁ à C₄)amino, cyano, méthyle, éthyle ou halogénalkyle en C₁ ou C₂ avec 1 à 5 atomes de fluor, de chlore et/ou de brome et R³³ représente le fluor, le chlore, le brome, un reste méthyle, éthyle ou halogénalkyle en C₁ ou C₂ avec 1 à 5 atomes de fluor, de chlore et/ou de brome,
ou bien
A représente le reste de formule (A12) 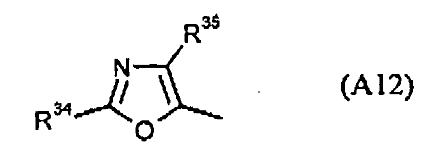 dans laquelle
R³⁴ représente l'hydrogène, un reste méthyle ou éthyle et
R³⁵ représente le fluor, le chlore, le brome, un reste méthyle, éthyle, trifluorométhyle ou difluorométhyle
ou bien
A représente le reste de formule (A13) 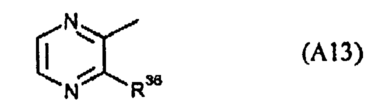 dans laquelle
R³⁶ représente l'hydrogène, le fluor, le chlore, un reste méthyle, éthyle ou halogénalkyle en C₁ ou C₂ avec 1 à 5 atomes de fluor, de chlore et/ou de brome,
ou bien
A représente le reste de formule **(A14)** 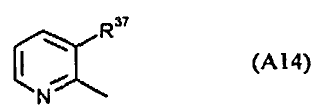 dans laquelle
R³⁷ représente le fluor, le chlore, le brome, l'iode, un reste hydroxy, alkyle en C₁ à C₄, méthoxy, éthoxy, méthylthio, éthylthio, difluorométhyl- thio, trifluorométhylthio, halogénalkyle en C₁ ou C₂ ou halogénalkoxy en C₁ à C₂ avec à chaque fois 1 à 5 atomes de fluor, de chlore et/ou de brome,
ou bien
A représente le reste de formule **(A15)** 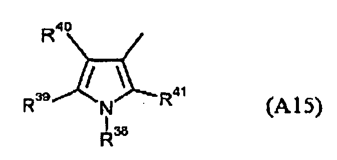 dans laquelle
R³⁸ représente l'hydrogène, un reste méthyle, éthyle, halogénalkyle en C₁ ou C₂ avec 1 à 5 atomes de fluor, de chlore et/ou de brome, (alkoxy en C₁ ou C₂)-(alkyle en C₁ ou C₂), hydroxyméthyle, hydroxyéthyle, méthylsulfonyle ou diméthylamino- sulfonyle,
R³⁹ représente l'hydrogène, le fluor, le chlore, le brome, un reste méthyle, éthyle ou halogénalkyle en C₁ ou C₂ avec 1 à 5 atomes de fluor, de chlore et/ou de brome,
R⁴⁰ représente l'hydrogène, le fluor, le chlore, le brome, l'iode, un reste cyano, méthyle, éthyle, isopropyle ou halogénalkyle en C₁ ou C₂ avec 1 à 5 atomes de fluor, de chlore et/ou de brome,
R⁴¹ représente l'hydrogène, le fluor, le chlore, le brome, un reste méthyle, éthyle ou halogénalkyle en C₁ ou C₂ avec 1 à 5 atomes de fluor, de chlore et/ou de brome,
ou bien
A représente le reste de formule **(A17)** 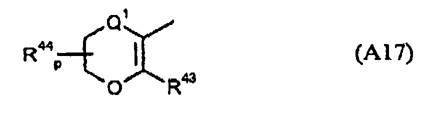 dans laquelle
R⁹³ représente un reste méthyle, éthyle ou halogénalkyle en C₁ ou C₂ avec 1 à 5 atomes de fluor, de chlore et/ou de brome,
R⁴⁴ représente un reste méthyle ou éthyle,
Q¹ représente S (soufre), SO₂ ou CH₂,
p a la valeur 0 ou 1.

3. Procédé de production des composés de formule (I) suivant la revendication 1, **caractérisé en ce que**
a) des dérivés d'acides carboxyliques de formule (II) 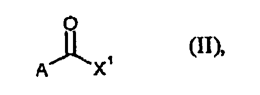 dans laquelle
A a les définitions indiquées dans la revendication 1 et
X¹ représente un halogène ou un reste hydroxy, sont amenés à réagir avec une amine de formule (III) 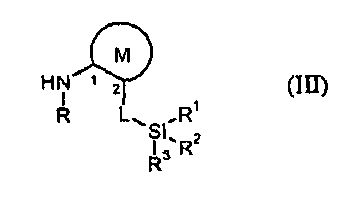 dans laquelle M, L, R¹, R², R³ et R ont les définitions indiquées dans la revendication 1, éventuellement en présence d'un catalyseur, le cas échant en présence d'un agent de condensation, en présence éventuelle d'un accepteur d'acide et, le cas échéant, en présence d'un diluant,
ou bien
b) des carboxamides silylés de formule (I-a) 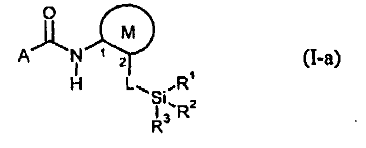 dans laquelle M, L, A, R¹, R² et R³ ont les définitions indiquées dans la revendication 1 sont amenés à réagir avec des halogénures de formule (IV)
R^{A}-X² (IV)
dans laquelle
X² représente le chlore, le brome ou l'iode
R^{A} représente un reste alkyle en C₁ à C₈, alkylsulfinyle en C₁ à C₆, alkylsulfonyle en C₁ à C₆, (alkoxy en C₁ à C₄)-(alkyle en C₁ à C₄), cycloalkyle en C₃ à C₈ ; halogénalkyle en C₁ à C₆), halogénalkylthio en C₁ à C₄, halogénalkyl- sulfinyle en C₁ à C₄, halogénalkylsulfonyle en C₁ à C₄, halogéno-(alkoxy en C₁ à C₄)-(alkyle en C₁ à C₄), halogénocycloalkyle avec à chaque fois 1 à 9 atomes de fluor, de chlore et/ou de brome ; un reste formyle, formyl-(alkyle en C₁ à C₃), (alkyle en C₁ à C₃)carbonyl-(alkyle en C₁ à C₃), (alkoxy en C₁ à C₃)carbonyl-(alkyle en C₁ à C₃) ; halogéno- (alkyle en C₁ à C₃) carbonyl-(alkyle en C₁ à C₃), halogéno-(alkoxy en C₁ à C₃)carbonyl-(alkyle en C₁ à C₃) avec à chaque fois 1 à 13 atomes de fluor, de chlore et/ou de brome ; (alkyle en C₁ à C₈) carbonyle, (alkoxy en C₁ à C₈)carbonyle, (alkoxy en C₁ à C₄)-(alkyle en C₁ à C₄) carbonyle, (cycloalkyle en C₃ à C₈)carbonyle; (halogénalkyle en C₁ à C₆)carbonyle, (halogén- alkoxy en C₁ à C₆)carbonyle, halogéno-(alkoxy en C₁ à C₄)-(alkyle en C₁ à C₄)carbonyle, (halogéno- cycloalkyle en C₃ à C₈)carbonyle avec à chaque fois 1 à 9 atomes de fluor, de chlore et/ou de brome ; ou un groupe -C(=O)C(=O)R ⁴ -CONR⁵R⁶ ou -CH₂NR⁷R⁸,
R⁴, R⁵, R⁶, R⁷ et R⁸ ayant les définitions indiquées dans la revendication 1,
en présence d'une base et en présence d'un diluant.

4. Composition destinée à combattre des micro-organismes indésirables, **caractérisée par** une teneur en au moins un carboxamide silylé de formule (I) suivant la revendication 1, à côté de diluants et/ou de substances tensio-actives.

5. Utilisation de carboxamides silylés de formule (I) suivant la revendication 1 pour combattre des micro-organismes indésirables.

6. Procédé de lutte contre des micro-organismes indésirables, **caractérisé en ce qu'**on épand des carboxamides silylés de formule (I) suivant la revendication 1 sur les micro-organismes et/ou sur leur milieu.

7. Procédé de préparation de compositions destinées à combattre des micro-organismes indésirables, **caractérisé en ce qu'**on mélange des carboxamides silylés de formule (I) suivant la revendication 1 avec des diluants et/ou des substances tensio-actives.
